# EUROPEAN PATENT APPLICATION

(11) **EP 4 432 764 A1**
(43) Date of publication of application: **18.09.2024**
(21) Application number: 22906200.5
(22) Date of filing: 24.11.2022
(51) Int. Cl.: H04W 74/00

(54) **COMMUNICATION METHOD AND COMMUNICATION DEVICE**

(30) Priority: 14.12.2021 CN 202111526126; 25.01.2022 CN 202210090368
(71) Applicant: Huawei Technologies Co., Ltd., Shenzhen, Guangdong 518129 (CN)
(72) Inventor: YANG, Mao, Xi'an, Shaanxi 710072 (CN); LI, Bo, Xi'an, Shaanxi 710072 (CN); GAO, Qingsong, Xi'an, Shaanxi 710072 (CN); LI, Yunbo, Shenzhen, Guangdong 518129 (CN); GAN, Ming, Shenzhen, Guangdong 518129 (CN)
(74) Representative: MERH-IP Matias Erny Reichl Hoffmann Patentanwälte PartG mbB
(86) International application number: PCT/CN2022/133887
(87) International publication number: WO 2023/109449

(57) **Abstract**

This application provides a communication method and apparatus to reduce impact of channel contention of a first STA on a scheduled STA in an OBSS by restricting channel access of the first STAin a BSS in which a first AP is located, so as to increase a success rate of obtaining a channel by the scheduled STA in the OBSS. In the method, the first AP generates a first frame, where the first frame includes r-TWT SP information and first indication information, the first indication information indicates that the r-TWT SP information is r-TWT SP information of an OBSS of a BSS in which the first AP is located, the r-TWT SP information of the OBSS indicates whether the first STA is to terminate a TXOP at a start time indicated by the r-TWT SP information of the OBSS, and the first STA is a STAin the BSS in which the first AP is located; and the first AP sends the first frame. This application is applied to a wireless local area network system that supports 802.11 series protocols, for example, an IEEE 802.11ax next-generation Wi-Fi protocol such as 802.11be, or EHT.

## Description

This application claims priority to Chinese Patent Application No. 202111526126.9, filed with the China National Intellectual Property Administration on December 14, 2021 and entitled "COMMUNICATION METHOD AND COMMUNICATION APPARATUS", which is incorporated herein by reference in its entirety.

This application claims priority to Chinese Patent Application No. 202210090368.6, filed with the China National Intellectual Property Administration on January 25, 2022 and entitled "COMMUNICATION METHOD AND COMMUNICATION APPARATUS", which is incorporated herein by reference in its entirety.

### TECHNICAL FIELD

This application relates to the wireless local area network (Wireless Local Area Network, WLAN) field, and in particular, to a communication method and a communication apparatus.

### BACKGROUND

With development of communication technologies, the WLAN communication standard, using assurance of latency and jitter features as a key technical objective, has gained wide attention in the industry. Restricted target wake time (restricted target wakeup time, r-TWT) is a new mechanism for ensuring low-latency traffic.

Currently, in an implementation process of the r-TWT mechanism, an access point (access point, AP) may send one or more pieces of restricted target wake time service period (restricted target wakeup time service period, r-TWT SP) information by using a management frame. For a station (station, STA) that supports the r-TWT mechanism, a transmission opportunity (transmission opportunity, TXOP) needs to be terminated before a start time indicated by the r-TWT SP information. In addition, a STA that is not scheduled by using the r-TWT SP information needs to be quiet after the start time, but a STA that is scheduled by using the r-TWT SP information may initiate channel contention after the start time. In other words, the r-TWT SP information is used to restrict channel access of the unscheduled STA, to increase a probability of obtaining a channel by the scheduled STA.

However, within a reachable communication range of the AP, some STAs may not be managed by the management frame sent by the AP. Consequently, the scheduled STA may still be affected by contention of those STAs.

Therefore, how to increase a success rate of obtaining a channel by a STA scheduled by using the r-TWT mechanism is an urgent technical problem to be resolved.

### SUMMARY

This application provides a communication method and apparatus to reduce impact of channel contention of a first STA on a scheduled STA in an OBSS by restricting channel access of the first STA in a BSS in which a first AP is located, so as to increase a success rate of obtaining a channel by the scheduled STA in the OBSS.

A first aspect of this application provides a communication method, applied to WLAN communication. The method is performed by an access point (access point, AP), or the method is performed by some components (for example, a processor, a chip, or a system-on-chip) in an AP. In the first aspect and possible implementations of the first aspect, an example in which the method is performed by a first AP is used for description. In the method, the first AP generates a first frame, where the first frame includes restricted target wake time service period r-TWT SP information and first indication information, the first indication information indicates that the r-TWT SP information is r-TWT SP information of an overlapping basic service set (overlapping basic service set, OBSS) of a basic service set (basic service set, BSS) in which the first AP is located, the r-TWT SP information of the OBSS indicates whether a first STA is to terminate a TXOP at a start time indicated by the r-TWT SP information of the OBSS, and the first STA is a STA in the BSS in which the first AP is located; and the first AP sends the first frame.

Based on the foregoing technical solution, the first frame sent by the first AP includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STA in the OBSS, to increase a probability of obtaining a channel by a scheduled STA in the OBSS. In addition, the r-TWT SP information of the OBSS indicates whether the first STA is to terminate the TXOP at the start time indicated by the r-TWT SP information of the OBSS, to restrict channel access of the first STA at the start time. The first STA is a STA in the BSS in which the first AP is located, that is, the first STA and the first AP are located in the same BSS. Therefore, impact of channel contention of the first STA on the scheduled STAin the OBSS is reduced by restricting channel access of the first STAin the BSS in which the first AP is located, so that a success rate of obtaining the channel by the scheduled STA in the OBSS is increased.

In a possible implementation of the first aspect, the r-TWT SP information of the OBSS further indicates whether the first STA is to be quiet during a quiet interval (Quiet Interval) corresponding to the r-TWT SP information of the OBSS.

Optionally, this implementation may be further expressed as "the r-TWT SP information of the OBSS further indicates whether the first STA is to ignore the quiet interval corresponding to the r-TWT SP information of the OBSS".

Based on the foregoing technical solution, the r-TWT SP information of the OBSS indicates whether the first STA is to terminate the TXOP at the start time indicated by the r-TWT SP information of the OBSS, to restrict channel access of the first STA at the start time; and the r-TWT SP information of the OBSS further indicates whether the first STA is to be quiet during the quiet interval corresponding to the r-TWT SP information of the OBSS, to restrict channel access of the first STA during the quiet interval. Therefore, the impact of channel contention of the first STA on the scheduled STAin the OBSS is further reduced, so that the success rate of obtaining the channel by the scheduled STAin the OBSS is increased.

In a possible implementation of the first aspect, before the first AP generates the first frame, the method further includes: the first AP receives a second frame from an AP in the OBSS of the BSS in which the first AP is located, where the second frame includes information related to the r-TWT SP information; and that the first AP generates the first frame includes: the first AP generates the first frame based on the information related to the r-TWT SP information.

Optionally, the information related to the r-TWT SP information and included in the second frame may include a part of the r-TWT SP information included in the first frame.

Optionally, the information related to the r-TWT SP information and included in the second frame may include an entirety of the r-TWT SP information included in the first frame.

Based on the foregoing technical solution, the first AP may generate the first frame based on the information related to the r-TWT SP information and included in the second frame from the AP in the OBSS of the BSS in which the first AP is located, where the information related to the r-TWT SP information and included in the second frame may indicate the start time, duration, or other information, so that the first AP generates the first frame based on the information related to the r-TWT SP information.

Optionally, the first AP may further obtain the second frame in another manner. For example, the first AP receives the second frame from an access controller (access controller, AC), where the AC may be a controller of the first AP and the AP in the OBSS. For another example, the first AP generates the second frame and sends the second frame to the AP in the OBSS, where the first AP may be a controller of the AP in the OBSS.

In a possible implementation of the first aspect, the method further includes: the first AP sends a sixth frame, where the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject (reject) TWT".

Based on the foregoing technical solution, after the first AP sends the first frame that indicates whether the first STA is to terminate the TXOP at the start time indicated by the r-TWT SP information of the OBSS, the first AP may further send the sixth frame, where the value indication of the TWT setup command field included in the first TWT element in the sixth frame is "reject TWT", indicating that the first STA is to reject an r-TWT SP indicated by the r-TWT SP information in the first TWT element, that is, indicating that the first STA does not need to terminate the TXOP at the start time indicated by the r-TWT SP information in the first TWT element. Because the start time indicated by the r-TWT SP information in the first TWT element is the same as the start time indicated by the r-TWT SP information in the first frame, the first AP indicates, by using the sixth frame, the first STA to reject an r-TWT SP indicated by the r-TWT SP information carried in the first frame. Therefore, in addition to using the first frame to support the first AP in indicating the r-TWT SP indicated by the r-TWT SP information of the OBSS, the sixth frame may also be used to support the first AP in rejecting the r-TWT SP indicated by the r-TWT SP information of the OBSS.

In a possible implementation of the first aspect, the first TWT element further includes seventh indication information, and the seventh indication information indicates that the r-TWT SP information in the first TWT element is the r-TWT SP information of the OBSS of the BSS in which the first AP is located.

Based on the foregoing technical solution, after the first STA receives the sixth frame, because the seventh indication information included in the first TWT element of the sixth frame indicates that the r-TWT SP information in the first TWT element is the r-TWT SP information of the OBSS of the BSS in which the first AP is located, the first STA determines that the r-TWT SP that needs to be rejected is the r-TWT SP indicated by the r-TWT SP information of the OBSS.

In a possible implementation of the first aspect, the sixth frame further includes a second TWT element, where the second TWT element further includes a TWT setup command field located in a request type subfield of a broadcast TWT information field, and a value indication of the TWT setup command field is "accept (accept) TWT".

It should be understood that parameters (for example, a start time and duration) related to r-TWT SP information in the second TWT element may be the same as or different from parameters related to the r-TWT SP information in the first TWT element. This is not limited herein.

Based on the foregoing technical solution, in addition to the first TWT element, the sixth frame sent by the first AP further includes the second TWT element, and the value indication of the TWT setup command field included in the second TWT element is "accept TWT", which indicates that the first STA needs to accept an r-TWT SP indicated by the r-TWT SP information included in the second TWT. In other words, the r-TWT SP indicated by the r-TWT SP information carried in the first frame is modified based on the first TWT element and the second TWT element carried in the sixth frame. Therefore, in addition to using the first frame to support the first AP in indicating the r-TWT SP indicated by the r-TWT SP information of the OBSS, the sixth frame may also be used to support the first AP in modifying the r-TWT SP indicated by the r-TWT SP information of the OBSS.

In a possible implementation of the first aspect, the second TWT element further includes eighth indication information, and the eighth indication information indicates that the r-TWT SP information in the second TWT element is the r-TWT SP information of the OBSS of the BSS in which the first AP is located.

Based on the foregoing technical solution, after the first STA receives the sixth frame, because the eighth indication information included in the second TWT element of the sixth frame indicates that the r-TWT SP information in the first TWT element is the r-TWT SP information of the OBSS of the BSS in which the first AP is located, the first STA determines that the r-TWT SP that needs to be accepted is the r-TWT SP indicated by the r-TWT SP information of the OBSS.

A second aspect of this application provides a communication method, applied to WLAN communication. The method is performed by a station (station, STA), or the method is performed by some components (for example, a processor, a chip, or a system-on-chip) in a STA. In the first aspect and possible implementations of the first aspect, an example in which the method is performed by a first STA is used for description. In the method, the first STA receives a first frame, where the first frame includes r-TWT SP information and first indication information, the first indication information indicates that the r-TWT SP information is r-TWT SP information of an OBSS of a BSS in which a first AP is located, the r-TWT SP information of the OBSS indicates whether the first STA is to terminate a TXOP at a start time indicated by the r-TWT SP information of the OBSS, and the first STA is a STA in the BSS in which the first AP is located; the first STA determines, based on the first indication information of the OBSS, that the r-TWT SP information is the r-TWT SP information of the OBSS of the BSS in which the first AP is located; and the first STA determines, based on the r-TWT SP information of the OBSS, whether the first STA is to terminate the TXOP at the start time indicated by the r-TWT SP information of the OBSS.

Based on the foregoing technical solution, the first frame received by the first STA includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STA in the OBSS, to increase a probability of obtaining a channel by a scheduled STA in the OBSS. In addition, the first STA determines, based on the r-TWT SP information of the OBSS, whether the first STA is to terminate the TXOP at the start time indicated by the r-TWT SP information, to restrict channel access of the first STA at the start time. The first STA is a STA in the BSS in which the first AP is located, that is, the first STA and the first AP are located in the same BSS. Therefore, impact of channel contention of the first STA on the scheduled STA in the OBSS is reduced by restricting channel access of the first STA in the BSS in which the first AP is located, so that a success rate of obtaining the channel by the scheduled STAin the OBSS is increased.

In a possible implementation of the second aspect, the method further includes: the first STA determines, based on the r-TWT SP information of the OBSS, whether to be quiet during a quiet interval corresponding to the r-TWT SP information of the OBSS.

Optionally, this implementation may be further expressed as "the first STA determines, based on the r-TWT SP information of the OBSS, whether to ignore the quiet interval corresponding to the r-TWT SP information of the OBSS".

Based on the foregoing technical solution, the first STA determines, based on the r-TWT SP information of the OBSS, whether the first STA is to terminate the TXOP at the start time indicated by the r-TWT SP information, to restrict channel access of the first STA at the start time; and the first STA determines, based on the r-TWT SP information of the OBSS, whether to be quiet during the quiet interval corresponding to the r-TWT SP information of the OBSS, to restrict channel access of the first STA during the quiet interval. Therefore, the impact of channel contention of the first STA on the scheduled STAin the OBSS is further reduced, so that the success rate of obtaining the channel by the scheduled STA in the OBSS is increased.

In a possible implementation of the second aspect, the method further includes: the first STA receives a sixth frame, where the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject TWT"; and the first STA determines, based on a value of the TWT setup command field in the first TWT element, that the first STA does not need to terminate the transmission opportunity TXOP at the start time indicated by the r-TWT SP information in the first frame.

Based on the foregoing technical solution, after the first STA receives the first frame that indicates whether the first STA is to terminate the TXOP at the start time indicated by the r-TWT SP information of the OBSS, the first STA may further receive the sixth frame, where the value indication of the TWT setup command field included in the first TWT element in the sixth frame is "reject TWT", indicating that the first STA is to reject an r-TWT SP indicated by the r-TWT SP information in the first TWT element, that is, indicating that the first STA does not need to terminate the TXOP at the start time indicated by the r-TWT SP information in the first TWT element. Because the start time indicated by the r-TWT SP information in the first TWT element is the same as the start time indicated by the r-TWT SP information in the first frame, the first AP indicates, by using the sixth frame, the first STA to reject an r-TWT SP indicated by the r-TWT SP information carried in the first frame. Therefore, in addition to using the first frame to support the first AP in indicating the r-TWT SP indicated by the r-TWT SP information of the OBSS, the sixth frame may also be used to support the first AP in rejecting the r-TWT SP indicated by the r-TWT SP information of the OBSS.

In a possible implementation of the second aspect, the first TWT element further includes seventh indication information, and the seventh indication information indicates that the r-TWT SP information in the first TWT element is the r-TWT SP information of the OBSS of the BSS in which the first AP is located.

Based on the foregoing technical solution, after the first STA receives the sixth frame, because the seventh indication information included in the first TWT element of the sixth frame indicates that the r-TWT SP information in the first TWT element is the r-TWT SP information of the OBSS of the BSS in which the first AP is located, the first STA determines that the r-TWT SP that needs to be rejected is the r-TWT SP indicated by the r-TWT SP information of the OBSS.

In a possible implementation of the second aspect, the sixth frame further includes a second TWT element, and a start time indicated by r-TWT SP information in the second TWT element is different from the start time indicated by the r-TWT SP information in the first frame, where the second TWT element further includes a TWT setup command field located in a request type subfield of a broadcast TWT information field, and a value indication of the TWT setup command field is "accept TWT"; and the first STA determines, based on a value of the TWT setup command field in the second TWT element, whether to terminate the transmission opportunity TXOP at the start time indicated by the r-TWT SP information in the first frame.

Based on the foregoing technical solution, in addition to the first TWT element, the sixth frame received by the first STA further includes the second TWT element, and the value indication of the TWT setup command field included in the second TWT element is "accept TWT", which indicates that the first STA needs to accept an r-TWT SP indicated by the r-TWT SP information included in the second TWT. In other words, the r-TWT SP indicated by the r-TWT SP information carried in the first frame is modified based on the first TWT element and the second TWT element carried in the sixth frame. Therefore, in addition to using the first frame to support the first AP in indicating the r-TWT SP indicated by the r-TWT SP information of the OBSS, the sixth frame may also be used to support the first AP in modifying the r-TWT SP indicated by the r-TWT SP information of the OBSS.

In a possible implementation of the second aspect, the second TWT element further includes eighth indication information, and the eighth indication information indicates that the r-TWT SP information in the second TWT element is the r-TWT SP information of the OBSS of the BSS in which the first AP is located.

Based on the foregoing technical solution, after the first STA receives the sixth frame, because the eighth indication information included in the second TWT element of the sixth frame indicates that the r-TWT SP information in the first TWT element is the r-TWT SP information of the OBSS of the BSS in which the first AP is located, the first STA determines that the r-TWT SP that needs to be accepted is the r-TWT SP indicated by the r-TWT SP information of the OBSS.

A third aspect of this application provides a communication apparatus, applied to WLAN communication. The apparatus is an AP, or the apparatus is some components (for example, a processor, a chip, or a system-on-chip) in an AP. In the third aspect and possible implementations of the third aspect, an example in which the apparatus is a first AP is used for description. The apparatus includes a processing unit and a transceiver unit. The processing unit is configured to generate a first frame, where the first frame includes restricted target wake time service period r-TWT SP information and first indication information, the first indication information indicates that the r-TWT SP information is r-TWT SP information of an overlapping basic service set OBSS of a BSS in which the first AP is located, the r-TWT SP information of the OBSS indicates whether a first station STA is to terminate a transmission opportunity TXOP at a start time indicated by the r-TWT SP information of the OBSS, and the first STA is a STAin the BSS in which the first AP is located. The transceiver unit is configured to send the first frame.

Based on the foregoing technical solution, the first frame sent by the transceiver unit includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STA in the OBSS, to increase a probability of obtaining a channel by a scheduled STA in the OBSS. In addition, the r-TWT SP information of the OBSS indicates whether the first STA is to terminate the TXOP at the start time indicated by the r-TWT SP information of the OBSS, to restrict channel access of the first STA at the start time. The first STA is a STA in the BSS in which the first AP is located, that is, the first STA and the first AP are located in the same BSS. Therefore, impact of channel contention of the first STA on the scheduled STA in the OBSS is reduced by restricting channel access of the first STA in the BSS in which the first AP is located, so that a success rate of obtaining the channel by the scheduled STA in the OBSS is increased.

In a possible implementation of the third aspect, the r-TWT SP information of the OBSS further indicates whether the first STA is to be quiet during a quiet interval corresponding to the r-TWT SP information of the OBSS.

In a possible implementation of the third aspect, the transceiver unit is further configured to receive a second frame from an AP in the OBSS of the BSS in which the first AP is located, where the second frame includes information related to the r-TWT SP information; and the processing unit is further configured to generate the first frame based on the information related to the r-TWT SP information.

In a possible implementation of the third aspect, the transceiver unit is further configured to send a sixth frame, where the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject TWT".

In a possible implementation of the third aspect, the first TWT element further includes seventh indication information, and the seventh indication information indicates that the r-TWT SP information in the first TWT element is the r-TWT SP information of the OBSS of the BSS in which the first AP is located.

In a possible implementation of the third aspect, the sixth frame further includes a second TWT element, and a start time indicated by r-TWT SP information in the second TWT element is different from the start time indicated by the r-TWT SP information in the first frame, where the second TWT element further includes a TWT setup command field located in a request type subfield of a broadcast TWT information field, and a value indication of the TWT setup command field is "accept TWT".

In a possible implementation of the third aspect, the second TWT element further includes eighth indication information, and the eighth indication information indicates that the r-TWT SP information in the second TWT element is the r-TWT SP information of the OBSS of the BSS in which the first AP is located.

A fourth aspect of this application provides a communication apparatus, applied to WLAN communication. The apparatus is a STA, or the apparatus is some components (for example, a processor, a chip, or a system-on-chip) in a STA. In the fourth aspect and possible implementations of the fourth aspect, an example in which the apparatus is a first STA is used for description. The apparatus includes a processing unit and a transceiver unit. The transceiver unit is configured to receive a first frame, where the first frame includes restricted target wake time service period r-TWT SP information and first indication information, the first indication information indicates that the r-TWT SP information is r-TWT SP information of an overlapping basic service set OBSS of a BSS in which a first AP is located, and the first STA is a STA in the BSS in which the first AP is located. The processing unit is configured to determine, based on the first indication information, that the r-TWT SP information is the r-TWT SP information of the OBSS of the BSS in which the first AP is located. The processing unit is further configured to determine, based on the r-TWT SP information of the OBSS, whether the first STA is to terminate a transmission opportunity TXOP at a start time indicated by the r-TWT SP information.

Based on the foregoing technical solution, the first frame received by the transceiver unit includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STA in the OBSS, to increase a probability of obtaining a channel by a scheduled STA in the OBSS. In addition, the processing unit determines, based on the r-TWT SP information of the OBSS, whether the first STA is to terminate the TXOP at the start time indicated by the r-TWT SP information of the OBSS, to restrict channel access of the first STA at the start time. The first STA is a STA in the BSS in which the first AP is located, that is, the first STA and the first AP are located in the same BSS. Therefore, impact of channel contention of the first STA on the scheduled STA in the OBSS is reduced by restricting channel access of the first STAin the BSS in which the first AP is located, so that a success rate of obtaining the channel by the scheduled STA in the OBSS is increased.

In a possible implementation of the fourth aspect, the processing unit is further configured to determine, based on the r-TWT SP information of the OBSS, whether to be quiet during a quiet interval corresponding to the r-TWT SP information of the OBSS.

In a possible implementation of the fourth aspect, the transceiver unit is further configured to receive a sixth frame, where the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject TWT"; and
the first STA determines, based on a value of the TWT setup command field in the first TWT element, that the first STA does not need to terminate the transmission opportunity TXOP at the start time indicated by the r-TWT SP information in the first frame.

In a possible implementation of the fourth aspect, the first TWT element further includes seventh indication information, and the seventh indication information indicates that the r-TWT SP information in the first TWT element is the r-TWT SP information of the OBSS of the BSS in which the first AP is located.

In a possible implementation of the fourth aspect, the sixth frame further includes a second TWT element, and a start time indicated by r-TWT SP information in the second TWT element is different from the start time indicated by the r-TWT SP information in the first frame, where the second TWT element further includes a TWT setup command field located in a request type subfield of a broadcast TWT information field, and a value indication of the TWT setup command field is "accept TWT"; and
the processing unit is further configured to determine, based on a value of the TWT setup command field in the second TWT element, whether to terminate the transmission opportunity TXOP at the start time indicated by the r-TWT SP information in the first frame.

In a possible implementation of the fourth aspect, the second TWT element further includes eighth indication information, and the eighth indication information indicates that the r-TWT SP information in the second TWT element is the r-TWT SP information of the OBSS of the BSS in which the first AP is located.

In a possible implementation of any one of the first aspect to the fourth aspect, the first frame further includes second indication information, the second indication information includes n fields, and n is greater than or equal to 1; and field locations of the n fields indicate a traffic identifier (traffic identifier, TID), and values of the n fields indicate the first STA to perform, according to one of the following, traffic corresponding to the TID, where the following includes:
the first STA does not need to terminate the TXOP at the start time indicated by the r-TWT SP information of the OBSS and does not need to be quiet during the quiet interval corresponding to the r-TWT SP information of the OBSS; or
the first STA is to terminate the TXOP at the start time indicated by the r-TWT SP information of the OBSS and does not need to be quiet during the quiet interval corresponding to the r-TWT SP information of the OBSS; or
the first STA is to terminate the TXOP at the start time indicated by the r-TWT SP information of the OBSS and is to be quiet during the quiet interval corresponding to the r-TWT SP information of the OBSS.

In any one of embodiments of this application, the first STA does not need to terminate the TXOP at the start time indicated by the r-TWT SP information of the OBSS and does not need to be quiet during the quiet interval corresponding to the r-TWT SP information of the OBSS. This may also be expressed as "the first STA does not need to terminate the TXOP at the start time indicated by the r-TWT SP information of the OBSS and is to ignore the quiet interval corresponding to the r-TWT SP information of the OBSS".

In any one of embodiments of this application, the first STA is to terminate the TXOP at the start time indicated by the r-TWT SP information of the OBSS and does not need to be quiet during the quiet interval corresponding to the r-TWT SP information of the OBSS. This may also be expressed as "the first STA is to terminate the TXOP at the start time indicated by the r-TWT SP information of the OBSS and is to ignore the quiet interval corresponding to the r-TWT SP information of the OBSS".

In any one of embodiments of this application, the first STA is to terminate the TXOP at the start time indicated by the r-TWT SP information of the OBSS and is to be quiet during the quiet interval corresponding to the r-TWT SP information of the OBSS. This may also be expressed as "the first STA is to terminate the TXOP at the start time indicated by the r-TWT SP information of the OBSS and is forbidden to ignore the quiet interval corresponding to the r-TWT SP information of the OBSS".

Based on the foregoing technical solution, the first frame sent by the first AP further includes the second indication information, where the second indication information indicates that channel access of the first STA at the start time indicated by the r-TWT SP information of the OBSS and channel access of the first STA during the quiet interval corresponding to the r-TWT SP information of the OBSS are not necessarily restricted when the traffic corresponding to the TID is performed by the first STA. Therefore, based on an implementation of the second indication information in the second frame, the first STA in the BSS in which the first AP is located does not need to be restricted by the r-TWT SP information of the OBSS in a process of performing traffic corresponding to some TIDs, to ensure that traffic (for example, high-priority traffic or traffic requiring a low latency) of the first STA in the BSS in which the first AP is located is performed.

In a possible implementation of any one of the first aspect to the fourth aspect, the first frame includes a target wake time (target wakeup time, TWT) element, and a broadcast TWT information field in the TWT element includes a broadcast TWT identifier field; and the values of the n fields indicate the first STA in a TWT group indicated by the broadcast TWT identifier field to perform, according to one of the following, the traffic corresponding to the TID.

Based on the foregoing technical solution, the TWT element in the first frame sent by the first AP further includes the broadcast TWT identifier field, and the broadcast TWT identifier field indicates the TWT group. Therefore, based on the broadcast TWT identifier field and the second indication information in the first frame, the STA in the TWT group in the BSS in which the first AP is located does not need to be restricted by the r-TWT SP information of the OBSS in a process of performing traffic corresponding to some TIDs, to ensure that traffic (for example, high-priority traffic or traffic requiring a low latency) of the STA in the TWT group in the BSS in which the first AP is located is performed.

In a possible implementation of any one of the first aspect to the fourth aspect, the TWT element includes an r-TWT traffic information field; and the second indication information is located in an r-TWT downlink TID bitmap subfield and/or an r-TWT uplink TID bitmap subfield in the r-TWT traffic information field.

Optionally, the second indication information is located in another field in the TWT element.

In a possible implementation of any one of the first aspect to the fourth aspect, the first frame includes a target wake time (target wakeup time, TWT) element, and a broadcast TWT information field in the TWT element includes a broadcast TWT identifier field; and the first STA in a TWT group indicated by the broadcast TWT identifier field does not need to terminate the TXOP at the start time indicated by the r-TWT SP information of the OBSS and does not need to be quiet during the quiet interval corresponding to the r-TWT SP information.

Based on the foregoing technical solution, the TWT element in the first frame sent by the first AP further includes the broadcast TWT identifier field, and the broadcast TWT identifier field indicates the TWT group. Therefore, based on the broadcast TWT identifier field in the first frame, the STA in the TWT group in the BSS in which the first AP is located does not need to be restricted by the r-TWT SP information of the OBSS in a process of performing traffic corresponding to some TIDs, to ensure that traffic (for example, high-priority traffic or traffic requiring a low latency) of the STA in the TWT group in the BSS in which the first AP is located is performed.

In a possible implementation of any one of the first aspect to the fourth aspect, the first frame includes a TWT element, and the r-TWT SP information and the first indication information are located in the TWT element.

In a possible implementation of any one of the first aspect to the fourth aspect, the TWT element further includes a TWT setup command field located in a request type subfield of a broadcast TWT information field, and a value indication of the TWT setup command field is "accept TWT".

Based on the foregoing technical solution, after the first STA receives the first frame, because the value indication of the TWT setup command field included in the TWT element of the first frame is "accept TWT", the first STA determines that the first STA needs to accept the r-TWT SP indicated by the r-TWT SP information of the OBSS.

In a possible implementation of any one of the first aspect to the fourth aspect, the TWT element includes a broadcast TWT information field; and the first indication information is located in the broadcast TWT information field.

In a possible implementation of any one of the first aspect to the fourth aspect,
the first indication information is located in a broadcast TWT identifier field in the broadcast TWT information field; or
the first indication information is located in a reserved field in the broadcast TWT information field; or
the first indication information is located in a reserved field in the broadcast TWT information field, and a broadcast TWT identifier field in the broadcast TWT information field is the reserved field.

In a possible implementation of any one of the first aspect to the fourth aspect, the TWT element includes an r-TWT traffic information field; and the first indication information is located in a traffic information control subfield in the r-TWT traffic information field.

In a possible implementation of any one of the first aspect to the fourth aspect, the first frame further includes a quiet element, and a start time of a quiet interval indicated by the quiet element is the same as the start time indicated by the r-TWT SP information of the OBSS.

Optionally, the quiet element is located in another frame different from the first frame. For example, the another frame carrying the quiet element may include a beacon frame, a probe response frame, or a frame specially used to carry the quiet element.

Optionally, one or more frames sent by the first AP may include a plurality of quiet elements, and a start time of a quiet interval indicated by one quiet element (denoted as a first quiet element for ease of description) in the plurality of quiet elements is the same as the start time indicated by the r-TWT SP information of the OBSS.

Optionally, if the first STA supports an r-TWT mechanism, the first STA may determine that the first quiet element is a quiet element corresponding to the r-TWT SP information carried in the first frame. Therefore, the first STA knows that when the first STA is quiet based on the first quiet element, a purpose of being quiet is to reduce the impact of channel contention of the first STA on the scheduled STA in the OBSS.

Optionally, if the first STA does not support the r-TWT mechanism, that is, if the first STA is a conventional (legacy) STA, the first STA may be quiet based on the first quiet element, to reduce the impact of channel contention of the first STA on the scheduled STA in the OBSS.

In a possible implementation of any one of the first aspect to the fourth aspect, the first frame is a beacon frame or a probe response frame.

Optionally, the first frame is a management frame.

A fifth aspect of this application provides a communication method, applied to WLAN communication. The method is performed by an access point (access point, AP), or the method is performed by some components (for example, a processor, a chip, or a system-on-chip) in an AP. In the fifth aspect and possible implementations of the fifth aspect, an example in which the method is performed by a first AP is used for description. In the method, the first AP receives a second frame from a second AP, where the second frame includes restricted target wake time service period r-TWT SP information, and the second AP is located in an overlapping basic service set OBSS of a basic service set BSS in which the first AP is located; and the first AP sends a third frame to a first station STA, where the third frame includes a quiet element, and a start time of a quiet interval indicated by the quiet element is the same as a start time indicated by the r-TWT SP information.

Based on the foregoing technical solution, after the first AP receives, from the second AP, the second frame including the r-TWT SP information, the first AP sends, to the first STA based on the second frame, the third frame including the quiet element, where the start time of the quiet interval indicated by the quiet element is the same as the start time indicated by the r-TWT SP information. The second AP is located in the OBSS of the BSS in which the first AP is located. In other words, the first AP may determine, based on the second frame, that the r-TWT SP information of the OBSS is used to restrict channel access of an unscheduled STA in the OBSS, to increase a probability of obtaining a channel by a scheduled STAin the OBSS. Therefore, after the first AP sends, to the first STA, the third frame including the quiet element, impact of channel contention of the first STA on the scheduled STA in the OBSS is reduced by restricting channel access of the first STAin the BSS in which the first AP is located, so that a success rate of obtaining the channel by the scheduled STA in the OBSS is increased.

A sixth aspect of this application provides a communication method, applied to WLAN communication. The method is performed by a station (station, STA), or the method is performed by some components (for example, a processor, a chip, or a system-on-chip) in a STA. In the sixth aspect and possible implementations of the sixth aspect, an example in which the method is performed by a first STA is used for description. In the method, the first station STA receives a third frame from a first AP, where the third frame includes a quiet element; and the first STA is quiet based on the quiet element at a start time of a quiet interval indicated by the quiet element.

Based on the foregoing technical solution, the first STA receives, from the first AP, the third frame including the quiet element, where the start time of the quiet interval indicated by the quiet element is the same as a start time indicated by r-TWT SP information sent by a second AP. The second AP is located in an OBSS of a BSS in which the first AP is located. Therefore, after the first AP sends, to the first STA, the third frame including the quiet element, impact of channel contention of the first STA on a scheduled STA in the OBSS is reduced by restricting channel access of the first STAin the BSS in which the first AP is located, so that a success rate of obtaining a channel by the scheduled STA in the OBSS is increased.

A seventh aspect of this application provides a communication apparatus, applied to WLAN communication. The apparatus is an AP, or the apparatus is some components (for example, a processor, a chip, or a system-on-chip) in an AP. In the seventh aspect and possible implementations of the seventh aspect, an example in which the apparatus is a first AP is used for description. The apparatus includes a receiving unit and a sending unit. The receiving unit is configured to receive a second frame from a second AP, where the second frame includes restricted target wake time service period r-TWT SP information, and the second AP is located in an overlapping basic service set OBSS of a basic service set BSS in which the first AP is located. The sending unit is configured to send a third frame to a first station STA, where the third frame includes a quiet element, and a start time of a quiet interval indicated by the quiet element is the same as a start time indicated by the r-TWT SP information.

Based on the foregoing technical solution, after the receiving unit receives, from the second AP, the second frame including the r-TWT SP information, the sending unit sends, to the first STA, the third frame including the quiet element, where the start time of the quiet interval indicated by the quiet element is the same as the start time indicated by the r-TWT SP information. The second AP is located in the OBSS of the BSS in which the first AP is located. In other words, the first AP may determine, based on the second frame, that the r-TWT SP information of the OBSS is used to restrict channel access of an unscheduled STA in the OBSS, to increase a probability of obtaining a channel by a scheduled STA in the OBSS. Therefore, after the first AP sends, to the first STA, the third frame including the quiet element, impact of channel contention of the first STA on the scheduled STA in the OBSS is reduced by restricting channel access of the first STA in the BSS in which the first AP is located, so that a success rate of obtaining the channel by the scheduled STA in the OBSS is increased.

An eighth aspect of this application provides a communication apparatus, applied to WLAN communication. The apparatus is a STA, or the apparatus is some components (for example, a processor, a chip, or a system-on-chip) in a STA. In the eighth aspect and possible implementations of the eighth aspect, an example in which the apparatus is a first STA is used for description. The apparatus includes a processing unit and a transceiver unit. The transceiver unit is configured to receive a third frame from a first AP, where the third frame includes a quiet element. The processing unit is configured to be quiet based on the quiet element at a start time of a quiet interval indicated by the quiet element.

Based on the foregoing technical solution, the transceiver unit receives, from the first AP, the third frame including the quiet element, where the start time of the quiet interval indicated by the quiet element is the same as a start time indicated by r-TWT SP information sent by a second AP. The second AP is located in an OBSS of a BSS in which the first AP is located. Therefore, after the first AP sends, to the first STA, the third frame including the quiet element, impact of channel contention of the first STA on a scheduled STA in the OBSS is reduced by restricting channel access of the first STA in the BSS in which the first AP is located, so that a success rate of obtaining a channel by the scheduled STA in the OBSS is increased.

It should be noted that in an implementation process of the fifth aspect or the seventh aspect, the first AP may further perform any one of the possible implementations of the first aspect or the third aspect, with corresponding technical effect achieved. Details are not described herein again. In addition, in an implementation process of the sixth aspect or the eighth aspect, the first STA may further perform any one of the possible implementations of the second aspect or the fourth aspect, with corresponding technical effect achieved. Details are not described herein again.

A ninth aspect of this application provides a communication method, applied to WLAN communication. The method is performed by an access point (access point, AP), or the method is performed by some components (for example, a processor, a chip, or a system-on-chip) in an AP. In the ninth aspect and possible implementations of the ninth aspect, an example in which the method is performed by a second AP is used for description. In the method, the second AP generates a fourth frame, where the fourth frame includes restricted target wake time service period r-TWT SP information and third indication information, the third indication information includes m fields, and m is greater than or equal to 1; and
field locations of the m fields indicate a traffic identifier TID, and values of the m fields indicate a second STA to perform, according to one of the following, traffic corresponding to the TID, where the following includes:
the second STA does not need to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and is to be quiet during a quiet interval corresponding to the r-TWT SP information; and
the second AP sends the fourth frame.

In any one of embodiments of this application, the second STA does not need to terminate the TXOP at the start time indicated by the r-TWT SP information and does not need to be quiet during the quiet interval corresponding to the r-TWT SP information. This may also be expressed as "the second STA does not need to terminate the TXOP at the start time indicated by the r-TWT SP information and is to ignore the quiet interval corresponding to the r-TWT SP information".

In any one of embodiments of this application, the second STA is to terminate the TXOP at the start time indicated by the r-TWT SP information and does not need to be quiet during the quiet interval corresponding to the r-TWT SP information. This may also be expressed as "the second STA is to terminate the TXOP at the start time indicated by the r-TWT SP information and is to ignore the quiet interval corresponding to the r-TWT SP information".

In any one of embodiments of this application, the second STA is to terminate the TXOP at the start time indicated by the r-TWT SP information and is to be quiet during the quiet interval corresponding to the r-TWT SP information. This may also be expressed as "the second STA is to terminate the TXOP at the start time indicated by the r-TWT SP information and is forbidden to ignore the quiet interval corresponding to the r-TWT SP information".

Based on the foregoing technical solution, the fourth frame sent by the second AP includes the third indication information, where the third indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. The second STA is a station in a BSS in which the second AP is located, that is, the second AP and the second STA are located in the same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STAin the BSS in which the second AP is located is performed.

A tenth aspect of this application provides a communication method, applied to WLAN communication. The method is performed by a station (station, STA), or the method is performed by some components (for example, a processor, a chip, or a system-on-chip) in a STA. In the tenth aspect and possible implementations of the tenth aspect, an example in which the method is performed by a second STA is used for description. In the method,
the second station STA receives a fourth frame, where the fourth frame includes restricted target wake time service period r-TWT SP information and third indication information, the third indication information includes m fields, and m is greater than or equal to 1; and
field locations of the m fields indicate a traffic identifier TID, and values of the m fields indicate the second STA to perform, according to one of the following, traffic corresponding to the TID, where the following includes:
   the second STA does not need to terminate a TXOP at a start time indicated by the r-TWT SP information and does not need to be quiet during a quiet interval corresponding to the r-TWT SP information; or
   the second STA is to terminate a TXOP at a start time indicated by the r-TWT SP information and does not need to be quiet during a quiet interval corresponding to the r-TWT SP information; or
   the second STA is to terminate a TXOP at a start time indicated by the r-TWT SP information and is to be quiet during a quiet interval corresponding to the r-TWT SP information; and
   the second STA determines, based on the r-TWT SP information and the third indication information, whether the second STA is to terminate the TXOP at the start time indicated by the r-TWT SP information and whether the second STA is to be quiet during the quiet interval corresponding to the r-TWT SP information.

Based on the foregoing technical solution, the fourth frame received by the second STA includes the third indication information, where the third indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. In other words, the second STA determines, based on the r-TWT SP information and the third indication information, whether the second STA is to terminate the TXOP at the start time indicated by the r-TWT SP information and whether the second STA is to ignore the quiet interval corresponding to the r-TWT SP information. A second AP and the second STA are located in a same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STA in the BSS in which the second AP is located is performed.

An eleventh aspect of this application provides a communication apparatus, applied to WLAN communication. The apparatus is an AP, or the apparatus is some components (for example, a processor, a chip, or a system-on-chip) in an AP. In the eleventh aspect and possible implementations of the eleventh aspect, an example in which the apparatus is a second AP is used for description. The apparatus includes a processing unit and a transceiver unit. The processing unit is configured to generate a fourth frame, where the fourth frame includes restricted target wake time service period r-TWT SP information and third indication information, the third indication information includes m fields, and m is greater than or equal to 1; and
field locations of the m fields indicate a traffic identifier TID, and values of the m fields indicate a second STA to perform, according to one of the following, traffic corresponding to the TID, where the following includes:
the second STA does not need to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and is to be quiet during a quiet interval corresponding to the r-TWT SP information; and
the transceiver unit is configured to send the fourth frame.

Based on the foregoing technical solution, the fourth frame sent by the transceiver unit includes the third indication information, where the second indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. The second AP and the second STA are located in a same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STAin the BSS in which the second AP is located is performed.

A twelfth aspect of this application provides a communication apparatus, applied to WLAN communication. The apparatus is a STA, or the apparatus is some components (for example, a processor, a chip, or a system-on-chip) in a STA. In the twelfth aspect and possible implementations of the twelfth aspect, an example in which the apparatus is a second STA is used for description. The apparatus includes a processing unit and a transceiver unit.

The transceiver unit is configured to receive a fourth frame, where the fourth frame includes restricted target wake time service period r-TWT SP information and third indication information, the third indication information includes m fields, and m is greater than or equal to 1; and
field locations of the m fields indicate a traffic identifier TID, and values of the m fields indicate the second STA to perform, according to one of the following, traffic corresponding to the TID, where the following includes:
the second STA does not need to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and is to be quiet during a quiet interval corresponding to the r-TWT SP information; and
the processing unit is configured to determine, based on the r-TWT SP information and the third indication information, whether the second STA is to terminate the TXOP at the start time indicated by the r-TWT SP information and whether the second STA is to be quiet during the quiet interval corresponding to the r-TWT SP information.

Based on the foregoing technical solution, the fourth frame received by the transceiver unit includes the third indication information, where the third indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. In other words, the processing unit determines, based on the r-TWT SP information and the third indication information, whether the second STA is to terminate the TXOP at the start time indicated by the r-TWT SP information and whether the second STA is to be quiet during the quiet interval corresponding to the r-TWT SP information. A second AP and the second STA are located in a same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STA in the BSS in which the second AP is located is performed.

In a possible implementation of any one of the ninth aspect to the twelfth aspect, the fourth frame includes a target wake time TWT element, and the r-TWT SP information and the third indication information are located in the TWT element.

In a possible implementation of any one of the ninth aspect to the twelfth aspect, the TWT element includes an r-TWT traffic information field; and the third indication information is located in the r-TWT traffic information field.

In a possible implementation of any one of the ninth aspect to the twelfth aspect, the r-TWT traffic information field includes a traffic information control subfield, the traffic information control subfield includes fourth indication information, and the fourth indication information indicates whether the r-TWT traffic information field includes the third indication information.

In a possible implementation of any one of the ninth aspect to the twelfth aspect, the fourth frame includes a target wake time (target wakeup time, TWT) element, and a broadcast TWT information field in the TWT element includes a broadcast TWT identifier field; and the values of the m fields indicate the second STA in a TWT group indicated by the broadcast TWT identifier field to perform, according to one of the following, the traffic corresponding to the TID.

Based on the foregoing technical solution, the TWT element in the fourth frame sent by the second AP further includes the broadcast TWT identifier field, and the broadcast TWT identifier field indicates the TWT group. Therefore, based on the broadcast TWT identifier field and the fourth indication information in the fourth frame, the second STAin the TWT group in the BSS in which the second AP is located does not need to be restricted by the r-TWT SP information of an OBSS in a process of performing traffic corresponding to some TIDs, to ensure that traffic (for example, high-priority traffic or traffic requiring a low latency) of the STA in the TWT group in the BSS in which the second AP is located is performed.

A thirteenth aspect of this application provides a communication method, applied to WLAN communication. The method is performed by an access point (access point, AP), or the method is performed by some components (for example, a processor, a chip, or a system-on-chip) in an AP. In the thirteenth aspect and possible implementations of the thirteenth aspect, an example in which the method is performed by a second AP is used for description. In the method, the second AP generates a fifth frame, where the fifth frame includes restricted target wake time service period r-TWT SP information and fifth indication information, the fifth indication information indicates whether a first STA is to terminate a TXOP at a start time indicated by the r-TWT SP information, and the first STA is not associated with the second AP; and the second AP sends the fifth frame.

Based on the foregoing technical solution, the fifth frame sent by the second AP includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STAin a BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STA in the BSS in which the second AP is located is increased.

In an embodiment of this application, that the first STA is not associated with the second AP includes: the first STA is associated with a first AP, where the first AP is located in an OBSS of the BSS in which the second AP is located. Alternatively, that the first STA is not associated with the second AP includes: the first STA is not associated with any AP.

In a possible implementation of the thirteenth aspect, the fifth indication information further indicates whether the first STA is to be quiet during a quiet interval corresponding to the r-TWT SP information.

Optionally, this implementation may be further expressed as "the fifth indication information further indicates whether the first STA is to ignore the quiet interval corresponding to the r-TWT SP information".

Based on the foregoing technical solution, the fifth indication information indicates whether the first STA is to terminate the TXOP at the start time indicated by the r-TWT SP information, to restrict channel access of the first STA at the start time; and the fifth indication information further indicates whether the first STA is to be quiet during the quiet interval corresponding to the r-TWT SP information, to restrict channel access of the first STA during the quiet interval. Therefore, the impact of channel contention of the first STA on the scheduled STA in the BSS in which the second AP is located is further reduced, so that the success rate of obtaining the channel by the scheduled STA in the BSS in which the second AP is located is increased.

In a possible implementation of the thirteenth aspect, after the second AP sends the fifth frame, the method further includes: the second AP receives a response frame for the fifth frame.

Optionally, the response frame for the fifth frame may be a notification (notification) frame, a response (response) frame, or an acknowledgment (acknowledgment, ACK) frame.

Based on the foregoing technical solution, after the second AP sends the fifth frame, the second AP may further receive the response frame sent by the first STA for the fifth frame, so that the second AP determines that channel access of the first STA is restricted, to ensure that the scheduled STA in the BSS in which the second AP is located obtains the channel.

A fourteenth aspect of this application provides a communication method, applied to WLAN communication. The method is performed by a station (station, STA), or the method is performed by some components (for example, a processor, a chip, or a system-on-chip) in a STA. In the fourteenth aspect and possible implementations of the fourteenth aspect, an example in which the method is performed by a first STAis used for description. In the method, the first station STA receives a fifth frame from a second access point AP, where the fifth frame includes target wake time service period r-TWT SP information and fifth indication information, the fifth indication information indicates whether the first STA is to terminate a TXOP at a start time indicated by the r-TWT SP information, and the first STA is not associated with the second AP; and the first STA determines, based on the fifth indication information, whether the first STA is to terminate the TXOP at the start time indicated by the r-TWT SP information.

Based on the foregoing technical solution, the fifth frame received by the first STA includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STA in a BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STA in the BSS in which the second AP is located is increased.

In a possible implementation of the fourteenth aspect, the method further includes: the first STA determines, based on the fifth indication information, whether the first STA is to be quiet during a quiet interval corresponding to the r-TWT SP information.

Optionally, this implementation may be further expressed as "the first STA determines, based on the fifth indication information, whether the first STA is to ignore the quiet interval corresponding to the r-TWT SP information".

Based on the foregoing technical solution, the fifth indication information indicates whether the first STA is to terminate the TXOP at the start time indicated by the r-TWT SP information, to restrict channel access of the first STA at the start time; and the fifth indication information further indicates whether the first STA is to be quiet during the quiet interval corresponding to the r-TWT SP information, to restrict channel access of the first STA during the quiet interval. Therefore, the impact of channel contention of the first STA on the scheduled STA in an OBSS is further reduced, so that the success rate of obtaining the channel by the scheduled STA in the BSS in which the second AP is located is increased.

In a possible implementation of the fourteenth aspect, after the first STA receives the fifth frame, the method further includes: the first STA sends a response frame for the fifth frame.

Optionally, the response frame for the fifth frame may be a notification (notification) frame, a response (response) frame, or an acknowledgment (acknowledgment, ACK) frame.

Based on the foregoing technical solution, after the first STA receives the fifth frame, the first STA may further send the response frame for the fifth frame to the second AP, so that the second AP determines that channel access of the first STA is restricted, to ensure that the scheduled STA in the BSS in which the second AP is located obtains the channel.

A fifteenth aspect of this application provides a communication apparatus, applied to WLAN communication. The apparatus is an AP, or the apparatus is some components (for example, a processor, a chip, or a system-on-chip) in an AP. In the fifteenth aspect and possible implementations of the fifteenth aspect, an example in which the apparatus is a second AP is used for description. The apparatus includes a processing unit and a transceiver unit. The processing unit is configured to generate a fifth frame, where the fifth frame includes restricted target wake time service period r-TWT SP information and fifth indication information, the fifth indication information indicates whether a first STA is to terminate a TXOP at a start time indicated by the r-TWT SP information, and the first STA is not associated with the second AP. The transceiver unit is configured to send the fifth frame.

Based on the foregoing technical solution, the fifth frame sent by the transceiver unit includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STA in a BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STA in the BSS in which the second AP is located is increased.

In a possible implementation of the fifteenth aspect, the fifth indication information further indicates whether the first STA is to be quiet during a quiet interval corresponding to the r-TWT SP information.

In a possible implementation of the fifteenth aspect, after the second AP sends the fifth frame, the transceiver unit is further configured to receive a response frame for the fifth frame.

A sixteenth aspect of this application provides a communication apparatus, applied to WLAN communication. The apparatus is a STA, or the apparatus is some components (for example, a processor, a chip, or a system-on-chip) in a STA. In the sixteenth aspect and possible implementations of the sixteenth aspect, an example in which the apparatus is a first STA is used for description. The apparatus includes a processing unit and a transceiver unit. The transceiver unit is configured to receive a fifth frame from a second access point AP, where the fifth frame includes target wake time service period r-TWT SP information and fifth indication information, the fifth indication information indicates whether the first STA is to terminate a TXOP at a start time indicated by the r-TWT SP information, and the first STA is not associated with the second AP. The processing unit is configured to determine, based on the fifth indication information, whether the first STA is to terminate the TXOP at the start time indicated by the r-TWT SP information.

Based on the foregoing technical solution, the fifth frame received by the transceiver unit includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STAin a BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STA in the BSS in which the second AP is located is increased.

In a possible implementation of the sixteenth aspect, the processing unit is further configured to determine, based on the fifth indication information, whether the first STA is to be quiet during a quiet interval corresponding to the r-TWT SP information.

In a possible implementation of the sixteenth aspect, after the first STA receives the fifth frame, the transceiver unit is further configured to send a response frame for the fifth frame.

In a possible implementation of any one of the thirteenth aspect to the sixteenth aspect, the fifth frame further includes sixth indication information, the sixth indication information includes k fields, and k is greater than or equal to 1; and
field locations of the k fields indicate a traffic identifier TID, and values of the k fields indicate the second STA to perform, according to one of the following, traffic corresponding to the TID, where the following includes:
the first STA does not need to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and is to be quiet during the quiet interval corresponding to the r-TWT SP information.

In any one of embodiments of this application, the first STA does not need to terminate the TXOP at the start time indicated by the r-TWT SP information and does not need to be quiet during the quiet interval corresponding to the r-TWT SP information. This may also be expressed as "the first STA does not need to terminate the TXOP at the start time indicated by the r-TWT SP information and is to ignore the quiet interval corresponding to the r-TWT SP information".

In any one of embodiments of this application, the first STA is to terminate the TXOP at the start time indicated by the r-TWT SP information and does not need to be quiet during the quiet interval corresponding to the r-TWT SP information. This may also be expressed as "the first STA is to terminate the TXOP at the start time indicated by the r-TWT SP information and is to ignore the quiet interval corresponding to the r-TWT SP information".

In any one of embodiments of this application, the first STA is to terminate the TXOP at the start time indicated by the r-TWT SP information and is to be quiet during the quiet interval corresponding to the r-TWT SP information. This may also be expressed as "the first STA is to terminate the TXOP at the start time indicated by the r-TWT SP information and is forbidden to ignore the quiet interval corresponding to the r-TWT SP information".

Based on the foregoing technical solution, the fifth frame sent by the second AP includes the sixth indication information, where the sixth indication information indicates that channel access of the first STA at the start time indicated by the r-TWT SP information and channel access of the first STA during the quiet interval corresponding to the r-TWT SP information are not necessarily restricted when the traffic corresponding to the TID is performed by the first STA. Therefore, based on an implementation of the sixth indication information in the fifth frame, the first STA does not need to be restricted by the r-TWT SP information in a process of performing traffic corresponding to some TIDs, to ensure that traffic (for example, high-priority traffic or traffic requiring a low latency) of the first STA is performed.

In a possible implementation of any one of the thirteenth aspect to the sixteenth aspect, the fifth frame includes a target wake time TWT element, and a broadcast TWT information field in the TWT element includes a broadcast TWT identifier field; and the values of the k fields indicate the first STA in a TWT group indicated by the broadcast TWT identifier field to perform, according to one of the following, the traffic corresponding to the TID.

Based on the foregoing technical solution, the TWT element in the fifth frame sent by the second AP further includes the broadcast TWT identifier field, and the broadcast TWT identifier field indicates the TWT group. Therefore, based on the broadcast TWT identifier field and the sixth indication information in the fifth frame, the STA in the TWT group does not need to be restricted by the r-TWT SP information of the OBSS in a process of performing traffic corresponding to some TIDs, to ensure that traffic (for example, high-priority traffic or traffic requiring a low latency) of the first STA in the TWT group is performed.

In a possible implementation of any one of the thirteenth aspect to the sixteenth aspect, the TWT element includes an r-TWT traffic information field; and the sixth indication information is located in an r-TWT downlink TID bitmap subfield and/or an r-TWT uplink TID bitmap subfield in the r-TWT traffic information field.

In a possible implementation of any one of the thirteenth aspect to the sixteenth aspect, the fifth frame includes a target wake time (target wakeup time, TWT) element, and a broadcast TWT information field in the TWT element includes a broadcast TWT identifier field; and the first STA in a TWT group indicated by the broadcast TWT identifier field does not need to terminate the TXOP at the start time indicated by the r-TWT SP information and does not need to be quiet during the quiet interval corresponding to the r-TWT SP information.

Based on the foregoing technical solution, the TWT element in the fifth frame sent by the second AP further includes the broadcast TWT identifier field, and the broadcast TWT identifier field indicates the TWT group. Therefore, based on the broadcast TWT identifier field and the sixth indication information in the fifth frame, the first STA in the TWT group does not need to be restricted by the r-TWT SP information of the OBSS in a process of performing traffic corresponding to some TIDs, to ensure that traffic (for example, high-priority traffic or traffic requiring a low latency) of the STAin the TWT group is performed.

In a possible implementation of any one of the thirteenth aspect to the sixteenth aspect, an AP associated with the first STA and the first AP are located in a first AP group, and the fifth indication information includes an identifier of the first AP group.

In a possible implementation of any one of the thirteenth aspect to the sixteenth aspect, the fifth frame includes a TWT element, and the r-TWT SP information and the fifth indication information are located in the TWT element.

In a possible implementation of any one of the thirteenth aspect to the sixteenth aspect, the TWT element includes a broadcast TWT information field; and the fifth indication information is located in the broadcast TWT information field.

In a possible implementation of any one of the thirteenth aspect to the sixteenth aspect,
the fifth indication information is located in a broadcast TWT identifier field in the broadcast TWT information field; or
the fifth indication information is located in a reserved field in the broadcast TWT information field; or
the fifth indication information is located in a reserved field in the broadcast TWT information field, and a broadcast TWT identifier field in the broadcast TWT information field is the reserved field.

In a possible implementation of any one of the thirteenth aspect to the sixteenth aspect, the TWT element includes an r-TWT traffic information field; and the fifth indication information is located in a traffic information control subfield in the r-TWT traffic information field.

In a possible implementation of any one of the thirteenth aspect to the sixteenth aspect, the fifth frame is a beacon frame or a probe response frame.

Optionally, the fifth frame is a management frame.

In a possible implementation of any one of the thirteenth aspect to the sixteenth aspect, the fifth indication information is located in a TWT setup command field in a request type subfield of the broadcast TWT information field.

Based on the foregoing technical solution, the fifth indication information carried in the fifth frame may be located in the TWT setup command field in the request type subfield of the broadcast TWT information field, so that a value of the TWT setup command field is set to indicate whether the first STA is to terminate the TXOP at the start time indicated by the r-TWT SP information.

In a possible implementation of any one of the thirteenth aspect to the sixteenth aspect, a value indication of the fifth indication information is "accept TWT", and the fifth indication information indicates that the first STA is to terminate the TXOP at the start time indicated by the r-TWT SP information, and the fifth indication information further indicates that the first STA is to be quiet during the quiet interval corresponding to the r-TWT SP information; or
a value indication of the fifth indication information is "reject TWT", and the fifth indication information indicates that the first STA does not need to terminate the TXOP at the start time indicated by the r-TWT SP information; or
a value indication of the fifth indication information is "modify TWT", and the fifth indication information indicates that the first STA is to modify, based on the r-TWT SP information, r-TWT SP information corresponding to a BSSID of the second AP.

Optionally, when the value indication of the fifth indication information is "modify TWT", the fifth indication information indicates that the first STA is to terminate the TXOP at a start time indicated by modified r-TWT SP information, and the fifth indication information further indicates that the first STA is to be quiet during a quiet interval corresponding to the modified r-TWT SP information.

Based on the foregoing technical solution, in an implementation process of the fifth indication information located in the TWT setup command field in the request type subfield of the broadcast TWT information field, by using different values of the TWT setup command field, the second AP may indicate the first STA not associated with the second AP to accept an r-TWT SP indicated by the r-TWT SP information, or the second AP may indicate the first STA not associated with the second AP to reject an r-TWT SP indicated by the r-TWT SP information corresponding to the BSSID of the second AP, or the second AP may indicate the first STA not associated with the second AP to modify an r-TWT SP indicated by the r-TWT SP information corresponding to the BSSID of the second AP.

A seventeenth aspect of this application provides a communication method, applied to WLAN communication. The method is performed by an AP, or the method is performed by some components (for example, a processor, a chip, or a system-on-chip) in an AP. In the seventeenth aspect and possible implementations of the seventeenth aspect, an example in which the method is performed by a first AP is used for description. In the method, the first AP generates a seventh frame, where the seventh frame includes r-TWT SP information, the r-TWT SP information indicates whether a first STA is to terminate a transmission opportunity TXOP at a start time indicated by the r-TWT SP information, the first STA is a STA in a BSS in which the first AP is located, and a broadcast TWT identifier corresponding to the r-TWT SP information is a broadcast TWT identifier unallocated in the BSS in which the first AP is located; and the first AP sends the seventh frame.

Based on the foregoing technical solution, after the first AP determines OBSS r-TWT SP information, the first frame sent by the first AP includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STA in an OBSS is reduced by restricting channel access of the first STA in the BSS in which the first AP is located, so that a success rate of obtaining a channel by the scheduled STAin the OBSS is increased.

In a possible implementation of the seventeenth aspect, the r-TWT SP information further indicates whether the first STA is to be quiet during a quiet interval (Quiet Interval) corresponding to the r-TWT SP information.

Optionally, this implementation may be further expressed as "the r-TWT SP information further indicates whether the first STA is to ignore the quiet interval corresponding to the r-TWT SP information".

Based on the foregoing technical solution, the r-TWT SP information indicates whether the first STA is to terminate the TXOP at the start time indicated by the r-TWT SP information, to restrict channel access of the first STA at the start time; and the r-TWT SP information further indicates whether the first STA is to be quiet during the quiet interval corresponding to the r-TWT SP information, to restrict channel access of the first STA during the quiet interval. Therefore, the impact of channel contention of the first STA on the scheduled STAin the OBSS is further reduced, so that the success rate of obtaining the channel by the scheduled STA in the OBSS is increased.

In a possible implementation of the seventeenth aspect, before the first AP generates the seventh frame, the method further includes: the first AP receives an eighth frame from an AP in an OBSS of the BSS in which the first AP is located, where the eighth frame includes information related to the r-TWT SP information; and that the first AP generates the seventh frame includes: the first AP generates the seventh frame based on the information related to the r-TWT SP information.

Optionally, the information related to the r-TWT SP information and included in the eighth frame may include a part of the r-TWT SP information included in the seventh frame.

Optionally, the information related to the r-TWT SP information and included in the eighth frame may include an entirety of the r-TWT SP information included in the seventh frame.

Based on the foregoing technical solution, the first AP may generate the seventh frame based on the information related to the r-TWT SP information and included in the second frame from the AP in the OBSS of the BSS in which the first AP is located, where the information related to the r-TWT SP information and included in the eighth frame may indicate the start time, duration, or other information, so that the first AP generates the seventh frame based on the information related to the r-TWT SP information.

Optionally, the first AP may further obtain the eighth frame in another manner. For example, the first AP receives the eighth frame from an access controller (access controller, AC), where the AC may be a controller of the first AP and the AP in the OBSS. For another example, the first AP generates the eighth frame and sends the eighth frame to the AP in the OBSS, where the first AP may be a controller of the AP in the OBSS.

An eighteenth aspect of this application provides a communication method, applied to WLAN communication. The method is performed by a station (station, STA), or the method is performed by some components (for example, a processor, a chip, or a system-on-chip) in a STA. In the first aspect and possible implementations of the first aspect, an example in which the method is performed by a first STA is used for description. In the method, the first STA receives a seventh frame, where the seventh frame includes restricted target wake time service period r-TWT SP information, the r-TWT SP information indicates whether the first station STA is to terminate a transmission opportunity TXOP at a start time indicated by the r-TWT SP information, the first STAis a STAin a BSS in which a first AP is located, and a broadcast TWT identifier corresponding to the r-TWT SP information is a broadcast TWT identifier unallocated in the BSS in which the first AP is located; and the first STA determines, based on the r-TWT SP information, whether to terminate the transmission opportunity TXOP at the start time indicated by the r-TWT SP information.

Based on the foregoing technical solution, after the first AP determines OBSS r-TWT SP information, the first frame sent by the first AP includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STA in an OBSS is reduced by restricting channel access of the first STAin the BSS in which the first AP is located, so that a success rate of obtaining a channel by the scheduled STAin the OBSS is increased.

In a possible implementation of the eighteenth aspect, the r-TWT SP information further indicates whether the first STA is to be quiet during a quiet interval (Quiet Interval) corresponding to the r-TWT SP information, and the method further includes: the first STA determines, based on the r-TWT SP information, whether to be quiet during the quiet interval corresponding to the r-TWT SP information.

Optionally, this implementation may be further expressed as "the first STA determines, based on the r-TWT SP information, whether to ignore the quiet interval corresponding to the r-TWT SP information".

Based on the foregoing technical solution, the first STA determines, based on the r-TWT SP information, whether the first STA is to terminate the TXOP at the start time indicated by the r-TWT SP information, to restrict channel access of the first STA at the start time; and the first STA determines, based on the r-TWT SP information, whether to be quiet during the quiet interval corresponding to the r-TWT SP information, to restrict channel access of the first STA during the quiet interval. Therefore, the impact of channel contention of the first STA on the scheduled STA in the OBSS is further reduced, so that the success rate of obtaining the channel by the scheduled STA in the OBSS is increased.

A nineteenth aspect of this application provides a communication apparatus, applied to WLAN communication. The apparatus is an AP, or the apparatus is some components (for example, a processor, a chip, or a system-on-chip) in an AP. In the nineteenth aspect and possible implementations of the nineteenth aspect, an example in which the apparatus is a first AP is used for description. The apparatus includes a processing unit and a transceiver unit. The processing unit is configured to generate a seventh frame, where the seventh frame includes r-TWT SP information, the r-TWT SP information indicates whether a first STAis to terminate a transmission opportunity TXOP at a start time indicated by the r-TWT SP information, the first STA is a STA in a BSS in which the first AP is located, and a broadcast TWT identifier corresponding to the r-TWT SP information is a broadcast TWT identifier unallocated in the BSS in which the first AP is located. The transceiver unit is configured to send the seventh frame.

Based on the foregoing technical solution, after the processing unit determines OBSS r-TWT SP information, the first frame sent by the transceiver unit includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STAin an OBSS is reduced by restricting channel access of the first STAin the BSS in which the first AP is located, so that a success rate of obtaining a channel by the scheduled STAin the OBSS is increased.

In a possible implementation of the nineteenth aspect, the r-TWT SP information further indicates whether the first STA is to be quiet during a quiet interval (Quiet Interval) corresponding to the r-TWT SP information.

Optionally, this implementation may be further expressed as "the r-TWT SP information further indicates whether the first STA is to ignore the quiet interval corresponding to the r-TWT SP information".

In a possible implementation of the nineteenth aspect,
the transceiver unit is further configured to receive an eighth frame from an AP in an OBSS of the BSS in which the first AP is located, where the eighth frame includes information related to the r-TWT SP information; and
the processing unit is specifically configured to generate the seventh frame based on the information related to the r-TWT SP information.

A twentieth aspect of this application provides a communication apparatus, applied to WLAN communication. The apparatus is a STA, or the apparatus is some components (for example, a processor, a chip, or a system-on-chip) in a STA. In the twentieth aspect and possible implementations of the twentieth aspect, an example in which the apparatus is a first STA is used for description. The apparatus includes a processing unit and a transceiver unit. The transceiver unit is configured to receive a seventh frame, where the seventh frame includes restricted target wake time service period r-TWT SP information, the r-TWT SP information indicates whether the first station STA is to terminate a transmission opportunity TXOP at a start time indicated by the r-TWT SP information, the first STA is a STA in a BSS in which a first AP is located, and a broadcast TWT identifier corresponding to the r-TWT SP information is a broadcast TWT identifier unallocated in the BSS in which the first AP is located. The processing unit is configured to determine, based on the r-TWT SP information, whether to terminate the transmission opportunity TXOP at the start time indicated by the r-TWT SP information.

Based on the foregoing technical solution, after the first AP determines OBSS r-TWT SP information, the first frame sent by the transceiver unit includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STAin an OBSS is reduced by restricting channel access of the first STAin the BSS in which the first AP is located, so that a success rate of obtaining a channel by the scheduled STA in the OBSS is increased.

In a possible implementation of the twentieth aspect, the r-TWT SP information further indicates whether the first STA is to be quiet during a quiet interval (Quiet Interval) corresponding to the r-TWT SP information, and the processing unit is further configured to determine, based on the r-TWT SP information, whether to be quiet during the quiet interval corresponding to the r-TWT SP information.

Optionally, this implementation may be further expressed as "the processing unit is further configured to determine, based on the r-TWT SP information, whether to ignore the quiet interval corresponding to the r-TWT SP information".

In a possible implementation of any one of the seventeenth aspect to the twentieth aspect, the seventh frame further includes first indication information, the first indication information indicates that the r-TWT SP information is r-TWT SP information of an overlapping basic service set OBSS of the basic service set BSS in which the first AP is located, and the r-TWT SP information of the OBSS indicates whether the first station STAis to terminate the transmission opportunity TXOP at the start time indicated by the r-TWT SP information of the OBSS.

It should be noted that, for the first indication information included in the seventh frame in the possible implementations of any one of the seventeenth aspect to the twentieth aspect, reference may also be made to the description of the first indication information included in the first frame in the possible implementations of any one of the first aspect to the fourth aspect, with corresponding technical effect achieved. Details are not described herein again.

A twenty-first aspect of embodiments of this application provides a communication apparatus, including at least one processor. The at least one processor is coupled to a memory. The memory is configured to store a program or instructions. The at least one processor is configured to execute the program or instructions. In this way, the apparatus is enabled to implement the method according to any one of the first aspect or the possible implementations of the first aspect, or the apparatus is enabled to implement the method according to any one of the second aspect or the possible implementations of the second aspect, or the apparatus is enabled to implement the method according to any one of the fifth aspect or the possible implementations of the fifth aspect, or the apparatus is enabled to implement the method according to any one of the sixth aspect or the possible implementations of the sixth aspect, or the apparatus is enabled to implement the method according to any one of the ninth aspect or the possible implementations of the ninth aspect, or the apparatus is enabled to implement the method according to any one of the tenth aspect or the possible implementations of the tenth aspect, or the apparatus is enabled to implement the method according to any one of the thirteenth aspect or the possible implementations of the thirteenth aspect, or the apparatus is enabled to implement the method according to any one of the fourteenth aspect or the possible implementations of the fourteenth aspect, or the apparatus is enabled to implement the method according to any possible implementation of the seventeenth aspect or the eighteenth aspect.

A twenty-second aspect of embodiments of this application provides a computerreadable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the fifth aspect or the possible implementations of the fifth aspect, or the processor performs the method according to any one of the sixth aspect or the possible implementations of the sixth aspect, or the processor performs the method according to any one of the ninth aspect or the possible implementations of the ninth aspect, or the processor performs the method according to any one of the tenth aspect or the possible implementations of the tenth aspect, or the processor performs the method according to any one of the thirteenth aspect or the possible implementations of the thirteenth aspect, or the processor performs the method according to any one of the fourteenth aspect or the possible implementations of the fourteenth aspect, or the processor performs the method according to any possible implementation of the seventeenth aspect or the eighteenth aspect.

A twenty-third aspect of embodiments of this application provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the fifth aspect or the possible implementations of the fifth aspect, or the processor performs the method according to any one of the sixth aspect or the possible implementations of the sixth aspect, or the processor performs the method according to any one of the ninth aspect or the possible implementations of the ninth aspect, or the processor performs the method according to any one of the tenth aspect or the possible implementations of the tenth aspect, or the processor performs the method according to any one of the thirteenth aspect or the possible implementations of the thirteenth aspect, or the processor performs the method according to any one of the fourteenth aspect or the possible implementations of the fourteenth aspect, or the processor performs the method according to any possible implementation of the seventeenth aspect or the eighteenth aspect.

A twenty-fourth aspect of embodiments of this application provides a system-on-chip. The system-on-chip includes at least one processor, configured to support a communication apparatus in implementing a function in any one of the first aspect or the possible implementations of the first aspect, or configured to support a communication apparatus in implementing a function in any one of the second aspect or the possible implementations of the second aspect, or configured to support a communication apparatus in implementing a function in any one of the fifth aspect or the possible implementations of the fifth aspect, or configured to support a communication apparatus in implementing a function in any one of the sixth aspect or the possible implementations of the sixth aspect, or configured to support a communication apparatus in implementing a function in any one of the ninth aspect or the possible implementations of the ninth aspect, or configured to support a communication apparatus in implementing a function in any one of the tenth aspect or the possible implementations of the tenth aspect, or configured to support a communication apparatus in implementing a function in any one of the thirteenth aspect or the possible implementations of the thirteenth aspect, or configured to support a communication apparatus in implementing a function in any one of the fourteenth aspect or the possible implementations of the fourteenth aspect, or configured to support a communication apparatus in implementing a function in any one of the seventeenth aspect or the possible implementations of the seventeenth aspect, or configured to support a communication apparatus in implementing a function in any one of the eighteenth aspect or the possible implementations of the eighteenth aspect.

In a possible design, the system-on-chip may further include a memory, configured to store program instructions and data that are necessary for the communication apparatus. The system-on-chip may include a chip, or may include a chip and another discrete component. Optionally, the system-on-chip further includes an interface circuit, and the interface circuit provides program instructions and/or data for the at least one processor.

A twenty-fifth aspect of embodiments of this application provides a communication system. The communication system includes the communication apparatus in the third aspect and the communication apparatus in the fourth aspect, and/or the communication system includes the communication apparatus in the seventh aspect and the communication apparatus in the eighth aspect, and/or the communication system includes the communication apparatus in the eleventh aspect and the communication apparatus in the twelfth aspect, and/or the communication system includes the communication apparatus in the fifteenth aspect and the communication apparatus in the sixteenth aspect, and/or the communication system includes the communication apparatus in the nineteenth aspect and the communication apparatus in the twentieth aspect, and/or the communication system includes the communication apparatus in the twenty-first aspect.

For technical effect brought by any design in the twenty-first aspect to the twenty-fifth aspect, refer to technical effect brought by different implementations in the first aspect or the twentieth aspect. Details are not described herein again.

It can be learned from the foregoing technical solutions that embodiments of this application bring the following beneficial effects:

In some embodiments, the impact of channel contention of the first STA on the scheduled STAin the OBSS is reduced by restricting channel access of the first STAin the BSS in which the first AP is located, so that the success rate of obtaining the channel by the scheduled STA in the OBSS is increased.

In some other embodiments, after the first AP sends, to the first STA, the third frame including the quiet element, the impact of channel contention of the first STA on the scheduled STAin the OBSS is reduced by restricting channel access of the first STAin the BSS in which the first AP is located, so that the success rate of obtaining the channel by the scheduled STA in the OBSS is increased.

In some other embodiments, based on the implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STA in the BSS in which the second AP is located is performed.

In some other embodiments, the impact of channel contention of the first STA on the scheduled STA in the BSS in which the second AP is located is reduced by restricting channel access of the first STA not associated with the second AP, so that the success rate of obtaining the channel by the scheduled STA in the BSS in which the second AP is located is increased.

### BRIEF DESCRIPTION OF DRAWINGS

FIG. 1 is a diagram of a communication system to which this application is applicable;
FIG. 2a is a diagram of an AP according to this application;
FIG. 2b is a diagram of a STA according to this application;
FIG. 3 is a diagram of a communication method according to this application;
FIG. 4a is a diagram of a radio frame according to this application;
FIG. 4b is another diagram of a radio frame according to this application;
FIG. 4c is another diagram of a radio frame according to this application;
FIG. 5a is a diagram of a communication scenario according to this application;
FIG. 5b is another diagram of a communication scenario according to this application;
FIG. 6a is a diagram of a communication method according to an embodiment of this application;
FIG. 6b is a diagram of a communication method according to an embodiment of this application;
FIG. 7a is a diagram of a radio frame according to an embodiment of this application;
FIG. 7b is another diagram of a radio frame according to an embodiment of this application;
FIG. 7c is another diagram of a radio frame according to an embodiment of this application;
FIG. 8a is another diagram of a radio frame according to an embodiment of this application;
FIG. 8b is another diagram of a radio frame according to an embodiment of this application;
FIG. 8c is another diagram of a radio frame according to an embodiment of this application;
FIG. 8d is another diagram of a radio frame according to an embodiment of this application;
FIG. 9a is another diagram of a radio frame according to an embodiment of this application;
FIG. 9b is another diagram of a radio frame according to an embodiment of this application;
FIG. 10 is another diagram of a communication method according to an embodiment of this application;
FIG. 11 is another diagram of a communication method according to an embodiment of this application;
FIG. 12 is another diagram of a radio frame according to an embodiment of this application;
FIG. 13 is another diagram of a communication method according to an embodiment of this application;
FIG. 14a is another diagram of a radio frame according to an embodiment of this application;
FIG. 14b is another diagram of a radio frame according to an embodiment of this application;
FIG. 14c is another diagram of a radio frame according to an embodiment of this application;
FIG. 14d is another diagram of a radio frame according to an embodiment of this application;
FIG. 14e is another diagram of a radio frame according to an embodiment of this application;
FIG. 15 is a diagram of an apparatus according to an embodiment of this application;
FIG. 16 is another diagram of an apparatus according to an embodiment of this application; and
FIG. 17 is another diagram of an apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. The term "and/or" in this specification describes only an association relationship between associated objects and represents that three relationships may exist. For example, A and/or B may represent the following three cases: Only A exists, both A and B exist, and only B exists. In addition, the term "at least one" means one or more, and the term "a plurality of" means two or more. The term "at least one of the following items (pieces)" or an expression similar to the term indicates any combination of these items, including any combination of singular items (pieces) or plural items (pieces). For example, at least one of a, b, or c may represent a, b, c, a and b, a and c, b and c, or a, b, and c, where a, b, and c may be singular or plural.

In the descriptions of this application, terms such as "first" and "second" do not limit a quantity and an execution sequence, and the terms such as "first" and "second" do not indicate a definite difference.

In this application, the term "example", "for example", or the like is used to represent an example, an illustration, or a description. Any embodiment or design scheme described with "example", "in an example", or "for example" in this application should not be construed as being more preferred or advantageous than another embodiment or design scheme. To be precise, the terms such as "example", "in an example", and "for example" are intended to present a relative concept in a specific manner.

It should be understood that, in this application, the terms "when", "provided that", and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

In this application, unless otherwise specified, mutual reference may be made for same or similar parts of embodiments or implementations. In embodiments of this application and implementations or implementation methods in embodiments, unless otherwise specified or a logical conflict occurs, terms and/or descriptions are consistent and may be mutually referenced between different embodiments and between the implementations or implementation methods in the embodiments. Technical features in the different embodiments and the implementations or implementation methods in the embodiments may be combined to form a new embodiment, implementation, or implementation method based on an internal logical relationship thereof. The following implementations of this application are not intended to limit the protection scope of this application.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions provided in this application are applicable to various communication systems, for example, a system using the 802.11 standard. For example, the 802.11 standard includes but is not limited to the 802.11be standard or the next-generation 802.11 standard. Scenarios to which the technical solutions of this application are applicable include: communication between an AP and one or more STAs, communication between APs, communication between STAs, and the like. In embodiments of this application, the term "communication" may also be described as "data transmission", "information transmission", or "transmission".

Currently, WLAN has evolved over a plurality of generations, such as 802.11a/b/g, 802.11n, 802.11ac, 802.11ax, and 802.11be under discussion. The 802.11n standard may be referred to as high throughput (high throughput, HT), the 802.11ac standard may be referred to as very high throughput (very high throughput, VHT), 802.11ax (Wi-Fi 6) may be referred to as high efficiency (high efficient, HE), 802.11be (Wi-Fi 7) may be referred to as extremely high throughput (extremely high throughput, EHT), and standards previous to HT, such as 802.11a/b/g, may be collectively referred to as non-high throughput (Non-HT).

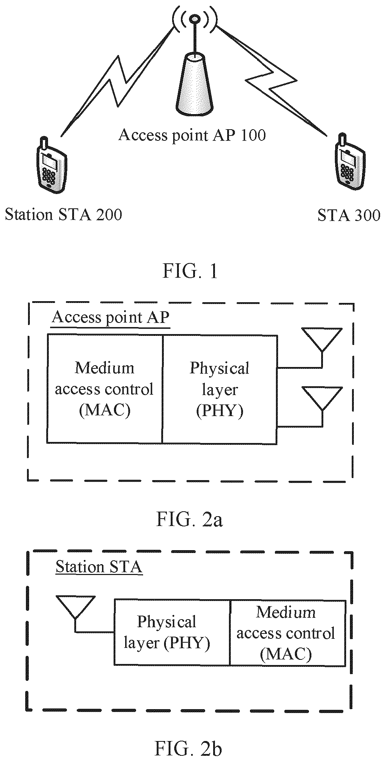

FIG. 1 is a diagram of an architecture of a wireless communication system according to an embodiment of this application. As shown in FIG. 1, the wireless communication system may include one or more APs (for example, an AP 100 shown in FIG. 1) and one or more STAs (for example, a STA 200 and a STA 300 shown in FIG. 1). The AP and the STA support the WLAN communication protocol. The communication protocol may include 802.11be (or referred to as Wi-Fi 7, the extremely high throughput (extremely high throughput, EHT) protocol), and may further include protocols such as 802.11ax, 802.11ac, and 802.11bf. Certainly, with continuous evolution and development of communication technologies, the communication protocol may further include a next-generation protocol of 802.11be, and the like. For example, in a WLAN, an apparatus for implementing the method in this application may be an AP or a STA in the WLAN, or a chip or a processing system installed in an AP or a STA.

Optionally, an access point (for example, the AP 100 in FIG. 1) in this application is an apparatus having a wireless communication function, supports communication through the wireless local area network (wireless local area network, WLAN) protocol, and has a function of communicating with another device (for example, a station or another access point) in a WLAN network. Certainly, the access point may also have a function of communicating with another device. In a WLAN system, an access point may be referred to as an access point station (access point station, AP STA). The apparatus having the wireless communication function may be an entire device, or may be a chip, a processing system, or the like installed in an entire device. The device in which the chip or the processing system is installed may implement the method and the function in embodiments of this application under control of the chip or the processing system. The AP in embodiments of this application is an apparatus that provides a service for the STA, and may support 802.11 series protocols. For example, the AP may be a communication entity such as a communication server, a router, a switch, or a bridge. The AP may include a macro base station, a micro base station, a relay station, and the like in various forms. Certainly, the AP may alternatively be a chip and a processing system in these devices in various forms, to implement the method and the function in embodiments of this application.

Optionally, a station (for example, the STA 200 or the STA 300 in FIG. 1) in this application is an apparatus having a wireless communication function, supports communication through the WLAN protocol, and has a capability of communicating with another station or an access point in a WLAN network. In a WLAN system, a station may be referred to as a non-access point station (non-access point station, non-AP STA). For example, the STA is any user communication device that allows a user to communicate with the AP and further communicate with the WLAN. The apparatus having the wireless communication function may be an entire device, or may be a chip, a processing system, or the like installed in an entire device. The device in which the chip or the processing system is installed may implement the method and the function in embodiments of this application under control of the chip or the processing system. For example, the STA may be user equipment that can be connected to the Internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone; or an Internet of Things node in the Internet of Things, an in-vehicle apparatus in the Internet of Vehicles, an entertainment device, a game device or system, a global positioning system device, or the like. Alternatively, the STA may be a chip and a processing system in the foregoing terminals.

The WLAN system can provide high-speed and low-latency transmission. With continuous evolution of WLAN application scenarios, the WLAN system will be applied to more scenarios or industries, for example, the Internet of Things industry, the Internet of Vehicles industry, the banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display screen, a television, a stereo, a refrigerator, or a washing machine) in a smart home, a node in the Internet of Things, an entertainment terminal (for example, a wearable device such as augmented reality (augmented reality, AR) or virtual reality (virtual reality, VR)), a smart device (for example, a printer, a projector, a speaker, or a stereo) in a smart office, an Internet of Vehicles device in the Internet of Vehicles, an infrastructure (for example, a vending machine, a self-service navigation console of a supermarket, a self-service cashier, or a self-service ordering machine) in a daily life scenario, a device in a large sports and music venue, or the like. Specific forms of the STA and the AP are not limited in embodiments of this application, and are merely examples for description herein.

It should be understood that the 802.11 standard focuses on a physical layer (physical layer, PHY) and a medium access control (medium access control, MAC) layer. For example, FIG. 2a is a diagram of a structure of an access point according to an embodiment of this application. The AP may be a multi-antenna or multi-radio-frequency AP, or may be a single-antenna or single-radio-frequency AP. The antenna or radio frequency is used to send/receive a data packet (the data packet in this specification may also be referred to as a physical layer protocol data unit, PPDU). In an implementation, an antenna part or a radio frequency part of the AP may be separated from a main body part of the AP, and is in a remote layout structure. In FIG. 2a, the AP may include a physical layer processing circuit and a medium access control processing circuit. The physical layer processing circuit may be configured to process a physical layer signal, and the MAC layer processing circuit may be configured to process a MAC layer signal. For another example, FIG. 2b is a diagram of a structure of a station according to an embodiment of this application. FIG. 2b is a diagram of a structure of a single-antenna or single-radio-frequency STA. In an actual scenario, the STA may alternatively be a multi-antenna or multi-radio-frequency STA, and may be a device with more than two antennas. The antenna or radio frequency is configured to send/receive a data packet. In an implementation, an antenna part or a radio frequency part of the STA may be separated from a main body part of the STA, and is in a remote layout structure. In FIG. 2b, the STA may include a PHY processing circuit and a MAC processing circuit. The physical layer processing circuit may be configured to process a physical layer signal, and the MAC layer processing circuit may be configured to process a MAC layer signal.

It should be noted that embodiments of this application relate to WLAN communication. It should be understood that the foregoing content is merely some examples of application scenarios of this application.

The foregoing briefly describes the system architecture in embodiments of this application. For better understanding the technical solutions in embodiments of this application, the following describes a communication feature of restricted target wake time (restricted target wakeup time, r-TWT) related to embodiments of this application.

Currently, more wireless network applications and services, such as online games, virtual reality, and industrial automation, impose strict requirements on latency features. Therefore, the next-generation WLAN IEEE 802.11be standard, using assurance of latency and jitter features as a key technical objective, has gained wide attention in the industry. Restricted target wake time (restricted target wakeup time, r-TWT) is a new mechanism for ensuring low-latency traffic. Derived from an existing broadcast TWT (Broadcast TWT) in IEEE 802.11ax, the r-TWT is a new mechanism for ensuring low-latency traffic.

In the 802.11be standard, a non-AP EHT STA (referred to as an EHT STA) has many real-time applications (real time applications), and there are stringent requirements on latencies of traffic of these applications (stringent latency requirements). Based on this, an r-TWT mechanism is proposed. The mechanism indicates that an AP broadcasts one or more pieces of r-TWT SP information by using a beacon (Beacon) frame or a probe response (Probe Response) frame.

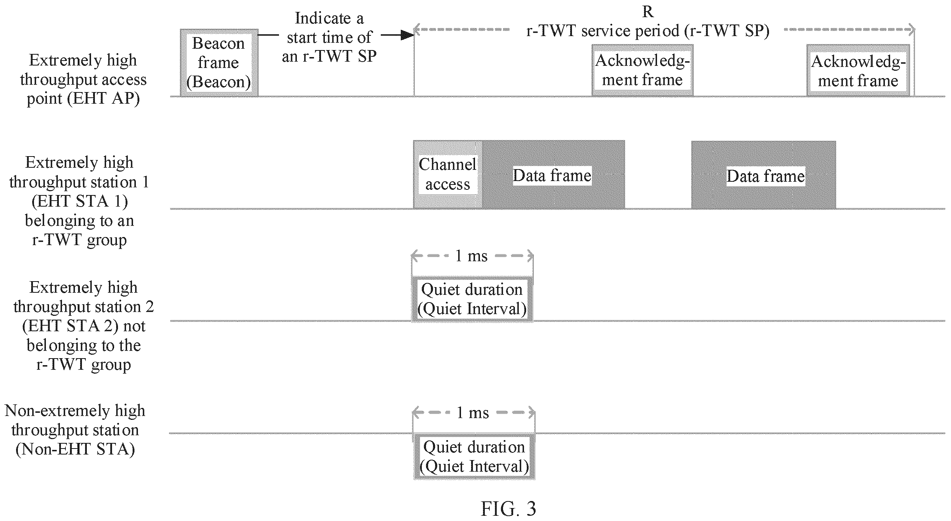

In an implementation example, in an EHT scenario in FIG. 3, it is assumed that STAs in a BSS in which an extremely high throughput access point (EHT AP) is located include an extremely high throughput station 1 (EHT STA 1), an extremely high throughput station 2 (EHT STA 2), a non-extremely high throughput station (Non-EHT STA), and the like.

As shown in FIG. 3, a beacon frame (Beacon) sent by the EHT AP through broadcast carries one or more pieces of r-TWT SP information, and the r-TWT SP information may include a start time and duration. The "start time" indicates a start time of an r-TWT SP, and the "duration" indicates duration (denoted as k) of the r-TWT SP.

In addition, the AP may set a quiet interval (Quiet Interval) aligned with the start time of the r-TWT SP in the beacon (Beacon). In the example in FIG. 3, a value of the duration is 1 millisecond (ms). Based on the setting of the quiet interval, the AP requires that an EHT STA belonging to an r-TWT SP group (grouped by using a broadcast TWT ID) may ignore the quiet interval, and contend for a channel after the r-TWT SP starts. Other STAs need to keep quiet based on the quiet interval. This reduces a quantity of STAs that contend for the channel in the BSS, and increases a probability of obtaining the channel by an EHT STA with low-latency traffic.

Optionally, for the EHT STA, after the EHT STA in the BSS receives any piece of r-TWT SP information broadcast by the AP, if ".11 restricted target wake time option implemented (dot11RestrictedTWTOptionImplemented)" of the STA is set to true, the EHT STA shall terminate its transmission opportunity (Transmission Opportunity, TXOP) before the start time of the r-TWT SP.

It should be noted that the parameter "dot11RestrictedTWTOptionImplemented" is a term in a management information base (management information base, MIB) in the IEEE 802.11 standard, and the parameter indicates whether the station implements the R-TWT feature. In the parameter "dot11RestrictedTWTOptionImplemented", "dot11" means ".11" in "802.11", "RestrictedTWT" is a name of the feature (that is, the restricted target wake time), and "OptionImplemented" means an optional implementation.

For example, if the EHT STA 1 shown in FIG. 3 is an extremely high throughput station in the r-TWT group, the EHT STA 1 may terminate the TXOP at the start time of the r-TWT SP, perform channel access within the duration "k" shown in FIG. 3, and exchange a data frame and an acknowledgment frame with the EHT AP.

For another example, if the EHT STA 2 shown in FIG. 3 is not an extremely high throughput station in the r-TWT group, the EHT STA 1 may terminate the TXOP at the start time of the r-TWT SP, and may be quiet within the quiet duration "1 ms" shown in FIG. 3 based on the quiet interval in the beacon frame.

For another example, because the non-EHT STA shown in FIG. 3 cannot correctly parse the r-TWT SP information in the beacon frame, the non-EHT STA is quiet within the quiet duration "1 ms" shown in FIG. 3 based on the quiet interval in the beacon frame.

It can be learned based on the implementation example shown in FIG. 3 that, the probability of obtaining the channel by the EHT STA (that is, the EHT STA 1) with low-latency traffic is increased by reducing the quantity of STAs that contend for the channel in the BSS.

For example, the r-TWT SP information in the beacon frame shown in FIG. 3 may be carried in a TWT element field.

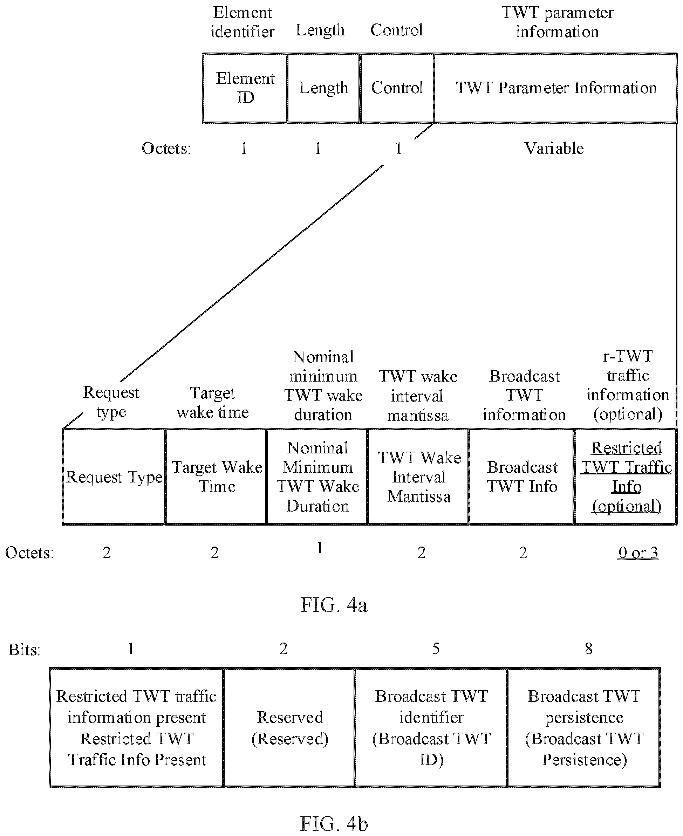

Optionally, an implementation of the TWT element field may be implemented by using a frame format shown in FIG. 4a. As shown in FIG. 4a, the TWT element field includes the following fields:
element identifier (Element ID), length (Length), control (Control), and TWT parameter information (TWT Parameter Information).

Further, optionally, the TWT parameter information includes the following fields:
request type (Request Type), target wake time (Target Wake Time), nominal minimum TWT wake duration (Nominal Minimum TWT Wake Duration), TWT wake interval mantissa (TWT Wake Interval Mantissa), broadcast TWT information (Broadcast TWT Info), r-TWT traffic information (optional), and (Restricted TWT) (optional).

Further, optionally, fields included in the broadcast TWT information (Broadcast TWT Info) are shown in FIG. 4b, including:
restricted TWT traffic information subfield present indication (Restricted TWT Traffic Info Present), reserved (Reserved), broadcast TWT identifier (Broadcast TWT ID), and broadcast TWT persistence (Broadcast TWT Persistence).

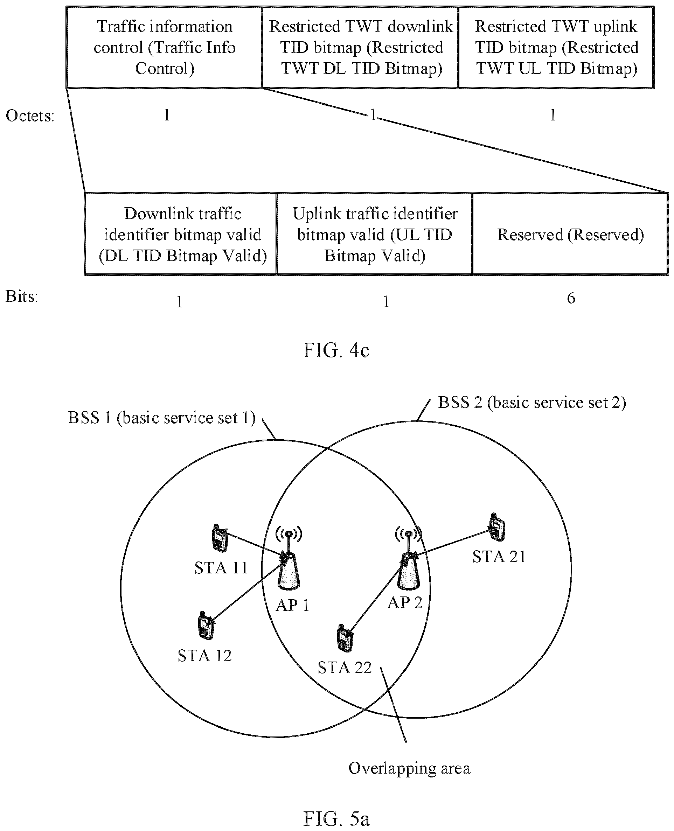

Further, optionally, the fields included in the r-TWT traffic information (Restricted TWT) are shown in FIG. 4c, including:
traffic information control (Traffic Info Control), restricted TWT downlink TID bitmap (Restricted TWT DL Bitmap), and restricted TWT uplink TID bitmap (Restricted TWT UL Bitmap).

The traffic information control (Traffic Info Control) includes the following fields:
downlink traffic identifier bitmap valid (DL TID Bitmap Valid), uplink traffic identifier bitmap valid (UL TID Bitmap Valid), and reserved (Reserved).

Optionally, broadcast target wake time information subfield information in the TWT element field shown in FIG. 4b includes a one-bit restricted TWT traffic information subfield present indication subfield (Restricted TWT Traffic Info Present). A value 1 of the bit indicates that the TWT element field includes the r-TWT traffic information subfield shown in FIG. 4c, and a value 0 of the bit indicates that the TWT element field does not include the r-TWT traffic information subfield shown in FIG. 4c.

Optionally, in FIG. 4b, the broadcast TWT identifier (Broadcast TWT ID) subfield indicates an identifier of a TWT group.

It should be understood that in the frame formats shown in FIG. 4a to FIG. 4c, values of quantities of octets (or quantities of bits) of different fields and an order of the different fields are not limited in this application. The values of quantities of octets (or quantities of bits) of the different fields in the frame formats shown in FIG. 4a to FIG. 4c and the order of the different fields are merely an implementation example. The values of quantities of octets (or quantities of bits) of the different fields in the frame formats shown in FIG. 4a to FIG. 4c may alternatively be other values, and the order of the different fields in the frame formats shown in FIG. 4a to FIG. 4c may alternatively be another field order. This is not limited herein. In addition, the different fields in the frame formats shown in FIG. 4a to FIG. 4c may be independently implemented.

It can be learned from the foregoing implementation example that, in an implementation process of the r-TWT mechanism, an access point (access point, AP) may send one or more pieces of restricted target wake time service period (restricted target wakeup time service period, r-TWT SP) information by using a management frame. For a station (station, STA) that supports the r-TWT mechanism, a transmission opportunity (transmission opportunity, TXOP) needs to be terminated before a start time indicated by the r-TWT SP information. In addition, a STA that is not scheduled by using the r-TWT SP information needs to be quiet after the start time, but a STA that is scheduled by using the r-TWT SP information may initiate channel contention after the start time. In other words, the r-TWT SP information is used to restrict channel access of the unscheduled STA, to increase a probability of obtaining a channel by the scheduled STA. For example, in an implementation process shown in FIG. 3, to ensure transmission of low-latency traffic of some STAs (that is, the EHT STA 1), channel access of other STAs (that is, the EHT STA 2 and the non-EHT STA) in this BSS is restricted.

However, within a reachable communication range of the AP, some STAs may not be managed by the management frame sent by the AP. Consequently, the scheduled STA may still be affected by contention of those STAs. However, in the foregoing implementation process, channel access of an outer cell (or an outer BSS) is not restricted. Therefore, a transmission opportunity obtained by using the r-TWT for low-latency traffic is still affected by contention of the outer cell.

Therefore, how to increase a success rate of obtaining a channel by a STA scheduled by using the r-TWT mechanism is an urgent technical problem to be resolved.

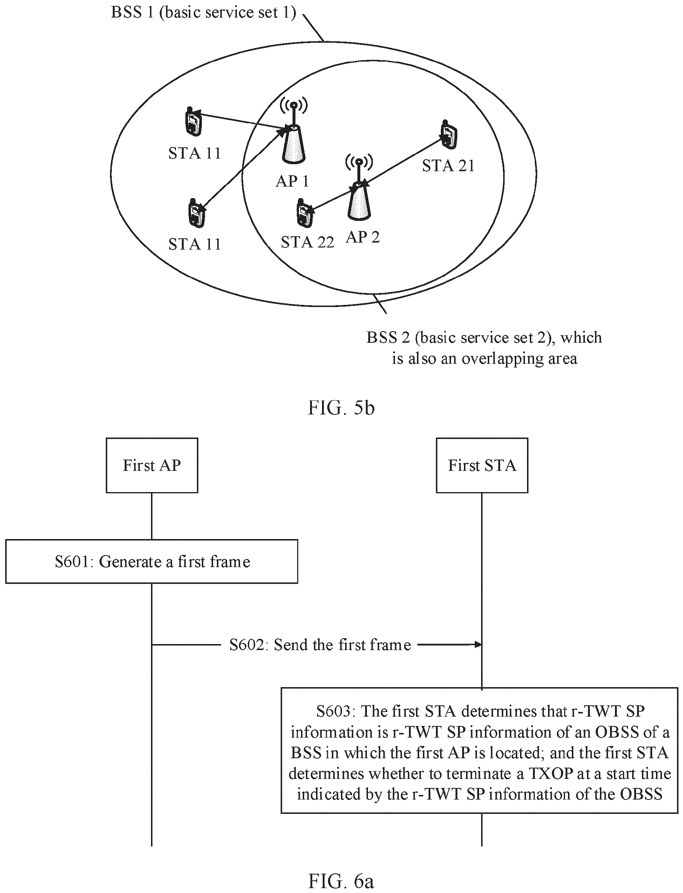

The following first describes an overlapping basic service set (overlapping basic service set, OBSS) in this application by using implementation processes shown in FIG. 5a and FIG. 5b.

In a possible implementation, the overlapping basic service set is a basic service set (basic service set, BSS) working on a same channel as a basic service set of a station and within (partly or wholly) a basic service area of the basic service set of the station. (Overlapping basic service set (OBSS): Abasic service set (BSS) operating on the same channel as the station's (STA's) BSS and within (either partly or wholly) its basic service area (BSA)). BSSs with this feature are OBSSs of each other. A basic service area is an area containing members of a basic service set. It may contain members of other BSSs. (Basic service area (BSA): The area containing the members of a basic service set (BSS). It might contain members of other BSSs).

In other words, when a basic service area of a BSS overlaps a basic service area of another BSS, the BSS may be referred to as an OBSS of the another BSS, and the another BSS may also be referred to as an OBSS of the BSS. It may be understood that the overlapping herein may mean that a basic service area of one BSS partially overlaps or includes a basic service area of another BSS, that is, a basic service area of one BSS falls within a basic service area of another BSS.

The following further describes the OBSS by using scenarios shown in FIG. 5a and FIG. 5b as examples. In FIG. 5a and FIG. 5b, it is assumed that a shape of a basic service area of a BSS (including a BSS 1 and a BSS 2) is a circle. It may be understood that the basic service area of the BSS may also be a rectangle, an ellipse, or another regular or irregular shape. Herein, only a circle is used as an example for description.

For example, as shown in FIG. 5a, FIG. 5a is a diagram in which an OBSS is formed when one BSS overlaps another BSS. In FIG. 5a, an AP 1, a STA 11, and a STA 12 belong to the BSS 1, and the STA 11 and the STA 12 are both associated with the AP 1; and an AP 2, a STA 21, and a STA 22 belong to the BSS 2, and the STA 21 and the STA 22 are both associated with the AP 2. In FIG. 5a, a basic service area of the BSS 1 overlaps a basic service area of the BSS 2, that is, there is an "overlapping area" in FIG. 5a. In this case, the BSS 1 may be referred to as an OBSS of the BSS 2, and the BSS 2 may also be referred to as an OBSS of the BSS 1.

For another example, as shown in FIG. 5b, FIG. 5b is a diagram in which an OBSS is formed when one BSS includes another BSS. In FIG. 5b, an AP 1, a STA 11, and a STA 12 belong to the BSS 1, and the STA 11 and the STA 12 are both associated with the AP 1; and an AP 2, a STA 21, and a STA 22 belong to the BSS 2, and the STA 21 and the STA 22 are both associated with the AP 2. In FIG. 5b, a basic service area of the BSS 1 overlaps a basic service area of the BSS 2, that is, the "BSS 2 (basic service set 2) is also an overlapping area" in FIG. 5b. In this case, the BSS 1 may be referred to as an OBSS of the BSS 2, and the BSS 2 may also be referred to as an OBSS of the BSS 1.

It should be noted that, in FIG. 5a and FIG. 5b, an example in which two BSSs are OBSSs of each other is used for description. In actual application, if at least two BSSs overlap (partially overlap as shown in FIG. 5a or completely overlap as shown in FIG. 5b) each other, the at least two BSSs may also be referred to as OBSSs of each other. For ease of description, in this embodiment and subsequent embodiments, only an example in which two BSSs are referred to as OSSs of each other is used. It may be understood that when there is an OBSS relationship between a plurality of BSSs, an AP or a STA in any one of the plurality of BSSs may also perform the method in any embodiment of this application. For details, refer to descriptions in embodiments of this application. Details are not described herein.

The foregoing technical problem is further described herein by using an implementation scenario shown in FIG. 5a as an example.

In FIG. 5a, based on a scheduling process of the foregoing r-TWT mechanism, the AP 1 may restrict channel access of an unscheduled STA (the STA 11 is used as an example) by carrying r-TWT information in a beacon frame, to increase a probability of obtaining a channel by a scheduled STA (the STA 12 is used as an example). However, because the STA 22 is located in the BSS 1, but the STA 22 is associated with the AP 2 in the BSS 2, the STA 22 cannot identify the r-TWT information carried in the beacon frame of the AP 1, and the STA 22 may still perform channel access at a start time and within duration in the r-TWT information. In other words, within a reachable communication range of the AP 1, some STAs (that is, the STA 22) may not be managed by the beacon frame sent by the AP. Consequently, the scheduled STA (STA 12) may still be affected by contention of those STAs.

To resolve the foregoing technical problem, this application provides a communication method and apparatus to reduce impact of channel contention of a first STA on a scheduled STA in an OBSS by restricting channel access of the first STA in a BSS in which a first AP is located, so as to increase a success rate of obtaining a channel by the scheduled STA in the OBSS.

It should be noted that, for a frame sent by an AP, a STA associated with the AP parses the frame sent by the AP, but a STA not associated with the AP generally does not parse the frame sent by the AP. However, in the following embodiments, a frame (for example, a fifth frame mentioned later) sent by an AP may need to be parsed by a STA that is not associated with the AP. For example, in FIG. 5a, a frame sent by the AP 1 may need to be parsed by the STA 22. The following uses several examples to describe how to enable a STA that is not associated with an AP to parse a frame sent by the AP.

In an implementation, a plurality of APs establish one AP group. There are many different procedures for establishing an AP group. The following provides only an example of a procedure for establishing an AP group, and this embodiment is not limited to this establishment manner.

For example, an initiator (initiator) AP (for example, the AP 1 in FIG. 5a) first broadcasts or unicasts an AP group establishment frame, and provides an AP group ID, a member of a current AP group, a joining condition, and the like. Another AP (for example, the AP 2 in FIG. 5a) that receives the AP group establishment frame may send a request frame, requesting to join the AP group. After the initiator AP replies with an acknowledgment frame, the AP 2 successfully joins the AP group.

For another example, based on strength of a signal received by the AP 1 from the AP 2 (higher signal strength indicates stronger interference) or a report of an associated STA about a neighboring AP, the AP 1 uses several APs with strong interference as an AP group, and then broadcasts information about the AP group to the associated STA. In this way, the associated STA receives a management frame that carries R-TWT information and that is sent by an AP belonging to the AP group.

In another implementation, there is no need to establish an AP group, that is, all STAs shall forcibly parse a frame (for example, a beacon frame) sent by all APs (including an associated AP and a non-associated AP).

It should be understood that, in another implementation, a frame sent by an AP may be parsed by a STA that is not associated with the AP. This is not limited herein.

The communication method provided in this application is hereinafter further described with reference to the accompanying drawings.

FIG. 6a is a diagram of a communication method according to this application. The method includes the following steps.

S601: A first AP generates a first frame.

In an embodiment, the first AP generates the first frame in step S601. The first frame includes restricted target wake time service period r-TWT SP information and first indication information, the first indication information indicates that the r-TWT SP information is r-TWT SP information of an OBSS of a BSS in which the first AP is located, and the r-TWT SP information of the OBSS indicates whether a first STA is to terminate a TXOP at a start time indicated by the r-TWT SP information of the OBSS. The first STA is a STA in the BSS in which the first AP is located.

In a possible implementation, before the first AP generates the first frame in step S601, the method further includes: the first AP receives a second frame from an AP in the OBSS of the BSS in which the first AP is located, where the second frame includes information related to the r-TWT SP information; and that the first AP generates the first frame in step S601 includes: the first AP generates the first frame based on the information related to the r-TWT SP information.

Optionally, the information related to the r-TWT SP information and included in the second frame may include a part of the r-TWT SP information included in the first frame.

Optionally, the information related to the r-TWT SP information and included in the second frame may include an entirety of the r-TWT SP information included in the first frame.

Specifically, the first AP may generate the first frame based on the information related to the r-TWT SP information and included in the second frame from the AP in the OBSS of the BSS in which the first AP is located, where the information related to the r-TWT SP information and included in the second frame may indicate the start time, duration, or other information, so that the first AP generates the first frame based on the information related to the r-TWT SP information.

Optionally, before step S601, the first AP may further obtain the second frame in another manner. For example, the first AP receives the second frame from an access controller (access controller, AC), where the AC may be a controller of the first AP and the AP in the OBSS. For another example, the first AP generates the second frame and sends the second frame to the AP in the OBSS, where the first AP may be a controller of the AP in the OBSS.

S602: The first AP sends the first frame.

In this embodiment, after the first AP generates the first frame in step S601, the first AP sends the first frame to the first STA in step S602. Correspondingly, the first STA receives the first frame in step S602.

S603: The first STA determines that the r-TWT SP information is the r-TWT SP information of the OBSS of the BSS in which the first AP is located; and the STA determines whether the first STA is to terminate the TXOP at the start time indicated by the r-TWT SP information.

In this embodiment, after the first STA receives the first frame in step S602, the first STA determines, in step S603 based on the first indication information, that the r-TWT SP information is the r-TWT SP information of the OBSS of the BSS in which the first AP is located. In step S603, the first STA further determines, based on the r-TWT SP information of the OBSS, whether the first STA is to terminate the TXOP at the start time indicated by the r-TWT SP information of the OBSS.

In a possible implementation, the r-TWT SP information of the OBSS further indicates whether the first STA is to be quiet during a quiet interval (Quiet Interval) corresponding to the r-TWT SP information.

Optionally, this implementation may be further expressed as "the r-TWT SP information and the first indication information further indicate whether the first STA is to ignore the quiet interval corresponding to the r-TWT SP information".

Specifically, the r-TWT SP information of the OBSS indicates whether the first STA is to terminate the TXOP at the start time indicated by the r-TWT SP information of the OBSS, to restrict channel access of the first STA at the start time; and the r-TWT SP information of the OBSS further indicates whether the first STA is to be quiet during the quiet interval corresponding to the r-TWT SP information of the OBSS, to restrict channel access of the first STA during the quiet interval. Therefore, impact of channel contention of the first STA on a scheduled STA in the OBSS is further reduced, so that a success rate of obtaining a channel by the scheduled STA in the OBSS is increased.

In a possible implementation, the first frame includes a TWT element, and the r-TWT SP information and the first indication information are located in the TWT element. For an implementation process of the TWT element, refer to the foregoing implementation example shown in FIG. 4a. Details are not described herein again.

Optionally, in the first frame, the TWT element further includes a TWT setup command field located in a request type subfield of a broadcast TWT information field, and a value indication of the TWT setup command field is "accept TWT". Specifically, after the first STA receives the first frame in step S602, because the value indication of the TWT setup command field included in the TWT element of the first frame is "accept TWT", the first STA determines that the first STA needs to accept an r-TWT SP indicated by the r-TWT SP information of the OBSS.

As shown in FIG. 4a, a TWT parameter information field included in the TWT element includes a plurality of subfields. The following uses an example in which the first indication information is located in a broadcast TWT information field or an r-TWT traffic information field for description.

In an implementation, the first indication information may be located in the broadcast TWT information field.

Specifically, when the first indication information is located in the broadcast TWT information field, the following is met:
the first indication information is located in a broadcast TWT identifier field in the broadcast TWT information field; or
the first indication information is located in a reserved field in the broadcast TWT information field; or
the first indication information is located in a reserved field in the broadcast TWT information field, and a broadcast TWT identifier field in the broadcast TWT information field is the reserved field.

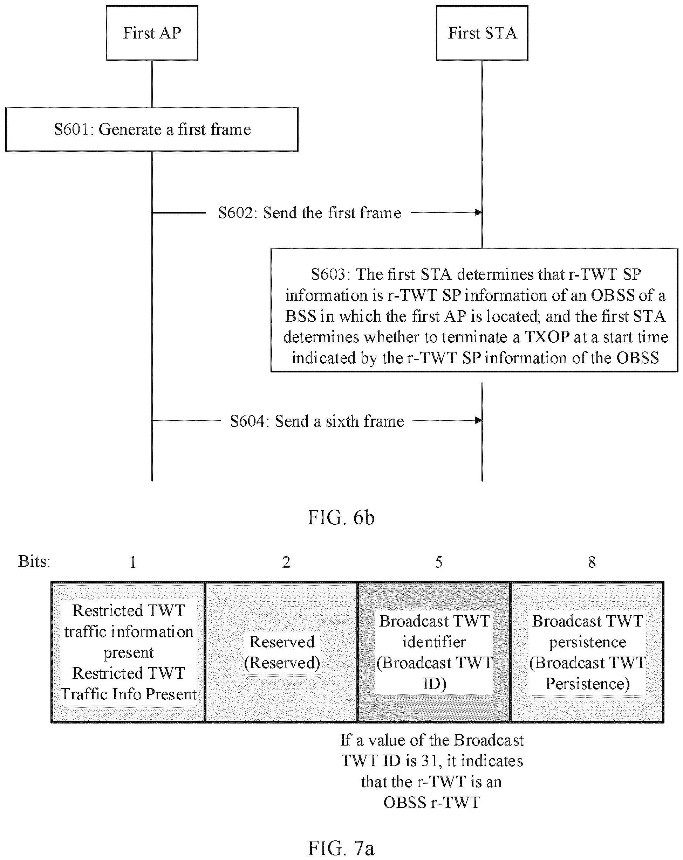

An implementation example is shown in FIG. 7a. In a broadcast TWT information (Broadcast TWT Info) subfield, a special broadcast TWT identifier (Broadcast TWT ID) value is used to indicate that the r-TWT SP is the r-TWT SP information of the OBSS.

Optionally, if the value of the broadcast TWT identifier (Broadcast TWT ID) is 31, it indicates that the r-TWT is an OBSS r-TWT.

In addition, to protect the OBSS r-TWT SP information, the AP may set a quiet interval (Quiet Interval) in the first frame, and a start time of the quiet interval (Quiet Interval) shall be aligned with the start time indicated by the r-TWT SP information of the OBSS. Then an associated STA receiving the r-TWT SP information of the OBSS that is sent by the AP in step S602 shall (shall) terminate its TXOP before the start time indicated by the r-TWT SP information of the OBSS. If the AP sets the quiet interval (Quiet Interval) corresponding to the r-TWT SP information of the OBSS, the STA associated with the AP shall respect a channel access rule of the quiet interval (Quiet Interval), that is, is not allowed to access a channel during the quiet interval (Quiet Interval).

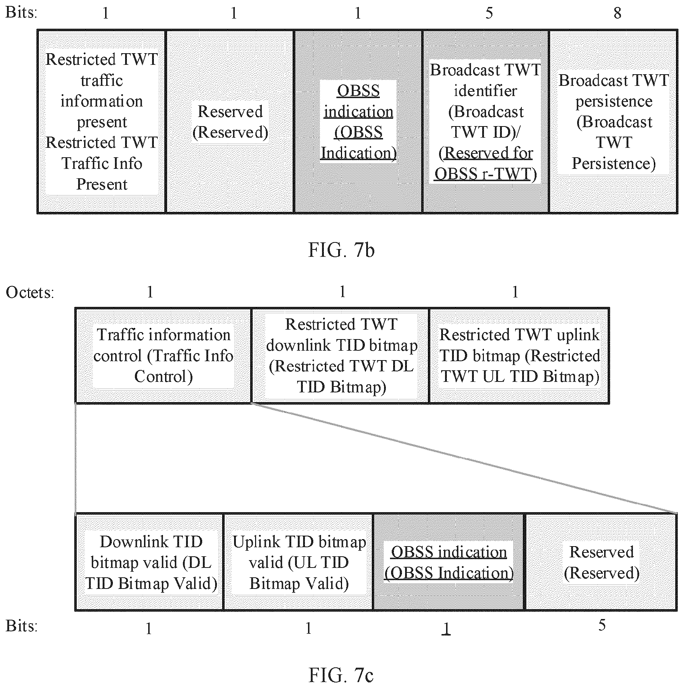

Another implementation example is shown in FIG. 7b. In a broadcast TWT information (Broadcast TWT Info) subfield, one original reserved bit (Reserved) is changed to an OBSS indication (OBSS Indication) subfield. If a value of the OBSS indication (OBSS Indication) subfield is 1, it indicates that the r-TWT is an OBSS r-TWT, and in this case, the broadcast TWT identifier (Broadcast TWT ID) is changed to reserved (Reserved). Conversely, if the value of the OBSS indication (OBSS Indication) subfield is 0, the r-TWT SP is still an r-TWT SP of this cell (or this BSS), and therefore the broadcast TWT ID still needs to be carried.

In addition, to protect the OBSS r-TWT SP, the AP may set a quiet interval (Quiet Interval) in the first frame, and a start time of the quiet interval (Quiet Interval) shall be aligned with the start time indicated by the r-TWT SP information of the OBSS. Then, in step S602, a processing rule of an associated STA receiving the r-TWT SP information of the OBSS that is sent by the AP is the same as that in the implementation shown in FIG. 7a, and details are not described herein again.

In another implementation, the first indication information may be located in the r-TWT traffic information field.

As shown in FIG. 7c, in a traffic information control subfield (Traffic Info Control) of the r-TWT traffic information field (Restrict TWT Traffic Info), one original reserved bit (Reserved) is changed to an OBSS indication (OBSS Indication). If a value of the OBSS indication (OBSS Indication) subfield is 1, it indicates that the r-TWT is an OBSS r-TWT, and in this case, the broadcast TWT identifier (Broadcast TWT ID) is changed to reserved (Reserved). Conversely, if the value of the OBSS indication (OBSS Indication) subfield is 0, the r-TWT SP is still an r-TWT SP of this cell, and therefore the broadcast TWT ID still needs to be carried.

In addition, to protect the OBSS r-TWT SP, the AP may set a quiet interval (Quiet Interval) in the first frame, and a start time of the quiet interval (Quiet Interval) shall be aligned with the start time indicated by the r-TWT SP information of the OBSS. Then, in step S602, a processing rule of an associated STA receiving the r-TWT SP information of the OBSS that is sent by the AP is the same as that in the implementation shown in FIG. 7a, and details are not described herein again.

It should be understood that in the frame formats shown in FIG. 7a to FIG. 7c, values of quantities of octets (or quantities of bits) of different fields and an order of the different fields are not limited in this application. The values of quantities of octets (or quantities of bits) of the different fields in the frame formats shown in FIG. 7a to FIG. 7c and the order of the different fields are merely an implementation example. The values of quantities of octets (or quantities of bits) of the different fields in the frame formats shown in FIG. 7a to FIG. 7c may alternatively be other values, and the order of the different fields in the frame formats shown in FIG. 7a to FIG. 7c may alternatively be another field order. This is not limited herein. In addition, the different fields in the frame formats shown in FIG. 7a to FIG. 7c may be independently implemented.

In a possible implementation, as described in the implementations shown in FIG. 7a to FIG. 7c, the first frame may further include a quiet element, and a start time of a quiet interval indicated by the quiet element is the same as the start time indicated by the r-TWT SP information.

Optionally, the quiet element is located in another frame different from the first frame. For example, the another frame carrying the quiet element may include a beacon frame, a probe response frame, or a frame specially used to carry the quiet element.

Optionally, one or more frames sent by the first AP may include a plurality of quiet elements, and a start time of a quiet interval indicated by one quiet element (denoted as a first quiet element for ease of description) in the plurality of quiet elements is the same as the start time indicated by the r-TWT SP information.

Optionally, if the first STA supports an r-TWT mechanism, after step S602, the first STA may determine that the first quiet element is a quiet element corresponding to the r-TWT SP information carried in the first frame. Therefore, the first STA knows that when the first STA is quiet based on the first quiet element, a purpose of being quiet is to reduce the impact of channel contention of the first STA on the scheduled STA in the OBSS.

Optionally, if the first STA does not support the r-TWT mechanism, that is, if the first STA is a conventional (legacy) STA, after step S602, the first STA may be quiet based on the first quiet element, to reduce the impact of channel contention of the first STA on the scheduled STA in the OBSS.

Optionally, the first frame sent by the first AP in step S602 is a management frame. For example, the first frame is a beacon (Beacon) frame or a probe response (Probe Response) frame.

In a possible implementation, the first frame sent by the first AP in step S602 further includes second indication information, the second indication information includes n fields, and n is greater than or equal to 1; and field locations of the n fields indicate a traffic identifier (traffic identifier, TID), and values of the n fields indicate the first STA to perform, according to one of the following, traffic corresponding to the TID, where the following includes:
the first STA does not need to terminate the TXOP at the start time indicated by the r-TWT SP information of the OBSS and does not need to be quiet during the quiet interval corresponding to the r-TWT SP information of the OBSS; or
the first STA is to terminate the TXOP at the start time indicated by the r-TWT SP information of the OBSS and does not need to be quiet during the quiet interval corresponding to the r-TWT SP information of the OBSS; or
the first STA is to terminate the TXOP at the start time indicated by the r-TWT SP information of the OBSS and is to be quiet during the quiet interval corresponding to the r-TWT SP information of the OBSS.

Specifically, when the first frame sent by the first AP in step S602 further includes the second indication information, where the second indication information indicates that channel access of the first STA at the start time indicated by the r-TWT SP information of the OBSS and channel access of the first STA during the quiet interval corresponding to the r-TWT SP information of the OBSS are not necessarily restricted when the traffic corresponding to the TID is performed by the first STA. Therefore, based on an implementation of the second indication information in the second frame, the first STA in the BSS in which the first AP is located does not need to be restricted by the r-TWT SP information of the OBSS in a process of performing traffic corresponding to some TIDs, to ensure that traffic (for example, high-priority traffic or traffic requiring a low latency) of the first STAin the BSS in which the first AP is located is performed.

Optionally, the TWT element includes an r-TWT traffic information field; and the second indication information is located in an r-TWT downlink TID bitmap subfield and/or an r-TWT uplink TID bitmap subfield in the r-TWT traffic information field. In other words, the second indication information reuses the r-TWT downlink TID bitmap subfield and/or the r-TWT uplink TID bitmap subfield in the r-TWT traffic information field.

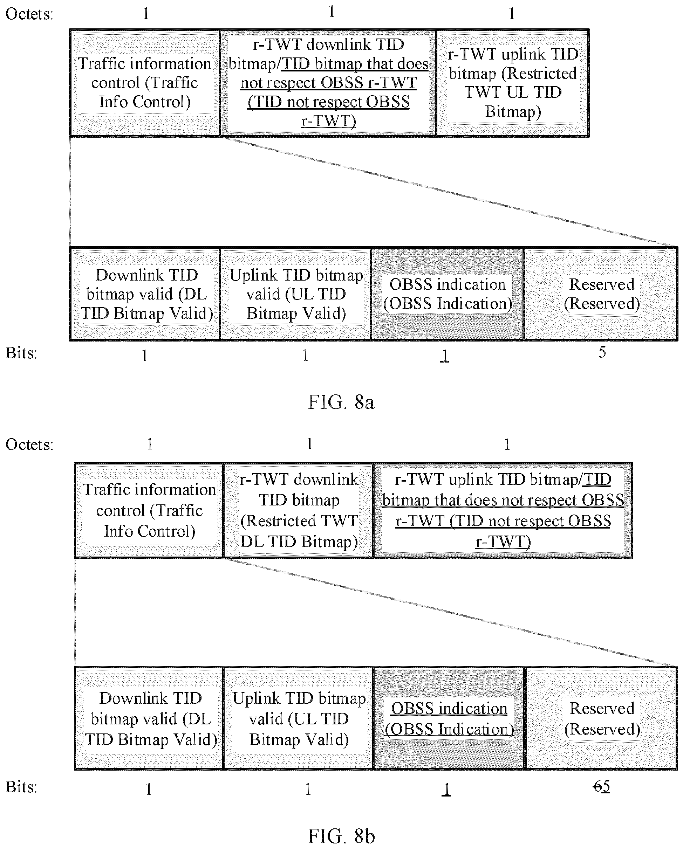

The following uses implementations shown in FIG. 8a to FIG. 9b as implementation examples to describe a case in which the second indication information is located in the r-TWT traffic information field in the TWT element.

Optionally, when the second indication information is located in the r-TWT traffic information field, the second indication information may also be located in another newly defined position in the r-TWT traffic information field, and there is no need to reuse the r-TWT downlink TID bitmap subfield and/or the r-TWT uplink TID bitmap subfield. In the following examples shown in FIG. 8a to FIG. 9b, only a case in which the second indication information reuses the r-TWT downlink TID bitmap subfield and/or the r-TWT uplink TID bitmap subfield in the r-TWT traffic information field is used as an example for description.

In an implementation example, when the values of the n fields indicate that the traffic corresponding to the TID is performed by the first STA, if a case in which the first STA does not need to terminate the TXOP at the start time indicated by the r-TWT SP information and does not need to be quiet during the quiet interval corresponding to the r-TWT SP information (denoted as case 1 for ease of description) is met, in the following description of case 1, an example in which the second indication information is named "TID bitmap that does not respect OBSS r-TWT (TID not respect OBSS r-TWT)" is used for description.

Optionally, an implementation example of case 1 is shown in FIG. 8a. In FIG. 8a, the original "r-TWT downlink TID bitmap subfield" is changed to the "TID bitmap that does not respect OBSS r-TWT (TID not respect OBSS r-TWT)" subfield when the value of the OBSS indication (OBSS Indication) subfield is 1, where a value of an n^{th} bit is 1, indicating that TID n may not respect the OBSS r-TWT, that is, the first STA is allowed not to terminate the TXOP before the start time of the OBSS r-TWT when performing TID n, and does not need to be quiet during the quiet interval (Quiet Interval) corresponding to the OBSS r-TWT. This rule is applicable to all EHT STAs that support the r-TWT in this BSS.

Optionally, another implementation example of case 1 is shown in FIG. 8b. The implementation in FIG. 8b is similar to that in FIG. 8a, and a difference lies in that the original "r-TWT uplink TID bitmap subfield" is changed to the "TID bitmap that does not respect OBSS r-TWT (TID not respect OBSS r-TWT)" subfield when the value of the OBSS indication (OBSS Indication) subfield is 1.

In another implementation example, when the values of the n fields indicate that the traffic corresponding to the TID is performed by the first STA, if a case in which the first STA is to terminate the TXOP at the start time indicated by the r-TWT SP information and is to be quiet during the quiet interval corresponding to the r-TWT SP information (denoted as case 2 for ease of description) is met, in the following description of case 2, an example in which the second indication information is named "TID bitmap that respects OBSS r-TWT (TID respect OBSS r-TWT)" is used for description.

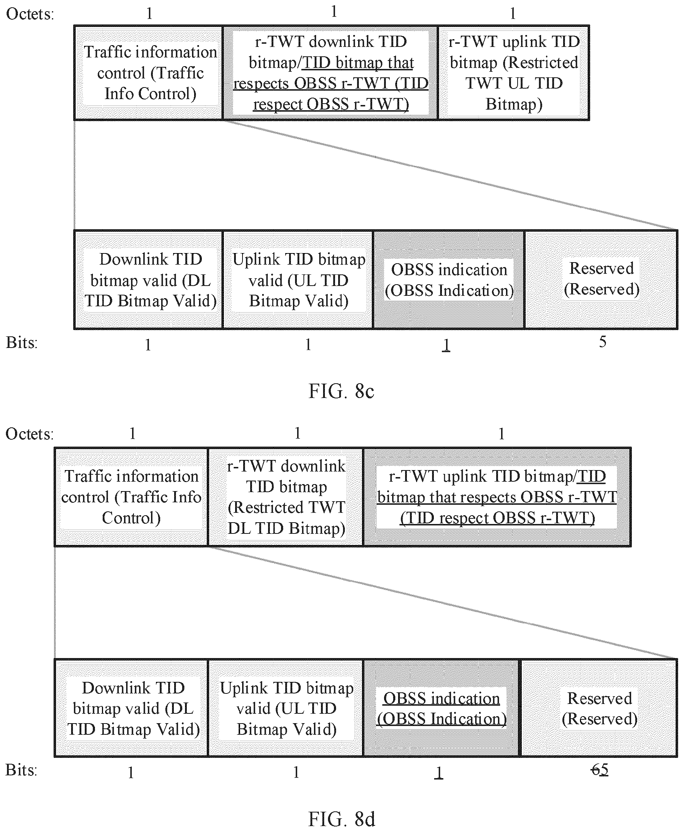

Optionally, an implementation example of case 2 is shown in FIG. 8c. In FIG. 8c, the original "r-TWT downlink TID bitmap subfield" is changed to the "TID bitmap that respects OBSS r-TWT (TID respect OBSS r-TWT)" subfield when the value of the OBSS indication (OBSS Indication) subfield is 1, where a value of an n^{th} bit is 1, indicating that the first STA needs to respect the OBSS r-TWT when performing TID n, that is, when performing TID n, the first STA needs to terminate the TXOP before the start time of the OBSS r-TWT and needs to be quiet during the quiet interval (Quiet Interval) corresponding to the OBSS r-TWT. This rule is applicable to all EHT STAs that support the r-TWT in this BSS.

Optionally, another implementation example of case 2 is shown in FIG. 8d. The implementation in FIG. 8d is similar to that in FIG. 8c, and a difference lies in that the original "r-TWT uplink TID bitmap subfield" is changed to the "TID bitmap that respects OBSS r-TWT (TID respect OBSS r-TWT)" subfield when the value of the OBSS indication (OBSS Indication) subfield is 1.

It should be understood that in the frame formats shown in FIG. 8a to FIG. 8d, values of quantities of octets (or quantities of bits) of different fields and an order of the different fields are not limited in this application. The values of quantities of octets (or quantities of bits) of the different fields in the frame formats shown in FIG. 8a to FIG. 8d and the order of the different fields are merely an implementation example. The values of quantities of octets (or quantities of bits) of the different fields in the frame formats shown in FIG. 8a to FIG. 8d may alternatively be other values, and the order of the different fields in the frame formats shown in FIG. 8a to FIG. 8d may alternatively be another field order. This is not limited herein. In addition, the different fields in the frame formats shown in FIG. 8a to FIG. 8d may be independently implemented.

In another implementation example, when the values of the n fields indicate that the traffic corresponding to the TID is performed by the first STA, if a case in which the first STA is to terminate the TXOP at the start time indicated by the r-TWT SP information and does not need to be quiet during the quiet interval corresponding to the r-TWT SP information (denoted as case 3 for ease of description) is met, in case 3, an implementation of the second indication information may be a joint indication based on the foregoing case 1 and case 2.

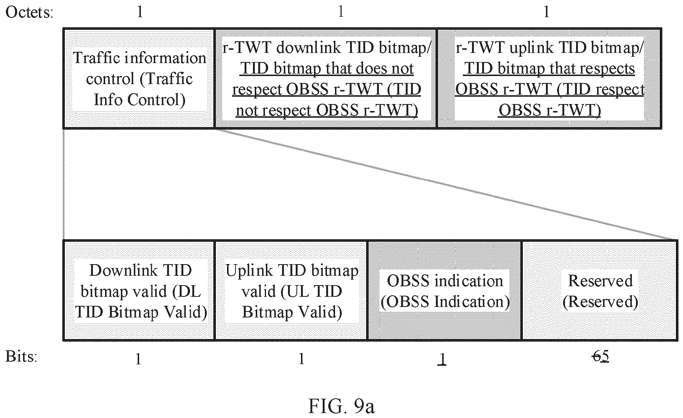

Optionally, an implementation example of case 3 is shown in FIG. 9a. In FIG. 9a, an example in which the second indication information is named "TID bitmap that does not respect OBSS r-TWT (TID not respect OBSS r-TWT) and TID bitmap that respects OBSS r-TWT (TID respect OBSS r-TWT)" is used for description.

In FIG. 9a, the original "r-TWT downlink TID bitmap subfield" is changed to "TID bitmap that does not respect OBSS r-TWT (TID bitmap not respect OBSS r-TWT) when the value of the OBSS indication (OBSS Indication) subfield is 1, and the original "r-TWT uplink TID bitmap subfield" is changed to the "TID bitmap that respects OBSS r-TWT (TID respect OBSS r-TWT)" subfield when the value of the OBSS indication (OBSS Indication) subfield is 1.

In FIG. 9a, when an n^{th} bit in "TID not respect OBSS r-TWT" is set to 1, it indicates that when the first STA performs the corresponding TID n, the first STA does not need to terminate the TXOP before the start time of the OBSS r-TWT and does not need to be quiet during a quiet interval overlapping the OBSS r-TWT. In addition, a corresponding n^{th} bit in "TID not respect OBSS r-TWT" is no longer meaningful, and may be set to 0 or 1, or may be defined as reserved.

In FIG. 9a, when the n^{th} bit in "TID not respect OBSS r-TWT" is set to 0, a behavior of TID n corresponding to the bit needs to be determined with reference to the setting of the n^{th} bit in "TID respect OBSS r-TWT".

For example, when the n^{th} bit in "TID not respect OBSS r-TWT" is set to 0, and the n^{th} bit in "TID respect OBSS r-TWT" is set to 1, it indicates that the first STA may share the OBSS r-TWT when performing TID n, that is, when performing TID n, the first STA shall terminate the TXOP before the start time of the OBSS r-TWT, and does not need to be quiet during the quiet interval (Quiet Interval) corresponding to the OBSS r-TWT.

For another example, when the n^{th} bit in "TID not respect OBSS r-TWT" is set to 0, and the n^{th} bit in "TID respect OBSS r-TWT" is set to 0, it indicates that the first STA shall protect the OBSS r-TWT when performing TID n, that is, when performing TID n, the first STA shall terminate the TXOP before the start time of the OBSS r-TWT and shall be quiet during the quiet interval (Quiet Interval) corresponding to the OBSS r-TWT.

Optionally, the rule shown in FIG. 9a is applicable to all EHT STAs that support the r-TWT in this BSS, or is applicable only to an EHT STA that supports the r-TWT.

Optionally, for ease of understanding, the following uses two examples to describe the implementation solution in FIG. 9a.

(1) When a value of the "TID not respect OBSS r-TWT" field is 10000000, it indicates that when the first STA performs traffic of TID 0, the first STA does not need to terminate the TXOP before the start time of the OBSS r-TWT and does not need to be quiet during the quiet interval corresponding to the OBSS r-TWT. Behaviors for traffic of TIDs 1 to 7 need to be determined with reference to the setting of the corresponding bit in "TID respect OBSS r-TWT".

(2) Further, when the "TID respect OBSS r-TWT" field is 01100000, it indicates that when the first STA performs traffic of TIDs 1 and 2, the first STA shall terminate the TXOP before the start time of the OBSS r-TWT but is allowed to share the OBSS r-TWT, that is, the first STA may not need to be quiet during the quiet interval corresponding to the OBSS r-TWT. When the first STA performs traffic corresponding to TIDs 3 to 7, the first STA shall terminate the TXOP before the start time of the OBSS r-TWT and shall be quiet during the quiet interval corresponding to the OBSS r-TWT.

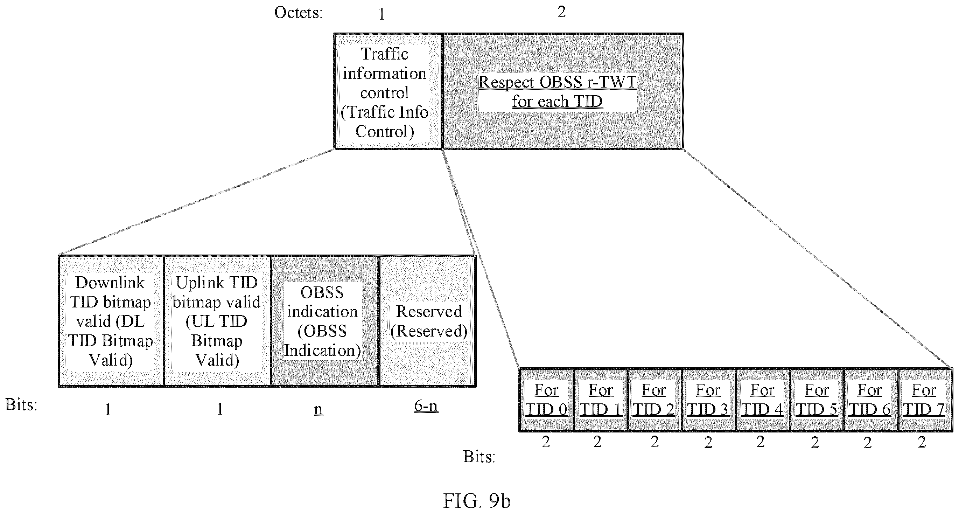

Optionally, another implementation example of case 3 is shown in FIG. 9b. In FIG. 9a, an example in which the second indication information is named "Respect OBSS r-TWT for each TID (Respect OBSS r-TWT for each TID)" is used for description.

In FIG. 9b, the r-TWT downlink TID bitmap subfield and the r-TWT uplink TID bitmap subfield are reused as the "Respect OBSS r-TWT for each TID" subfield, where the "Respect OBSS r-TWT for each TID" subfield is divided into eight pairs of bits, and every two bits correspond to one TID.

In an implementation, four values of two bits in the "Respect OBSS r-TWT for each TID" subfield are set as follows:
if the two bits are "00", that is, in a case of a value "0", it indicates that when the first STA performs the TID corresponding to the two bits in step S603, the first STA does not need to terminate the TXOP at the start time indicated by the r-TWT SP information and does not need to be quiet during the quiet interval corresponding to the r-TWT SP information;
if the two bits are "01", that is, in a case of a value " 1 ", it indicates that when the first STA performs the TID corresponding to the two bits in step S603, the first STA is to terminate the TXOP at the start time indicated by the r-TWT SP information and does not need to be quiet during the quiet interval corresponding to the r-TWT SP information;
if the two bits are " 10", that is, in a case of a value "2", it indicates that when the first STA performs the TID corresponding to the two bits in step S603, the first STA is to terminate the TXOP at the start time indicated by the r-TWT SP information and is to be quiet during the quiet interval corresponding to the r-TWT SP information; or
if the two bits are " 11 ", that is, in a case of a value "3 ", it indicates that the "Respect OBSS r-TWT for each TID" subfield is reserved.

It should be noted that a correspondence between values of the two bits in the "Respect OBSS r-TWT for each TID" subfield and meanings indicated by the two bits is not limited in this application. Another correspondence may be used. For example,
if the two bits are "00", that is, in a case of a value "0", it indicates that when the first STA performs the TID corresponding to the two bits in step S603, the first STA does not need to terminate the TXOP at the start time indicated by the r-TWT SP information and does not need to be quiet during the quiet interval corresponding to the r-TWT SP information;
if the two bits are " 10", that is, in a case of a value "2", it indicates that when the first STA performs the TID corresponding to the two bits in step S603, the first STA is to terminate the TXOP at the start time indicated by the r-TWT SP information and does not need to be quiet during the quiet interval corresponding to the r-TWT SP information;
if the two bits are "01", that is, in a case of a value " 1 ", it indicates that when the first STA performs the TID corresponding to the two bits in step S603, the first STA is to terminate the TXOP at the start time indicated by the r-TWT SP information and is to be quiet during the quiet interval corresponding to the r-TWT SP information; or
if the two bits are " 11 ", that is, in a case of a value "3 ", it indicates that the "Respect OBSS r-TWT for each TID" subfield is reserved.

For another example,
if the two bits are " 10", that is, in a case of a value "2", it indicates that when the first STA performs the TID corresponding to the two bits in step S603, the first STA does not need to terminate the TXOP at the start time indicated by the r-TWT SP information and does not need to be quiet during the quiet interval corresponding to the r-TWT SP information;
if the two bits are "01", that is, in a case of a value " 1 ", it indicates that when the first STA performs the TID corresponding to the two bits in step S603, the first STA is to terminate the TXOP at the start time indicated by the r-TWT SP information and does not need to be quiet during the quiet interval corresponding to the r-TWT SP information;
if the two bits are "00", that is, in a case of a value "0", it indicates that when the first STA performs the TID corresponding to the two bits in step S603, the first STA is to terminate the TXOP at the start time indicated by the r-TWT SP information and is to be quiet during the quiet interval corresponding to the r-TWT SP information; or
if the two bits are " 11 ", that is, in a case of a value "3 ", it indicates that the "Respect OBSS r-TWT for each TID" subfield is reserved.

For another example,
if the two bits are " 10", that is, in a case of a value "2", it indicates that when the first STA performs the TID corresponding to the two bits in step S603, the first STA does not need to terminate the TXOP at the start time indicated by the r-TWT SP information and does not need to be quiet during the quiet interval corresponding to the r-TWT SP information;
if the two bits are "00", that is, in a case of a value "0", it indicates that when the first STA performs the TID corresponding to the two bits in step S603, the first STA is to terminate the TXOP at the start time indicated by the r-TWT SP information and does not need to be quiet during the quiet interval corresponding to the r-TWT SP information;
if the two bits are "01", that is, in a case of a value " 1 ", it indicates that when the first STA performs the TID corresponding to the two bits in step S603, the first STA is to terminate the TXOP at the start time indicated by the r-TWT SP information and is to be quiet during the quiet interval corresponding to the r-TWT SP information; or
if the two bits are " 11 ", that is, in a case of a value "3 ", it indicates that the "Respect OBSS r-TWT for each TID" subfield is reserved.

For another example,
if the two bits are "01", that is, in a case of a value "1", it indicates that when the first STA performs the TID corresponding to the two bits in step S603, the first STA does not need to terminate the TXOP at the start time indicated by the r-TWT SP information and does not need to be quiet during the quiet interval corresponding to the r-TWT SP information;
if the two bits are " 10", that is, in a case of a value "2", it indicates that when the first STA performs the TID corresponding to the two bits in step S603, the first STA is to terminate the TXOP at the start time indicated by the r-TWT SP information and does not need to be quiet during the quiet interval corresponding to the r-TWT SP information;
if the two bits are "00", that is, in a case of a value "0", it indicates that when the first STA performs the TID corresponding to the two bits in step S603, the first STA is to terminate the TXOP at the start time indicated by the r-TWT SP information and is to be quiet during the quiet interval corresponding to the r-TWT SP information; or
if the two bits are " 11 ", that is, in a case of a value "3 ", it indicates that the "Respect OBSS r-TWT for each TID" subfield is reserved.

For another example,
if the two bits are "01", that is, in a case of a value "1", it indicates that when the first STA performs the TID corresponding to the two bits in step S603, the first STA does not need to terminate the TXOP at the start time indicated by the r-TWT SP information and does not need to be quiet during the quiet interval corresponding to the r-TWT SP information;
if the two bits are "00", that is, in a case of a value "0", it indicates that when the first STA performs the TID corresponding to the two bits in step S603, the first STA is to terminate the TXOP at the start time indicated by the r-TWT SP information and does not need to be quiet during the quiet interval corresponding to the r-TWT SP information;
if the two bits are " 10", that is, in a case of a value "2", it indicates that when the first STA performs the TID corresponding to the two bits in step S603, the first STA is to terminate the TXOP at the start time indicated by the r-TWT SP information and is to be quiet during the quiet interval corresponding to the r-TWT SP information; or
if the two bits are " 11 ", that is, in a case of a value "3 ", it indicates that the "Respect OBSS r-TWT for each TID" subfield is reserved.

Similarly, another correspondence may also be used. For an implementation process of the manner, refer to the foregoing description. Details are not described herein again.

It should be understood that in the frame formats shown in FIG. 9a and FIG. 9b, values of quantities of octets (or quantities of bits) of different fields and an order of the different fields are not limited in this application. The values of quantities of octets (or quantities of bits) of the different fields in the frame formats shown in FIG. 9a and FIG. 9b and an order of the different fields are merely an implementation example. The values of quantities of octets (or quantities of bits) of the different fields in the frame formats shown in FIG. 9a and FIG. 9b may alternatively be other values, and the order of the different fields in the frame formats shown in FIG. 9a and FIG. 9b may alternatively be another field order. This is not limited herein. In addition, the different fields in the frame formats shown in FIG. 9a and FIG. 9b may be independently implemented.

It should be noted that, in the foregoing implementations in FIG. 8a to FIG. 9b, the implementation of the first indication information does not necessarily require the OBSS indication (OBSS Indication) subfield to indicate that the r-TWT SP is an OBSS r-TWT SP. A special broadcast TWT identifier (Broadcast TWT ID) value in the broadcast TWT information (Broadcast TWT Info) subfield may be used to indicate that the r-TWT SP is an OBSS r-TWT SP. Alternatively, the first indication information is implemented based on FIG. 7a to FIG. 7c and the optional implementations described in FIG. 7a to FIG. 7c. This is not limited herein.

Optionally, the first frame sent by the first AP in step S602 includes a target wake time (target wakeup time, TWT) element, and a broadcast TWT information field in the TWT element includes a broadcast TWT identifier field; and the values of the n fields indicate the first STAin a TWT group indicated by the broadcast TWT identifier field to perform, according to one of the following, the traffic corresponding to the TID.

Optionally, for descriptions of the "the following", refer to the foregoing implementation process of the "n fields". Details are not described herein again.

Specifically, the TWT element in the first frame sent by the first AP further includes the broadcast TWT identifier field, and the broadcast TWT identifier field indicates the TWT group. Therefore, based on the broadcast TWT identifier field and the second indication information in the first frame, the STAin the TWT group in the BSS in which the first AP is located does not need to be restricted by the r-TWT SP information of the OBSS in a process of performing traffic corresponding to some TIDs, to ensure that traffic (for example, high-priority traffic or traffic requiring a low latency) of the STA in the TWT group in the BSS in which the first AP is located is performed. In other words, in the foregoing implementations in FIG. 8a to FIG. 9b, the broadcast TWT identifier (Broadcast TWT ID) may not be reserved (Reserved), but is still valid. Therefore, rules of the "TID bitmap that does not respect OBSS r-TWT (TID not respect OBSS r-TWT)" subfield and the "TID bitmap that respects OBSS r-TWT (TID respect OBSS r-TWT)" subfield are applicable only to a STA that is an EHT STAin the r-TWT group (through the Broadcast TWT ID).

Optionally, different from the implementations in FIG. 8a to FIG. 9b, the second indication information may be further located in another field in the TWT element.

Based on the technical solutions shown in FIG. 6a to FIG. 9b, the first frame sent by the first AP in step S602 includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STAin the OBSS, to increase a probability of obtaining a channel by a scheduled STA in the OBSS. In addition, the r-TWT SP information of the OBSS indicates whether the first STA is to terminate the TXOP at the start time indicated by the r-TWT SP information of the OBSS, to restrict channel access of the first STA at the start time. The first STA and the first AP are located in the same BSS. Therefore, impact of channel contention of the first STA on the scheduled STA in the OBSS is reduced by restricting channel access of the first STA in the BSS in which the first AP is located, so that a success rate of obtaining the channel by the scheduled STA in the OBSS is increased.

For example, the scenario shown in FIG. 5a is used as an example, and the AP 2 may be used as the first AP to perform the technical solutions shown in FIG. 6a to FIG. 9b. After the AP 2 learns the r-TWT SP information of the OBSS, the AP 2 may send the first frame to the STA 21 and the STA 22 to reduce impact of channel contention of first STAs (including the STA 21 and the STA 22) on a scheduled STA (STA 11) in the OBSS by restricting channel access of the first STAs in the BSS in which the AP 2 is located, so as to increase a success rate of obtaining a channel by the scheduled STAin the OBSS.

As can be learned from the implementation process of the communication method shown in FIG. 6a, the first frame sent by the first AP in step S602 indicates whether the first STA is to terminate the TXOP at the start time indicated by the r-TWT SP information of the OBSS, and then the first AP may further indicate to reject or modify the r-TWT SP indicated by the r-TWT SP information of the OBSS. The following provides further descriptions with reference to an implementation shown in FIG. 6b.

It can be learned from content shown in FIG. 6b that, in comparison with the implementation shown in FIG. 6a, after the first AP sends the first frame in step S602, the first AP sends a sixth frame in step S604. Correspondingly, the first STA receives the sixth frame in step S604.

Specifically, the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject (reject) TWT".

Based on the foregoing technical solution, after the first AP sends, in step S602, the first frame that indicates whether the first STA is to terminate the TXOP at the start time indicated by the r-TWT SP information of the OBSS, the first AP may further send the sixth frame in step S604, where the value indication of the TWT setup command field included in the first TWT element in the sixth frame is "reject TWT", indicating that the first STA is to reject an r-TWT SP indicated by the r-TWT SP information in the first TWT element, that is, indicating that the first STA does not need to terminate the TXOP at the start time indicated by the r-TWT SP information in the first TWT element. Because the start time indicated by the r-TWT SP information in the first TWT element is the same as the start time indicated by the r-TWT SP information in the first frame, the first AP indicates, by using the sixth frame, the first STA to reject an r-TWT SP indicated by the r-TWT SP information carried in the first frame. Therefore, in addition to using the first frame to support the first AP in indicating the r-TWT SP indicated by the r-TWT SP information of the OBSS, the sixth frame may also be used to support the first AP in rejecting the r-TWT SP indicated by the r-TWT SP information of the OBSS.

In a possible implementation, the first TWT element further includes seventh indication information, and the seventh indication information indicates that the r-TWT SP information in the first TWT element is the r-TWT SP information of the OBSS of the BSS in which the first AP is located. Specifically, after the first STA receives the sixth frame in step S604, because the seventh indication information included in the first TWT element of the sixth frame indicates that the r-TWT SP information in the first TWT element is the r-TWT SP information of the OBSS of the BSS in which the first AP is located, the first STA determines that the r-TWT SP that needs to be rejected is the r-TWT SP indicated by the r-TWT SP information of the OBSS.

In a possible implementation, the sixth frame further includes a second TWT element, and a start time indicated by r-TWT SP information in the second TWT element is different from the start time indicated by the r-TWT SP information in the first frame, where the second TWT element further includes a TWT setup command field located in a request type subfield of a broadcast TWT information field, and a value indication of the TWT setup command field is "accept (accept) TWT". Specifically, in addition to the first TWT element, the sixth frame sent by the first AP in step S604 further includes the second TWT element, and the value indication of the TWT setup command field included in the second TWT element is "accept TWT", which indicates that the first STA needs to accept an r-TWT SP indicated by the r-TWT SP information included in the second TWT. In other words, the r-TWT SP indicated by the r-TWT SP information carried in the first frame is modified based on the first TWT element and the second TWT element carried in the sixth frame. Therefore, in addition to using the first frame to support the first AP in indicating the r-TWT SP indicated by the r-TWT SP information of the OBSS, the sixth frame may also be used to support the first AP in modifying the r-TWT SP indicated by the r-TWT SP information of the OBSS.

It should be understood that parameters (for example, a start time and duration) related to the r-TWT SP information in the second TWT element may be the same as or different from parameters related to the r-TWT SP information in the first TWT element. This is not limited herein.

In a possible implementation, the second TWT element further includes eighth indication information, and the eighth indication information indicates that the r-TWT SP information in the second TWT element is the r-TWT SP information of the OBSS of the BSS in which the first AP is located. Specifically, after the first STA receives the sixth frame in step S604, because the eighth indication information included in the second TWT element of the sixth frame indicates that the r-TWT SP information in the first TWT element is the r-TWT SP information of the OBSS of the BSS in which the first AP is located, the first STA determines that the r-TWT SP that needs to be accepted is the r-TWT SP indicated by the r-TWT SP information of the OBSS.

As can be learned based on the implementation solution shown in FIG. 6b, the design of the embodiment shown in FIG. 6a is continued, and on this basis, operations of terminating and modifying the r-TWT SP information of the OBSS are added. For example, the scenario shown in FIG. 5a is still used as an example, and the AP 2 may be used as the first AP to perform the technical solution shown in FIG. 6b. After the AP 2 learns the r-TWT SP information of the OBSS, the AP 2 may send the first frame to the STA 21 and the STA 22 to reduce impact of channel contention of first STAs (including the STA 21 and the STA 22) on a scheduled STA (STA 11) in the OBSS by restricting channel access of the first STAs in the BSS in which the AP 2 is located, so as to increase a success rate of obtaining a channel by the scheduled STA in the OBSS.

Further, optionally, after the AP 2 learns that the r-TWT SP information of the OBSS needs to be terminated, the AP 2 may send the sixth frame to the STA 21 and the STA 22, where the first TWT element in the sixth frame indicates that the first STAs (including the STA 21 and the STA 22) do not need to consider impact of channel contention on the scheduled STA (STA 11) in the OBSS.

Further, optionally, after the AP 2 learns that the r-TWT SP information of the OBSS needs to be modified, the AP 2 may send the sixth frame to the STA 21 and the STA 22, where the first TWT element and the second TWT in the sixth frame indicate the first STAs (including the STA 21 and the STA 22) to modify the r-TWT SP information of the OBSS, to reduce impact of channel contention of the first STAs on the scheduled STA (STA 11) in the OBSS by restricting channel access of the first STAs (including the STA 21 and the STA 22) in the BSS in which the AP 2 is located, so as to increase a success rate of obtaining a channel by the scheduled STAin the OBSS.

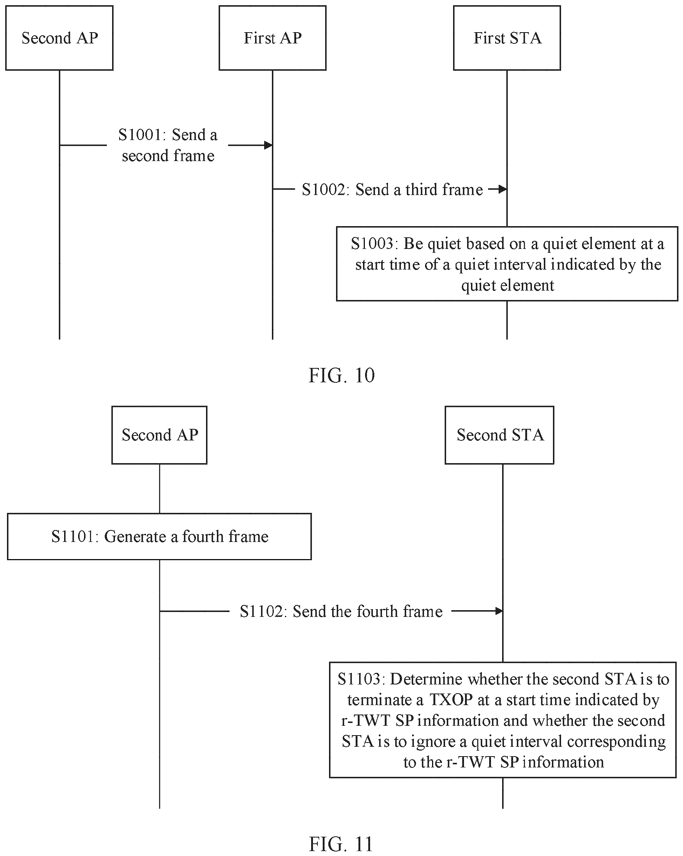

FIG. 10 is another diagram of a communication method according to this application. The method includes the following steps.

S1001: A second AP sends a second frame.

In an embodiment, the second AP sends the second frame in step S1001, and correspondingly, a first AP receives the second frame in step S1001. The second frame includes restricted target wake time service period r-TWT SP information, and the second AP is located in an overlapping basic service set OBSS of a basic service set BSS in which the first AP is located.

S1002: The first AP sends a third frame to a first STA.

In this embodiment, the first AP sends the third frame in step S1002, and correspondingly, the first STA receives the third frame in step S1002. The third frame includes a quiet element, and a start time of a quiet interval indicated by the quiet element is the same as a start time indicated by the r-TWT SP information.

S1003: The first STA is quiet based on the quiet element at the start time of the quiet interval indicated by the quiet element.

In this embodiment, after the first STA receives the third frame in step S1002, the first STA is quiet, in step S1003 based on the quiet element carried in the third frame, at the start time of the quiet interval indicated by the quiet element.

Based on the technical solution shown in FIG. 10, after the first AP receives, from the second AP in step S1001, the second frame including the r-TWT SP information, the first AP sends, to the first STA based on the second frame in step S1002, the third frame including the quiet element, where the start time of the quiet interval indicated by the quiet element is the same as the start time indicated by the r-TWT SP information. The second AP is located in the OBSS of the BSS in which the first AP is located. In other words, the first AP may determine, based on the second frame, that the r-TWT SP information of the OBSS is used to restrict channel access of an unscheduled STA in the OBSS, to increase a probability of obtaining a channel by a scheduled STA in the OBSS. Therefore, after the first AP sends, to the first STA, the third frame including the quiet element, impact of channel contention of the first STA on the scheduled STAin the OBSS is reduced by restricting channel access of the first STAin the BSS in which the first AP is located, so that a success rate of obtaining the channel by the scheduled STA in the OBSS is increased.

For example, the scenario shown in FIG. 5a is used as an example, and the AP 2 may be used as the first AP to perform the technical solution shown in FIG. 10. After the AP 2 learns the r-TWT SP information of the OBSS, the AP 2 may send the third frame to the STA 21 and the STA 22 to reduce impact of channel contention of first STAs (including the STA 21 and the STA 22) on a scheduled STA (STA 11) in the OBSS by restricting channel access of the first STAs in the BSS in which the AP 2 is located, so as to increase a success rate of obtaining a channel by the scheduled STA in the OBSS.

It should be noted that, in the implementation process shown in FIG. 10, the first AP may further perform any one of the possible implementations in FIG. 6a to FIG. 9b, with corresponding technical effect achieved. Details are not described herein again. In addition, the first STA may further perform any one of the possible implementations in FIG. 6a to FIG. 9b, with corresponding technical effect achieved. Details are not described herein again.

Based on the foregoing implementation process of the current r-TWT feature, the AP distinguishes STAs based on a broadcast TWT identifier field carried in the r-TWT SP information, so that STAs in a TWT group corresponding to the "broadcast TWT identifier" can contend for channel access, and that channel access of other STAs outside the TWT group corresponding to the "broadcast TWT identifier" is restricted. However, transmission of high-priority traffic cannot be ensured in this implementation process.

For example, in the implementation process shown in FIG. 3, to ensure transmission of low-latency traffic of some STAs (that is, the EHT STA 1), channel access of other STAs (that is, the EHT STA 2 and the non-EHT STA) in this BSS is restricted. However, when the EHT STA 2 needs to perform some specific traffic (for example, high-priority traffic or traffic requiring a low latency), because channel access of the EHT STA 2 is restricted, some specific traffic that needs to be performed by the EHT STA 2 cannot be performed. Therefore, this application provides a method shown in FIG. 11, to resolve the problem.

FIG. 11 is another diagram of a communication method according to this application. The method includes the following steps.

S1101: A second AP generates a fourth frame.

In an embodiment, the second AP generates the fourth frame in step S1101. The fourth frame includes restricted target wake time service period r-TWT SP information and third indication information, the third indication information includes m fields, and m is greater than or equal to 1; and
field locations of the m fields indicate a traffic identifier TID, and values of the m fields indicate a second STA to perform, according to one of the following, traffic corresponding to the TID, where the following includes:
the second STA does not need to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and is to be quiet during a quiet interval corresponding to the r-TWT SP information.

S1102. The second AP sends the fourth frame.

In this embodiment, after the second AP generates the fourth frame in step S1101, the second AP sends the fourth frame in step S1102. Correspondingly, the second STA receives the fourth frame in step S1102.

S1103: The second STA determines whether the second STA is to terminate the TXOP at the start time indicated by the r-TWT SP information and whether the second STA is to be quiet during the quiet interval corresponding to the r-TWT SP information.

In this embodiment, after the second STA receives the fourth frame in step S1102, the second STA determines, in step S1103 based on the information carried in the fourth frame, whether the second STA is to terminate the TXOP at the start time indicated by the r-TWT SP information and whether the second STA is to be quiet during the quiet interval corresponding to the r-TWT SP information.

In a possible implementation, the fourth frame includes a target wake time TWT element, and the r-TWT SP information and the third indication information are located in the TWT element.

Optionally, in the fourth frame, the TWT element further includes a TWT setup command field located in a request type subfield of a broadcast TWT information field, and a value indication of the TWT setup command field is "accept TWT". Specifically, after the second STA receives the fourth frame in step S1102, because the value indication of the TWT setup command field included in the TWT element of the fourth frame is "accept TWT", the second STA determines that the second STA needs to accept an r-TWT SP indicated by the r-TWT SP information.

In a possible implementation, the TWT element includes an r-TWT traffic information field; and the third indication information is located in the r-TWT traffic information field.

In a possible implementation, the r-TWT traffic information field includes a traffic information control subfield, the traffic information control subfield includes fourth indication information, and the fourth indication information indicates whether the r-TWT traffic information field includes the third indication information.

In a possible implementation, the fourth frame includes a target wake time (target wakeup time, TWT) element, and a broadcast TWT information field in the TWT element includes a broadcast TWT identifier field; and the values of the m fields indicate the second STA in a TWT group indicated by the broadcast TWT identifier field to perform, according to one of the following, the traffic corresponding to the TID.

Optionally, for an implementation process of the "the following", refer to the foregoing implementation process of the "m fields". Details are not described herein again.

Specifically, the TWT element in the fourth frame sent by the second AP in step S1102 further includes the broadcast TWT identifier field, and the broadcast TWT identifier field indicates the TWT group. Therefore, based on the broadcast TWT identifier field and the fourth indication information in the fourth frame, the STAin the TWT group in a BSS in which the second AP is located does not need to be restricted by r-TWT SP information of an OBSS in a process of performing traffic corresponding to some TIDs, to ensure that traffic (for example, high-priority traffic or traffic requiring a low latency) of the STA in the TWT group in the BSS in which the second AP is located is performed.

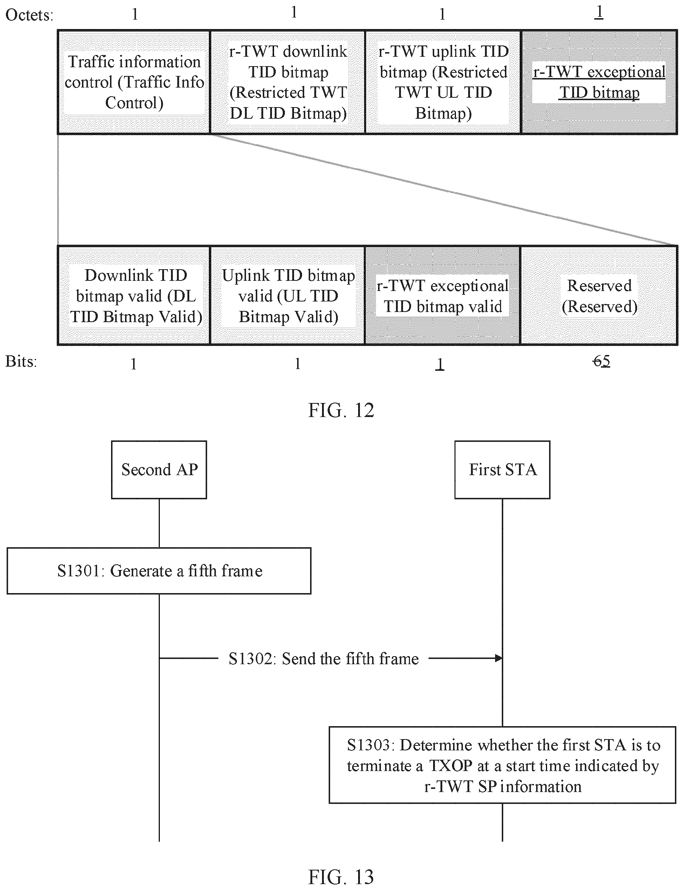

The following uses an implementation shown in FIG. 12 as an implementation example to describe a case in which the third indication information includes the m fields and the third indication information is located in the r-TWT traffic information field in the TWT element.

Optionally, when the third indication information is located in the r-TWT traffic information field, the third indication information may also be located in an r-TWT downlink TID bitmap subfield and/or an r-TWT uplink TID bitmap subfield in the r-TWT traffic information field. In other words, the third indication information may also reuse the r-TWT downlink TID bitmap subfield and/or the r-TWT uplink TID bitmap subfield in the r-TWT traffic information field. In this case, the field meaning of the "r-TWT downlink TID bitmap subfield and/or r-TWT uplink TID bitmap subfield" in the r-TWT traffic information field is changed to the field meaning of the third indication information. In other words, in this case, the "r-TWT downlink TID bitmap subfield and/or r-TWT uplink TID bitmap subfield" field in the r-TWT traffic information field is absent. In the following example shown in FIG. 12, only a case in which the third indication information is located in a newly defined field in the r-TWT traffic information field is used as an example for description, that is, the third indication information does not need to reuse the r-TWT downlink TID bitmap subfield and/or the r-TWT uplink TID bitmap subfield in the r-TWT traffic information field.

Optionally, an implementation example of the fourth indication information is shown in FIG. 12.

Optionally, in FIG. 12, an "r-TWT exceptional TID bitmap valid" subfield and an "r-TWT exceptional TID bitmap" subfield are introduced. If a value of "r-TWT exceptional TID bitmap valid" is 0, the "r-TWT exceptional TID bitmap" subfield is not valid. Conversely, if the value of r-TWT exceptional TID bitmap valid is 1, the "r-TWT exceptional TID bitmap" subfield is valid. Optionally, indication information may also be added to another position to indicate presence of an r-TWT exceptional TID bitmap. For example, in the frame format shown in FIG. 4a, the indication information is added to another field ("request type", "broadcast TWT information", or the like) parallel to the "r-TWT traffic information field".

For example, in a frame format shown in FIG. 12, if a value of a m^{th} bit in the "r-TWT exceptional TID bitmap" is 1, it indicates that TID m may not respect an r-TWT, that is, TID m is allowed not to terminate a TXOP before a start time of the r-TWT, and a quiet interval (Quiet Interval) corresponding to the r-TWT may be ignored by the TID. This rule is applicable to all EHT STAs that support the r-TWT in this BSS.

Based on the technical solutions shown in FIG. 11 and FIG. 12, the fourth frame sent by the second AP in step S1102 includes the third indication information, where the third indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. The second AP and the second STA are located in the same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STA in the BSS in which the second AP is located is performed.

For example, the scenario shown in FIG. 5a is used as an example, and the AP 1 may be used as the second AP to perform the technical solution shown in FIG. 11. After the AP 1 generates the r-TWT SP information for scheduling the STA 11, the AP 1 may send the fourth frame to the STA 11 and the STA 12. Based on an implementation of the third indication information in the fourth frame, the second STA (for example, the STA 12) in the BSS (that is, the BSS 1) in which the second AP is located does not need to be restricted by the r-TWT SP information in a process of performing traffic corresponding to some TIDs, to ensure that traffic (for example, high-priority traffic or traffic requiring a low latency) of the second STAin the BSS in which the second AP is located is performed.

FIG. 13 is another diagram of a communication method according to this application. The method includes the following steps.

S1301: A second AP generates a fifth frame.

In an embodiment, the second AP generates the fifth frame in step S1301, where the fifth frame includes restricted target wake time service period r-TWT SP information and fifth indication information, and the fifth indication information indicates whether a first STA is to terminate a TXOP at a start time indicated by the r-TWT SP information.

In a possible implementation, an implementation of the fifth indication information may resemble the implementation of the first indication information in the frame structures shown in FIG. 7a and FIG. 7b. A difference is as follows: The meaning of an OBSS Indication field is changed from "the R-TWT in the current TWT element is an OBSS R-TWT" to "the R-TWT in the current TWT element is an R-TWT of this BSS, but the OBSS STA also needs to respect the R-TWT, that is, the OBSS STAneeds to terminate the current TXOP before the R-TWT SP starts".

In another possible implementation, an AP associated with the first STA and a first AP are located in a first AP group, and the fifth indication information includes an identifier of the first AP group.

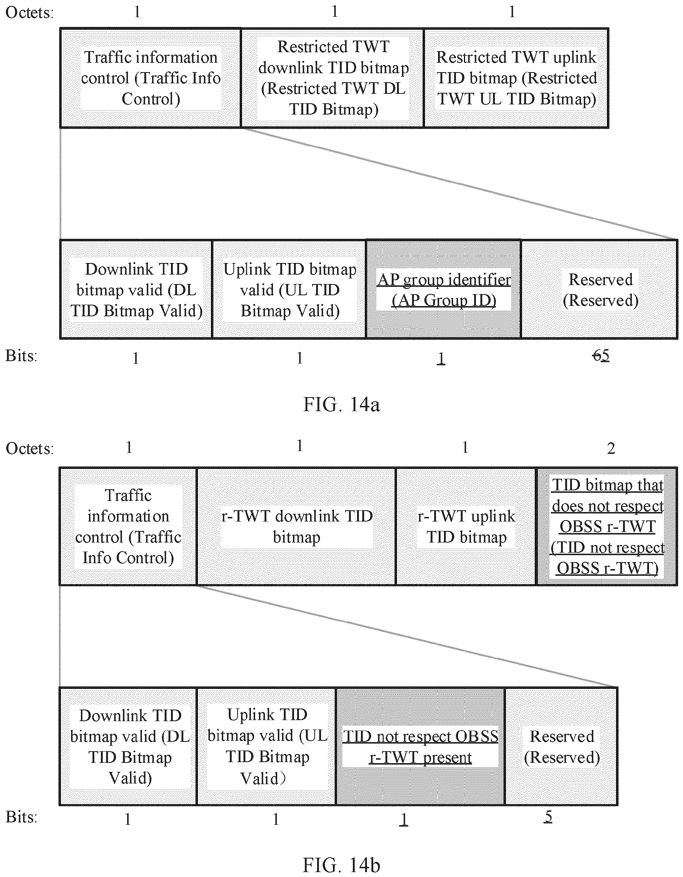

For example, for the fifth indication information, an implementation shown in FIG. 14a may be used as an example. The AP group (AP group) is an AP group established for the OBSS R-TWT. A specific procedure for establishing the AP group is not a core of this patent, and is not discussed in detail herein. For example, an AP may initiate and select an AP group identifier (for example, an AP group ID) to represent the AP group, and then the AP invites another AP to join the AP group through negotiation. In this embodiment, the fifth indication information may be an AP Group ID field in an r-TWT traffic information field in FIG. 14a, and is used to indicate that carried R-TWT information is an R-TWT of this BSS. The AP Group ID field indicates that an AP belonging to the AP group and a STA associated with the AP need to respect the R-TWT.

It should be understood that the implementation shown in FIG. 14a is merely an implementation example. Alternatively, the "AP group identifier" may be implemented in another manner. The "AP group identifier" may be located in another field of the TWT element, or the "AP group identifier" is located in another element different from the TWT element in the fifth frame, in addition to a traffic information control field of the TWT element shown in FIG. 14a. This is not limited herein.

S1302: The second AP sends the fifth frame.

In this embodiment, after the second AP generates the fifth frame in step S1031, the second AP sends the fifth frame in step S1302. Correspondingly, the first STA receives the fifth frame in step S1302.

S1303: The first STA determines whether the first STA is to terminate the TXOP at the start time indicated by the r-TWT SP information.

In this embodiment, after the first STA receives the fifth frame in step S1302, the first STA determines, in step S1303 based on the fifth indication information carried in the fifth frame, whether the first STA is to terminate the TXOP at the start time indicated by the r-TWT SP information.

It should be noted that, in this embodiment of this application, that the first STA is not associated with the second AP includes: the first STA is associated with the first AP, where the first AP is located in an OBSS of a BSS in which the second AP is located. Alternatively, that the first STA is not associated with the second AP includes: the first STA is not associated with any AP.

In a possible implementation, the fifth indication information carried in the fifth frame sent by the second AP in step S1302 further indicates whether the first STA is to be quiet during a quiet interval corresponding to the r-TWT SP information.

Optionally, this implementation may be further expressed as "the fifth indication information further indicates whether the first STA is to ignore the quiet interval corresponding to the r-TWT SP information".

Specifically, the fifth indication information indicates whether the first STA is to terminate the TXOP at the start time indicated by the r-TWT SP information, to restrict channel access of the first STA at the start time; and the fifth indication information further indicates whether the first STA is to be quiet during the quiet interval corresponding to the r-TWT SP information, to restrict channel access of the first STA during the quiet interval. Therefore, impact of channel contention of the first STA on a scheduled STA in the BSS in which the second AP is located is further reduced, so that a success rate of obtaining a channel by the scheduled STA in the BSS in which the second AP is located is increased.

In a possible implementation, after the second AP sends the fifth frame in step S 1302, the method further includes: the second AP receives a response frame for the fifth frame.

Optionally, the response frame for the fifth frame may be a notification (notification) frame, a response (response) frame, or an acknowledgment (acknowledgment, ACK) frame.

Specifically, after the second AP sends the fifth frame in step S1302, the first STA may further send the response frame for the fifth frame to the second AP, so that the second AP determines that channel access of the first STA is restricted, to ensure that the scheduled STA in the BSS in which the second AP is located obtains the channel.

In a possible implementation, the fifth frame further includes sixth indication information, the sixth indication information includes k fields, and k is greater than or equal to 1; and
field locations of the k fields indicate a traffic identifier TID, and values of the k fields indicate a second STA to perform, according to one of the following, traffic corresponding to the TID, where the following includes:
the first STA does not need to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and is to be quiet during the quiet interval corresponding to the r-TWT SP information.

Specifically, the fifth frame sent by the second AP includes the sixth indication information, where the sixth indication information indicates that channel access of the first STA at the start time indicated by the r-TWT SP information and channel access of the first STA during the quiet interval corresponding to the r-TWT SP information are not necessarily restricted when the traffic corresponding to the TID is performed by the first STA. Therefore, based on an implementation of the sixth indication information in the fifth frame, the first STA does not need to be restricted by the r-TWT SP information in a process of performing traffic corresponding to some TIDs, to ensure that traffic (for example, high-priority traffic or traffic requiring a low latency) of the first STA is performed.

The following uses implementations shown in FIG. 14b to FIG. 14d as implementation examples to describe a case in which the sixth indication information includes the k fields and the sixth indication information is located in the r-TWT traffic information field in the TWT element.

Optionally, when the sixth indication information is located in the r-TWT traffic information field, the sixth indication information may also be located in an r-TWT downlink TID bitmap subfield and/or an r-TWT uplink TID bitmap subfield in the r-TWT traffic information field. In other words, the sixth indication information may also reuse the r-TWT downlink TID bitmap subfield and/or the r-TWT uplink TID bitmap subfield in the r-TWT traffic information field. In the following examples shown in FIG. 14b to FIG. 14d, only a case in which the sixth indication information is located in a newly defined field in the r-TWT traffic information field is used as an example for description, that is, the sixth indication information does not need to reuse the r-TWT downlink TID bitmap subfield and/or the r-TWT uplink TID bitmap subfield in the r-TWT traffic information field.

In an implementation example, when the values of the k fields indicate that the traffic corresponding to the TID is performed by the first STA, if a case in which the first STA does not need to terminate the TXOP at the start time indicated by the r-TWT SP information and is to ignore the quiet interval corresponding to the r-TWT SP information (denoted as case 4 for ease of description) is met, in the following description of case 4, an example in which the sixth indication information is named "TID bitmap that does not respect OBSS r-TWT (TID not respect OBSS r-TWT)" is used for description.

For example, an example in which the implementation of the sixth indication information is the implementation shown in FIG. 14b is used herein. A "TID not respect OBSS r-TWT present" subfield is added to the Traffic Info Control field to indicate presence of the "TID not respect OBSS r-TWT" field.

Optionally, a "TID not respect OBSS r-TWT valid" subfield may be added to the Traffic Info Control field to indicate validity of the "TID not respect OBSS r-TWT" field.

Optionally, indication information may also be added to another position to indicate presence of the "TID not respect OBSS r-TWT" field. For example, in the frame format shown in FIG. 4a, the indication information is added to another field ("request type", "broadcast TWT information", or the like) parallel to the "r-TWT traffic information field".

Optionally, the "TID not respect OBSS r-TWT" field is an 8-bit bitmap, and the bits correspond to TID 0 to TID 7. When a bit is set to 1, it indicates that the TID corresponding to the STAin the OBSS may ignore the R-TWT, that is, the current TXOP does not need to be terminated before an R-TWT SP starts, or a quiet interval overlapping the R-TWT SP may be ignored. When a bit is set to 0, it indicates that the TID corresponding to the STA in the OBSS may not ignore the R-TWT, that is, the current TXOP needs to be terminated before the R-TWT SP starts, or the quiet interval overlapping the R-TWT SP may not be ignored.

In another implementation example, when the values of the k fields indicate that the traffic corresponding to the TID is performed by the first STA, if a case in which the first STA does not need to terminate the TXOP at the start time indicated by the r-TWT SP information and is forbidden to ignore the quiet interval corresponding to the r-TWT SP information (denoted as case 5 for ease of description) is met, in the following description of case 5, an example in which the sixth indication information is named "TID bitmap that respects OBSS r-TWT (TID respect OBSS r-TWT)" is used for description.

Optionally, similarly to the foregoing case 4, the "TID not respect OBSS r-TWT present" and "TID not respect OBSS r-TWT" fields in FIG. 14b may be respectively replaced with the "TID respect OBSS r-TWT present" and "TID respect OBSS r-TWT" fields. However, in this case, meanings of setting to 0 and 1 in the bitmap need to be correspondingly interchanged.

In another implementation example, when the values of the n fields indicate that the traffic corresponding to the TID is performed by the first STA, if a case in which the first STA is to terminate the TXOP at the start time indicated by the r-TWT SP information and is to ignore the quiet interval corresponding to the r-TWT SP information (denoted as case 6 for ease of description) is met, in case 6, an implementation of the sixth indication information may be a joint indication based on the foregoing case 4 and case 5.

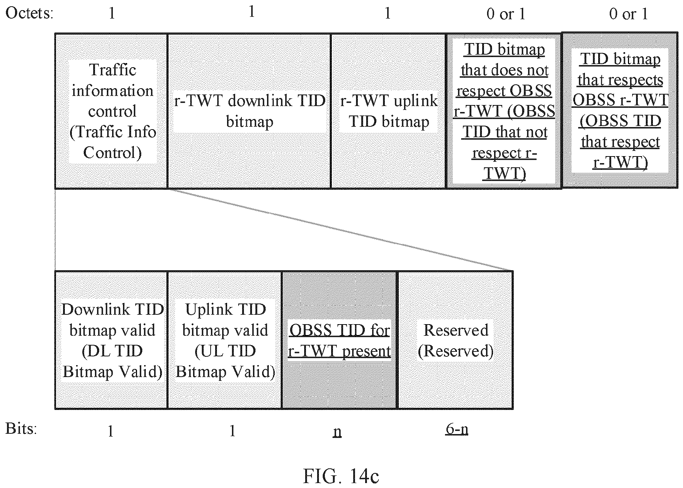

Optionally, an implementation example of case 6 is shown in FIG. 14c. In FIG. 14c, an example in which the sixth indication information is named "TID bitmap that does not respect OBSS r-TWT (TID not respect OBSS r-TWT) and TID bitmap that respects OBSS r-TWT (TID respect OBSS r-TWT)" is used for description.

In FIG. 14c, an "OBSS TID for r-TWT present" subfield is added to the Traffic Info Control field to indicate presence of an "OBSS TID that not respect r-TWT" field and an "OBSS TID that respect r-TWT" field. Optionally, indication information may also be added to another position to indicate presence of the "OBSS TID that not respect r-TWT" field and the "OBSS TID that respect r-TWT" field. For example, in the frame format shown in FIG. 4a, the indication information is added to another field ("request type", "broadcast TWT information", or the like) parallel to the "r-TWT traffic information field".

Optionally, the "OBSS TID for r-TWT present" subfield may be one bit, or may be two bits, where each bit corresponds to one of the "OBSS TID that not respect r-TWT" field and the "OBSS TID that respect r-TWT" field.

Optionally, meanings indicated by setting bits in the "OBSS TID that not respect r-TWT" field and the "OBSS TID that respect r-TWT" field to 1 and 0 are the same as meanings in the "TID not respect OBSS r-TWT" field and the "TID respect OBSS r-TWT" field in the foregoing case 3. For details, refer to the foregoing implementation process. Details are not described herein again.

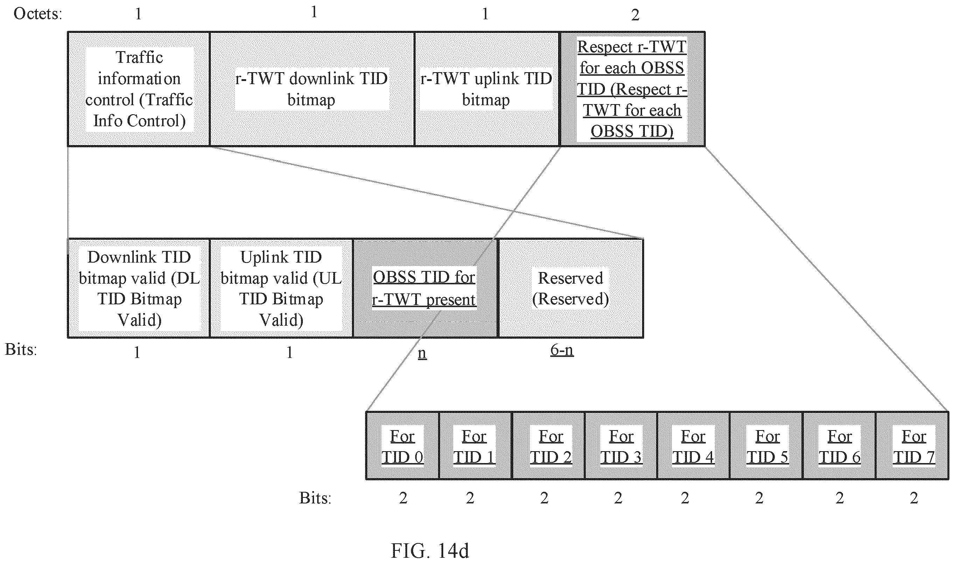

Optionally, another implementation example of case 6 is shown in FIG. 14d. In FIG. 14d, an example in which the sixth indication information is named "Respect OBSS r-TWT for each TID (Respect OBSS r-TWT for each TID)" is used for description.

As shown in FIG. 14d, an "OBSS TID for r-TWT present" subfield is added to the Traffic Info Control field to indicate presence of the "Respect r-TWT for each OBSS TID" field.

Optionally, indication information may also be added to another position to indicate presence of the "Respect r-TWT for each OBSS TID" field. For example, in the frame format shown in FIG. 4a, the indication information is added to another field ("request type", "broadcast TWT information", or the like) parallel to the "r-TWT traffic information field".

Optionally, meanings of values of two bits in "For TID n" are similar to those in the implementation process in case 3 in FIG. 9b. A difference lies in that an implementation subject and an implementation object are opposite. To be specific, in case 3 in FIG. 9b, a behavior of the BSS STA for the OBSS r-TWT is indicated, but in this implementation, a behavior of the OBSS STA for the BSS R-TWT is indicated. For details, refer to the foregoing implementation process. Details are not described herein again.

It should be understood that in the frame formats shown in FIG. 14a to FIG. 14d, values of quantities of octets (or quantities of bits) of different fields and an order of the different fields are not limited in this application. The values of quantities of octets (or quantities of bits) of the different fields in the frame formats shown in FIG. 14a to FIG. 14d and the order of the different fields are merely an implementation example. The values of quantities of octets (or quantities of bits) of the different fields in the frame formats shown in FIG. 14a to FIG. 14d may alternatively be other values, and the order of the different fields in the frame formats shown in FIG. 14a to FIG. 14d may alternatively be another field order. This is not limited herein. In addition, the different fields in the frame formats shown in FIG. 14a to FIG. 14d may be independently implemented.

In a possible implementation, the fifth frame includes a target wake time TWT element, and a broadcast TWT information field in the TWT element includes a broadcast TWT identifier field; and the values of the k fields indicate the first STA in a TWT group indicated by the broadcast TWT identifier field to perform, according to one of the following, the traffic corresponding to the TID.

Optionally, for an implementation process of the "the following", refer to the foregoing implementation process of the "k fields". Details are not described herein again.

Specifically, the TWT element in the fifth frame sent by the second AP further includes the broadcast TWT identifier field, and the broadcast TWT identifier field indicates the TWT group. Therefore, based on the broadcast TWT identifier field and the sixth indication information in the fifth frame, the STAin the TWT group does not need to be restricted by the r-TWT SP information of the OBSS in a process of performing traffic corresponding to some TIDs, to ensure that traffic (for example, high-priority traffic or traffic requiring a low latency) of the STA in the TWT group is performed.

In a possible implementation, the fifth frame includes a target wake time (target wakeup time, TWT) element, and a broadcast TWT information field in the TWT element includes a broadcast TWT identifier field; and the first STA in a TWT group indicated by the broadcast TWT identifier field does not need to terminate the TXOP at the start time indicated by the r-TWT SP information and does not need to be quiet during the quiet interval corresponding to the r-TWT SP information.

Specifically, the TWT element in the fifth frame sent by the second AP further includes the broadcast TWT identifier field, and the broadcast TWT identifier field indicates the TWT group. Therefore, based on the broadcast TWT identifier field and the sixth indication information in the fifth frame, the first STA in the TWT group does not need to be restricted by the r-TWT SP information of the OBSS in a process of performing traffic corresponding to some TIDs, to ensure that traffic (for example, high-priority traffic or traffic requiring a low latency) of the STA in the TWT group is performed.

In a possible implementation, the TWT element includes an r-TWT traffic information field; and the sixth indication information is located in an r-TWT downlink TID bitmap subfield and/or an r-TWT uplink TID bitmap subfield in the r-TWT traffic information field.

In a possible implementation, the fifth frame includes a TWT element, and the r-TWT SP information and the fifth indication information are located in the TWT element.

In a possible implementation, the TWT element includes a broadcast TWT information field; and the fifth indication information is located in the broadcast TWT information field.

In a possible implementation,
the fifth indication information is located in a broadcast TWT identifier field in the broadcast TWT information field; or
the fifth indication information is located in a reserved field in the broadcast TWT information field; or
the fifth indication information is located in a reserved field in the broadcast TWT information field, and a broadcast TWT identifier field in the broadcast TWT information field is the reserved field.

In a possible implementation, the TWT element includes an r-TWT traffic information field; and the fifth indication information is located in a traffic information control subfield in the r-TWT traffic information field.

In a possible implementation, the fifth indication information is located in a TWT setup command field in a request type subfield of the broadcast TWT information field. Specifically, the fifth indication information carried in the fifth frame may be located in the TWT setup command field in the request type subfield of the broadcast TWT information field, so that a value of the TWT setup command field is set to indicate whether the first STA is to terminate the TXOP at the start time indicated by the r-TWT SP information.

Further, in an optional implementation, when the fifth indication information is located in the TWT setup command field in the request type subfield of the broadcast TWT information field, the fifth indication information meets at least one of the following:
a value indication of the fifth indication information is "accept TWT", and the fifth indication information indicates that the first STA is to terminate the TXOP at the start time indicated by the r-TWT SP information, and the fifth indication information further indicates that the first STA is to be quiet during the quiet interval corresponding to the r-TWT SP information; or
a value indication of the fifth indication information is "reject TWT", and the fifth indication information indicates that the first STA does not need to terminate the TXOP at the start time indicated by the r-TWT SP information; or
a value indication of the fifth indication information is "modify TWT", and the fifth indication information indicates that the first STA is to modify, based on the r-TWT SP information, r-TWT SP information corresponding to a BSSID of the second AP.

Optionally, when the value indication of the fifth indication information is "modify TWT", the fifth indication information indicates that the first STA is to terminate the TXOP at a start time indicated by modified r-TWT SP information, and the fifth indication information further indicates that the first STA is to be quiet during a quiet interval corresponding to the modified r-TWT SP information.

Based on the foregoing technical solution, in an implementation process of the fifth indication information located in the TWT setup command field in the request type subfield of the broadcast TWT information field, by using different values of the TWT setup command field, the second AP may indicate the first STA not associated with the second AP to accept an r-TWT SP indicated by the r-TWT SP information, or the second AP may indicate the first STA not associated with the second AP to reject an r-TWT SP indicated by the r-TWT SP information corresponding to the BSSID of the second AP, or the second AP may indicate the first STA not associated with the second AP to modify an r-TWT SP indicated by the r-TWT SP information corresponding to the BSSID of the second AP.

In a possible implementation, the fifth frame is a management frame. For example, the fifth frame is a beacon frame or a probe response frame.

Optionally, the fifth frame may also be a new frame different from the beacon frame and different from the probe response frame. Herein, the fifth frame is named an R-TWT notification frame. After receiving an R-TWT notification frame, an EHT STA belonging to the r-TWT group replies with an r-TWT notification frame. A plurality of STAs reply with r-TWT notification frames by using a same frame format.

Optionally, the reply r-TWT notification frame and the received R-TWT notification frame have same content, and a scrambler seed in the received R-TWT notification frame is used as a scrambler seed of the response R-TWT notification frame. Certainly, the EHT STA in the r-TWT group may also be allowed to reply with an r-TWT notification response frame. Therefore, a new frame type needs to be defined. In the r-TWT notification response frame, settings of all fields except the frame type are the same as those in the received r-TWT notification frame.

In addition, an objective of allowing the EHT STA in the r-TWT group to reply with an R-TWT notification frame or an r-TWT notification response frame is to resolve a problem of a hidden node, so as to avoid that some STAs in this BSS cannot receive a beacon frame, a probe response frame, or an r-TWT notification frame sent by an OBSS AP and therefore cannot learn OBSS r-TWT information.

Based on the technical solutions shown in FIG. 13 to FIG. 14d, the fifth frame sent by the second AP in step S1302 includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STA in the BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STAin the BSS in which the second AP is located is increased.

In addition, in the implementation process of the fifth indication information located in the TWT setup command field in the request type subfield of the broadcast TWT information field, by using different values of the TWT setup command field, the second AP may indicate the first STA not associated with the second AP to accept the r-TWT SP indicated by the r-TWT SP information, or the second AP may indicate the first STA not associated with the second AP to reject the r-TWT SP indicated by the r-TWT SP information corresponding to the BSSID of the second AP, or the second AP may indicate the first STA not associated with the second AP to modify the r-TWT SP indicated by the r-TWT SP information corresponding to the BSSID of the second AP.

For example, the scenario shown in FIG. 5a is used as an example, and the AP 1 may be used as the second AP to perform the technical solutions shown in FIG. 13 to FIG. 14d. After the AP 1 generates the r-TWT SP information, the AP 1 may send the fifth frame to the STA 21. Based on the description in the foregoing embodiment, the STA 21 needs to read the fifth frame sent by the AP in the OBSS in which the associated AP is located. Impact of channel contention of the first STA (including the STA 21) on a scheduled STA (including the STA 11) in the BSS in which the second AP is located is reduced by restricting channel access of a STA (including the STA 21) not associated with the AP 1 in the BSS in which the AP 1 is located, so that a success rate of obtaining a channel by the scheduled STA in the BSS in which the second AP is located is increased.

In an optional implementation, the fifth frame sent by the AP 1 may further indicate, to the first STA (including the STA 21), establishment, rejection, or modification of an r-TWT SP indicated by r-TWT SP information of the BSS in which the AP 2 is located.

In addition, in an implementation process shown in FIG. 13 to FIG. 14d, it is assumed that the BSS AP is the AP 2 (that is, the first AP) in FIG. 5a, and that the OBSS AP of the OBSS is the AP 1 (that is, the second AP). Advantages of directly sending OBSS r-TWT information by the OBSS AP include:
(1) avoiding signaling interaction between the OBSS AP and the BSS AP, and avoiding that the BSS AP sends OBSS R-TWT information to the BSS STA for a second time, thereby reducing signaling overheads; and
(2) avoiding overprotection caused because the BSS AP sends the OBSS R-TWT information to the BSS STA that cannot listen to the OBSS AP due to different coverage of the OBSS AP and the BSS AP, and also avoiding a problem that the BSS AP cannot conveniently send the R-TWT information for the OBSS AP in a scenario in which the OBSS AP and the BSS AP cannot listen to each other although coverage of the OBSS overlaps coverage of the BSS.

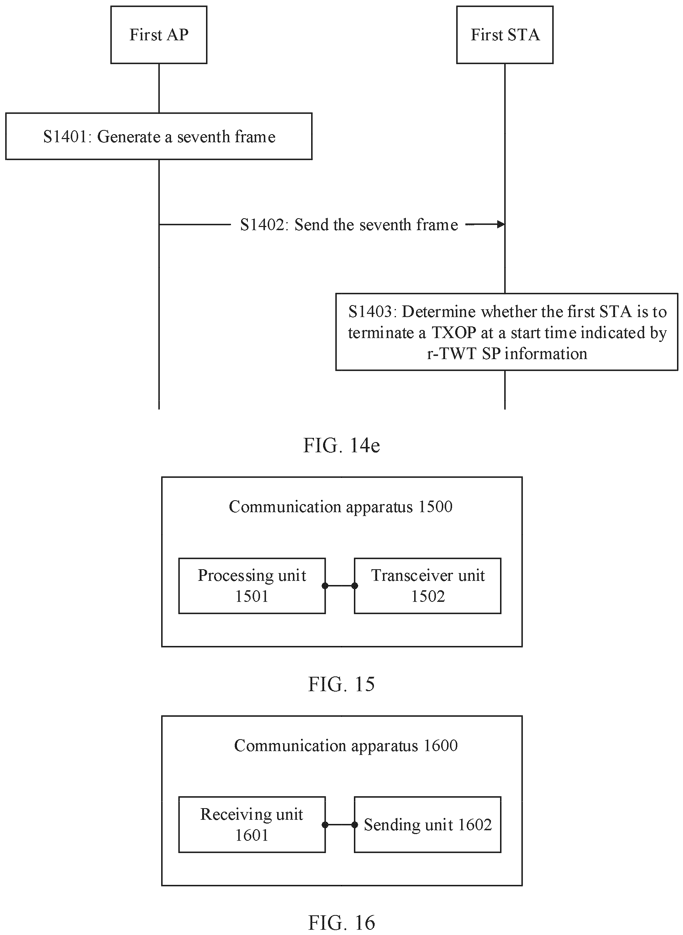

FIG. 14e is another diagram of a communication method according to this application. The method includes the following steps.

S1401: A first AP generates a seventh frame.

In an embodiment, the first AP generates the seventh frame in step S1401, where the seventh frame includes r-TWT SP information, the r-TWT SP information indicates whether a first STA is to terminate a transmission opportunity TXOP at a start time indicated by the r-TWT SP information, the first STA is a STA in a BSS in which the first AP is located, and a broadcast TWT identifier corresponding to the r-TWT SP information is a broadcast TWT identifier unallocated in the BSS in which the first AP is located.

In a possible implementation, before the first AP generates the seventh frame, the method further includes: the first AP receives an eighth frame from an AP in an OBSS of the BSS in which the first AP is located, where the eighth frame includes information related to the r-TWT SP information; and that the first AP generates the seventh frame includes: the first AP generates the seventh frame based on the information related to the r-TWT SP information.

Optionally, the information related to the r-TWT SP information and included in the eighth frame may include a part of the r-TWT SP information included in the seventh frame.

Optionally, the information related to the r-TWT SP information and included in the eighth frame may include an entirety of the r-TWT SP information included in the seventh frame.

Specifically, the first AP may generate the seventh frame based on the information related to the r-TWT SP information and included in the second frame from the AP in the OBSS of the BSS in which the first AP is located, where the information related to the r-TWT SP information and included in the eighth frame may indicate the start time, duration, or other information, so that the first AP generates the seventh frame based on the information related to the r-TWT SP information.

Optionally, the first AP may further obtain the eighth frame in another manner. For example, the first AP receives the eighth frame from an access controller (access controller, AC), where the AC may be a controller of the first AP and the AP in the OBSS. For another example, the first AP generates the eighth frame and sends the eighth frame to the AP in the OBSS, where the first AP may be a controller of the AP in the OBSS.

It should be understood that, for an implementation process in which the first AP generates the seventh frame based on the eighth frame in step S1401, refer to the foregoing implementation process in which the first AP generates the first frame based on the second frame in step S601, with corresponding technical effect achieved. Details are not described herein again.

S1402: The first AP sends the seventh frame.

In this embodiment, after the first AP generates the seventh frame in step S1401, the first AP sends the seventh frame to the first STA in step S1402. Correspondingly, the first STA receives the seventh frame in step S1402.

S1403: The first STA determines, based on the r-TWT SP information, whether to terminate the transmission opportunity TXOP at the start time indicated by the r-TWT SP information.

Optionally, in the seventh frame, the r-TWT SP information is located in a TWT element. The TWT element further includes a TWT setup command field located in a request type subfield of a broadcast TWT information field, and a value indication of the TWT setup command field is "accept TWT". Specifically, after the first STA receives the seventh frame in step S1402, because the value indication of the TWT setup command field included in the TWT element of the seventh frame is "accept TWT", the first STA determines that the first STA needs to accept an r-TWT SP indicated by the r-TWT SP information.

Based on the foregoing technical solution, after the first AP determines OBSS r-TWT SP information, the first frame sent by the first AP in step S1402 includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier in step S1403, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STAin the OBSS is reduced by restricting channel access of the first STA in the BSS in which the first AP is located, so that a success rate of obtaining a channel by the scheduled STAin the OBSS is increased.

Optionally, if the STA in the BSS in which the first AP is located wants to join any R-TWT group of a broadcast TWT identifier corresponding to the r-TWT SP information in the seventh frame, the first AP needs to reject joining of the STA.

Optionally, the first AP may indicate that a status of the R-TWT group of the broadcast TWT identifier corresponding to the r-TWT SP information in the seventh frame is "full (full)", to prevent the STA in the BSS in which the first AP is located from requesting to join the R-TWT group. The status indication may use one or two reserved bits (B1, B2) in the Broadcast TWT Info field.

It can be learned from the foregoing content that, the manner shown in FIG. 14e is transparent to the first STA. Therefore, the first STA does not need to distinguish whether the received r-TWT SP information is from the BSS in which the first STA is located or the OBSS of the BSS in which the first STA is located. The rule is simple and easy to implement.

In a possible implementation, the r-TWT SP information further indicates whether the first STA is to be quiet during a quiet interval (Quiet Interval) corresponding to the r-TWT SP information, so that the first STA further needs to determine, based on the r-TWT SP information in step S1403, whether to be quiet during the quiet interval corresponding to the r-TWT SP information.

Optionally, this implementation may be further expressed as "the first STA determines, based on the r-TWT SP information, whether to ignore the quiet interval corresponding to the r-TWT SP information".

Specifically, the first STA determines, based on the r-TWT SP information, whether the first STA is to terminate the TXOP at the start time indicated by the r-TWT SP information, to restrict channel access of the first STA at the start time; and the first STA determines, based on the r-TWT SP information, whether to be quiet during the quiet interval corresponding to the r-TWT SP information, to restrict channel access of the first STA during the quiet interval. Therefore, the impact of channel contention of the first STA on the scheduled STAin the OBSS is further reduced, so that the success rate of obtaining the channel by the scheduled STA in the OBSS is increased.

In a possible implementation, the seventh frame sent by the first AP in step S1402 further includes first indication information, the first indication information indicates that the r-TWT SP information is r-TWT SP information of the OBSS of the basic service set BSS in which the first AP is located, and the r-TWT SP information of the OBSS indicates whether the first station STA is to terminate the transmission opportunity TXOP at the start time indicated by the r-TWT SP information of the OBSS. Therefore, the first STA determines whether the r-TWT SP information in the seventh frame is the r-TWT SP information of the OBSS, so that the first STA determines whether to join the R-TWT group of the broadcast TWT identifier corresponding to the r-TWT SP information in the seventh frame.

It should be noted that, in this implementation, for the first indication information included in the seventh frame, refer to the description of the first indication information included in the first frame in any one of the implementations in FIG. 6a to FIG. 9b, with corresponding technical effect achieved. Details are not described herein again.

The foregoing describes this application from a perspective of methods. The following further describes this application from a perspective of apparatuses.

FIG. 15 is a diagram of a communication apparatus 1500 according to an embodiment of this application. The communication apparatus 1500 includes a processing unit 1501 and a transceiver unit 1502.

In an implementation, the communication apparatus 1500 may be specifically a first AP, or the communication apparatus 1500 may be specifically some components (for example, a processor, a chip, or a system-on-chip) in a first AP, and is configured to implement the communication method in any one of the foregoing embodiments. Correspondingly, the processing unit 1501 and the transceiver unit 1502 are configured to perform at least the following process.

The processing unit 1501 is configured to generate a first frame, where the first frame includes restricted target wake time service period r-TWT SP information and first indication information, the first indication information indicates that the r-TWT SP information is r-TWT SP information of an overlapping basic service set OBSS of a BSS in which the first AP is located, the r-TWT SP information of the OBSS indicates whether a first station STA is to terminate a transmission opportunity TXOP at a start time indicated by the r-TWT SP information, and the first STA is a STA in the BSS in which the first AP is located.

The transceiver unit 1502 is configured to send the first frame.

Based on the foregoing technical solution, the first frame sent by the transceiver unit 1502 includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STA in the OBSS, to increase a probability of obtaining a channel by a scheduled STA in the OBSS. In addition, the r-TWT SP information of the OBSS indicates whether the first STA is to terminate the TXOP at the start time indicated by the r-TWT SP information of the OBSS, to restrict channel access of the first STA at the start time. The first STA and the first AP are located in the same BSS. Therefore, impact of channel contention of the first STA on the scheduled STA in the OBSS is reduced by restricting channel access of the first STAin the BSS in which the first AP is located, so that a success rate of obtaining the channel by the scheduled STA in the OBSS is increased.

In a possible implementation,
the transceiver unit 1502 is further configured to receive a second frame from an AP in the OBSS of the BSS in which the first AP is located, where the second frame includes information related to the r-TWT SP information; and
the processing unit 1501 is further configured to generate the first frame based on the information related to the r-TWT SP information.

In a possible implementation, the r-TWT SP information and the first indication information further indicate whether the first STA is to be quiet during a quiet interval corresponding to the r-TWT SP information of the OBSS.

In a possible implementation, the transceiver unit 1502 is further configured to send a sixth frame, where the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject TWT".

In a possible implementation, the first TWT element further includes seventh indication information, and the seventh indication information indicates that the r-TWT SP information in the first TWT element is the r-TWT SP information of the OBSS of the BSS in which the first AP is located.

In a possible implementation, the sixth frame further includes a second TWT element, and a start time indicated by r-TWT SP information in the second TWT element is different from the start time indicated by the r-TWT SP information in the first frame, where the second TWT element further includes a TWT setup command field located in a request type subfield of a broadcast TWT information field, and a value indication of the TWT setup command field is "accept TWT".

In a possible implementation, the second TWT element further includes eighth indication information, and the eighth indication information indicates that the r-TWT SP information in the second TWT element is the r-TWT SP information of the OBSS of the BSS in which the first AP is located.

In an implementation, the communication apparatus 1500 may be specifically a first STA, and is configured to implement the communication method in any one of the foregoing embodiments. Correspondingly, the processing unit 1501 and the transceiver unit 1502 are configured to perform at least the following process.

The transceiver unit 1502 is configured to receive a first frame, where the first frame includes restricted target wake time service period r-TWT SP information and first indication information, and the first indication information indicates that the r-TWT SP information is r-TWT SP information of an overlapping basic service set OBSS of a BSS in which a first AP is located.

The processing unit 1501 is configured to determine, based on the first indication information, that the r-TWT SP information is the r-TWT SP information of the overlapping basic service set OBSS of the BSS in which the first AP is located.

The processing unit 1501 is configured to determine, based on the r-TWT SP information of the OBSS, whether the first STA is to terminate a transmission opportunity TXOP at a start time indicated by the r-TWT SP information.

Based on the foregoing technical solution, the first frame received by the transceiver unit 1502 includes the r-TWT SP information and the first indication information, and the first indication information indicates that the r-TWT SP information is the r-TWT SP information of the OBSS of the BSS in which the first AP is located. In other words, the r-TWT SP information of the OBSS is used to restrict channel access of an unscheduled STA in the OBSS, to increase a probability of obtaining a channel by a scheduled STA in the OBSS. In addition, the processing unit determines, based on the r-TWT SP information of the OBSS, whether the first STA is to terminate the TXOP at the start time indicated by the r-TWT SP information, to restrict channel access of the first STA at the start time. The first STA and the first AP are located in the same BSS. Therefore, impact of channel contention of the first STA on the scheduled STA in the OBSS is reduced by restricting channel access of the first STA in the BSS in which the first AP is located, so that a success rate of obtaining the channel by the scheduled STA in the OBSS is increased.

In a possible implementation, the processing unit 1501 is further configured to determine, based on the r-TWT SP information and the first indication information, whether to be quiet during a quiet interval corresponding to the r-TWT SP information.

In a possible implementation, the transceiver unit 1502 is further configured to receive a sixth frame, where the sixth frame includes a first TWT element, and a start time indicated by r-TWT SP information in the first TWT element is the same as the start time indicated by the r-TWT SP information in the first frame, where the first TWT element further includes a TWT setup command field located in a request type subfield of a broadcast TWT information field, and a value indication of the TWT setup command field is "reject TWT"; and
the processing unit 1501 is further configured to determine, based on a value of the TWT setup command field in the first TWT element, that the first STA does not need to terminate the transmission opportunity TXOP at the start time indicated by the r-TWT SP information in the first frame.

In a possible implementation, the first TWT element further includes seventh indication information, and the seventh indication information indicates that the r-TWT SP information in the first TWT element is the r-TWT SP information of the OBSS of the BSS in which the first AP is located.

In a possible implementation, the sixth frame further includes a second TWT element, and a start time indicated by r-TWT SP information in the second TWT element is different from the start time indicated by the r-TWT SP information in the first frame, where the second TWT element further includes a TWT setup command field located in a request type subfield of a broadcast TWT information field, and a value indication of the TWT setup command field is "accept TWT"; and
the first STA determines, based on a value of the TWT setup command field in the second TWT element, whether to terminate the transmission opportunity TXOP at the start time indicated by the r-TWT SP information in the first frame.

In a possible implementation of the fourth aspect, the second TWT element further includes eighth indication information, and the eighth indication information indicates that the r-TWT SP information in the second TWT element is the r-TWT SP information of the OBSS of the BSS in which the first AP is located.

In a possible implementation, the first frame further includes second indication information, the second indication information includes n fields, and n is greater than or equal to 1; and
field locations of the n fields indicate a traffic identifier TID, and values of the n fields indicate the first STA to perform, according to one of the following, traffic corresponding to the TID, where the following includes:
the first STA does not need to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and is to be quiet during the quiet interval corresponding to the r-TWT SP information.

In a possible implementation, the first frame includes a target wake time TWT element, and a broadcast TWT information field in the TWT element includes a broadcast TWT identifier field; and
the values of the n fields indicate the first STA in a TWT group indicated by the broadcast TWT identifier field to perform, according to one of the following, the traffic corresponding to the TID.

In a possible implementation, the TWT element includes an r-TWT traffic information field; and
the second indication information is located in an r-TWT downlink TID bitmap subfield and/or an r-TWT uplink TID bitmap subfield in the r-TWT traffic information field.

In a possible implementation, the first frame includes a TWT element, and a broadcast TWT information field in the TWT element includes a broadcast TWT identifier field; and the first STA in a TWT group indicated by the broadcast TWT identifier field does not need to terminate the TXOP at the start time indicated by the r-TWT SP information of the OBSS and does not need to be quiet during the quiet interval corresponding to the r-TWT SP information.

In a possible implementation, the first frame includes a TWT element, and the r-TWT SP information and the first indication information are located in the TWT element.

In a possible implementation, the TWT element further includes a TWT setup command field located in a request type subfield of a broadcast TWT information field, and a value indication of the TWT setup command field is "accept TWT".

In a possible implementation, the TWT element includes a broadcast TWT information field; and
the first indication information is located in the broadcast TWT information field.

In a possible implementation,
the first indication information is located in a broadcast TWT identifier field in the broadcast TWT information field; or
the first indication information is located in a reserved field in the broadcast TWT information field; or
the first indication information is located in a reserved field in the broadcast TWT information field, and a broadcast TWT identifier field in the broadcast TWT information field is the reserved field.

In a possible implementation, the TWT element includes an r-TWT traffic information field; and
the first indication information is located in a traffic information control subfield in the r-TWT traffic information field.

In a possible implementation,
the first frame further includes a quiet element, and a start time of a quiet interval indicated by the quiet element is the same as the start time indicated by the r-TWT SP information.

In a possible implementation, the first frame is a beacon frame or a probe response frame.

In an implementation, the communication apparatus 1500 may be specifically a first STA, or the communication apparatus 1500 may be specifically some components (for example, a processor, a chip, or a system-on-chip) in a first STA, and is configured to implement the communication method in any one of the foregoing embodiments. Correspondingly, the processing unit 1501 and the transceiver unit 1502 are configured to perform at least the following process.

The transceiver unit 1502 is configured to receive a third frame from a first AP, where the third frame includes a quiet element.

The processing unit 1501 is configured to be quiet based on the quiet element at a start time of a quiet interval indicated by the quiet element.

Based on the foregoing technical solution, the transceiver unit 1502 receives, from the first AP, the third frame including the quiet element, where the start time of the quiet interval indicated by the quiet element is the same as a start time indicated by r-TWT SP information sent by a second AP. The second AP is located in an OBSS of a BSS in which the first AP is located. Therefore, after the first AP sends, to the first STA, the third frame including the quiet element, impact of channel contention of the first STA on a scheduled STA in the OBSS is reduced by restricting channel access of the first STA in the BSS in which the first AP is located, so that a success rate of obtaining a channel by the scheduled STA in the OBSS is increased.

In an implementation, the communication apparatus 1500 may be specifically a second AP, or the communication apparatus 1500 may be specifically some components (for example, a processor, a chip, or a system-on-chip) in a second AP, and is configured to implement the communication method in any one of the foregoing embodiments. Correspondingly, the processing unit 1501 and the transceiver unit 1502 are configured to perform at least the following process.

The processing unit 1501 is configured to generate a fourth frame, where the fourth frame includes restricted target wake time service period r-TWT SP information and third indication information, the third indication information includes m fields, and m is greater than or equal to 1; and
field locations of the m fields indicate a traffic identifier TID, and values of the m fields indicate a second STA to perform, according to one of the following, traffic corresponding to the TID, where the following includes:
the second STA does not need to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and is to be quiet during a quiet interval corresponding to the r-TWT SP information.

The transceiver unit 1502 is configured to send the fourth frame.

Based on the foregoing technical solution, the fourth frame sent by the transceiver unit 1502 includes the third indication information, where the second indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. The second AP and the second STA are located in a same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STA in the BSS in which the second AP is located is performed.

In an implementation, the communication apparatus 1500 may be specifically a second STA, or the communication apparatus 1500 may be specifically some components (for example, a processor, a chip, or a system-on-chip) in a second STA, and is configured to implement the communication method in any one of the foregoing embodiments. Correspondingly, the processing unit 1501 and the transceiver unit 1502 are configured to perform at least the following process.

The transceiver unit 1502 is configured to receive a fourth frame, where the fourth frame includes restricted target wake time service period r-TWT SP information and third indication information, the third indication information includes m fields, and m is greater than or equal to 1; and
field locations of the m fields indicate a traffic identifier TID, and values of the m fields indicate the second STA to perform, according to one of the following, traffic corresponding to the TID, where the following includes:
the second STA does not need to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and does not need to be quiet during a quiet interval corresponding to the r-TWT SP information; or
the second STA is to terminate a TXOP at a start time indicated by the r-TWT SP information and is to be quiet during a quiet interval corresponding to the r-TWT SP information.

The processing unit 1501 is configured to determine, based on the r-TWT SP information and the third indication information, whether the second STA is to terminate the TXOP at the start time indicated by the r-TWT SP information and whether the second STA is to be quiet during the quiet interval corresponding to the r-TWT SP information.

Based on the foregoing technical solution, the fourth frame received by the transceiver unit 1502 includes the third indication information, where the third indication information indicates that channel access of the second STA at the start time indicated by the r-TWT SP information and channel access of the second STA during the quiet interval corresponding to the r-TWT SP information are not necessarily restricted when the traffic corresponding to the TID is performed by the second STA. In other words, the processing unit 1501 determines, based on the r-TWT SP information and the third indication information, whether the second STAis to terminate the TXOP at the start time indicated by the r-TWT SP information and whether the second STA is to ignore the quiet interval corresponding to the r-TWT SP information. A second AP and the second STA are located in a same BSS. Therefore, based on an implementation of the third indication information in the fourth frame, the second STA in the BSS in which the second AP is located does not need to be restricted by the r-TWT SP information in a process of performing traffic corresponding to some TIDs, to ensure that traffic (for example, high-priority traffic or traffic requiring a low latency) of the second STA in the BSS in which the second AP is located is performed.

In a possible implementation, the fourth frame includes a target wake time TWT element, and the r-TWT SP information and the third indication information are located in the TWT element.

In a possible implementation, the TWT element includes an r-TWT traffic information field; and
the third indication information is located in the r-TWT traffic information field.

In a possible implementation, the r-TWT traffic information field includes a traffic information control subfield; and
the traffic information control subfield includes fourth indication information, and the fourth indication information indicates whether the r-TWT traffic information field includes the third indication information.

In an implementation, the communication apparatus 1500 may be specifically a second AP, or the communication apparatus 1500 may be specifically some components (for example, a processor, a chip, or a system-on-chip) in a second AP, and is configured to implement the communication method in any one of the foregoing embodiments. Correspondingly, the processing unit 1501 and the transceiver unit 1502 are configured to perform at least the following process.

The processing unit 1501 is configured to generate a fifth frame, where the fifth frame includes restricted target wake time service period r-TWT SP information and fifth indication information, the fifth indication information indicates whether a first STA is to terminate a TXOP at a start time indicated by the r-TWT SP information, and the first STA is not associated with the second AP.

The transceiver unit 1502 is configured to send the fifth frame.

Based on the foregoing technical solution, the fifth frame sent by the transceiver unit 1502 includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STAin a BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STA in the BSS in which the second AP is located is increased.

In a possible implementation, the fifth indication information further indicates whether the first STA is to be quiet during a quiet interval corresponding to the r-TWT SP information.

In a possible implementation, after the second AP sends the fifth frame, the transceiver unit 1502 is further configured to receive a response frame for the fifth frame.

In an implementation, the communication apparatus 1500 may be specifically a first STA, or the communication apparatus 1500 may be specifically some components (for example, a processor, a chip, or a system-on-chip) in a first STA, and is configured to implement the communication method in any one of the foregoing embodiments. Correspondingly, the processing unit 1501 and the transceiver unit 1502 are configured to perform at least the following process.

The transceiver unit 1502 is configured to receive a fifth frame from a second access point AP, where the fifth frame includes target wake time service period r-TWT SP information and fifth indication information, the fifth indication information indicates whether the first STA is to terminate a TXOP at a start time indicated by the r-TWT SP information, and the first STA is not associated with the second AP.

The processing unit 1501 is configured to determine, based on the fifth indication information, whether the first STA is to terminate the TXOP at the start time indicated by the r-TWT SP information.

Based on the foregoing technical solution, the fifth frame received by the transceiver unit 1502 includes the r-TWT SP information and the fifth indication information, and the fifth indication information indicates whether the first STA is to terminate the TXOP at the start time indicated by the r-TWT SP information. The r-TWT SP information is used to restrict channel access of an unscheduled STAin a BSS in which the second AP is located, to increase a probability of obtaining a channel by a scheduled STA in the BSS in which the second AP is located. In addition, the fifth indication information indicates whether the first STA is to terminate the TXOP at the start time indicated by the r-TWT SP information, to restrict channel access of the first STA at the start time. The first STA is not associated with the second AP. In other words, the second AP restricts, by using the fifth indication information and the r-TWT SP information carried in the fifth frame, channel access of a STA in another BSS. Therefore, impact of channel contention of the first STA on the scheduled STA in the BSS in which the second AP is located is reduced by restricting channel access of the first STA not associated with the second AP, so that a success rate of obtaining the channel by the scheduled STA in the BSS in which the second AP is located is increased.

In a possible implementation, the processing unit 1501 is further configured to determine, based on the fifth indication information, whether the first STA is to be quiet during a quiet interval corresponding to the r-TWT SP information.

In a possible implementation, after the first STA receives the fifth frame, the transceiver unit 1502 is further configured to send a response frame for the fifth frame.

In a possible implementation, the fifth frame further includes sixth indication information, the sixth indication information includes k fields, and k is greater than or equal to 1; and
field locations of the k fields indicate a traffic identifier TID, and values of the k fields indicate the second STA to perform, according to one of the following, traffic corresponding to the TID, where the following includes:
the first STA does not need to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and does not need to be quiet during the quiet interval corresponding to the r-TWT SP information; or
the first STA is to terminate the TXOP at the start time indicated by the r-TWT SP information and is to be quiet during the quiet interval corresponding to the r-TWT SP information.

In a possible implementation, the fifth frame includes a target wake time TWT element, and a broadcast TWT information field in the TWT element includes a broadcast TWT identifier field; and
the values of the k fields indicate the first STA in a TWT group indicated by the broadcast TWT identifier field to perform, according to one of the following, the traffic corresponding to the TID.

In a possible implementation, the TWT element includes an r-TWT traffic information field; and
the sixth indication information is located in an r-TWT downlink TID bitmap subfield and/or an r-TWT uplink TID bitmap subfield in the r-TWT traffic information field.

In a possible implementation, an AP associated with the first STA and the first AP are located in a first AP group, and the fifth indication information includes an identifier of the first AP group.

In a possible implementation, the fifth frame includes a TWT element, and the r-TWT SP information and the fifth indication information are located in the TWT element.

In a possible implementation, the TWT element includes a broadcast TWT information field; and
the fifth indication information is located in the broadcast TWT information field.

In a possible implementation,
the fifth indication information is located in a broadcast TWT identifier field in the broadcast TWT information field; or
the fifth indication information is located in a reserved field in the broadcast TWT information field; or
the fifth indication information is located in a reserved field in the broadcast TWT information field, and a broadcast TWT identifier field in the broadcast TWT information field is the reserved field.

In a possible implementation, the TWT element includes an r-TWT traffic information field; and
the fifth indication information is located in a traffic information control subfield in the r-TWT traffic information field.

In a possible implementation, the fifth frame is a beacon frame or a probe response frame.

Optionally, the fifth frame is a management frame.

In a possible implementation, the fifth indication information is located in a TWT setup command field in a request type subfield of the broadcast TWT information field.

In a possible implementation,
a value indication of the fifth indication information is "accept TWT", and the fifth indication information indicates that the first STA is to terminate the TXOP at the start time indicated by the r-TWT SP information, and the fifth indication information further indicates that the first STA is to be quiet during the quiet interval corresponding to the r-TWT SP information; or
a value indication of the fifth indication information is "reject TWT", and the fifth indication information indicates that the first STA does not need to terminate the TXOP at the start time indicated by the r-TWT SP information; or
a value indication of the fifth indication information is "modify TWT", and the fifth indication information indicates that the first STA is to modify, based on the r-TWT SP information, r-TWT SP information corresponding to a BSSID of the second AP.

Optionally, when the value indication of the fifth indication information is "modify TWT", the fifth indication information indicates that the first STA is to terminate the TXOP at a start time indicated by modified r-TWT SP information, and the fifth indication information further indicates that the first STA is to be quiet during a quiet interval corresponding to the modified r-TWT SP information.

In an implementation, the communication apparatus 1500 may be specifically a first AP, or the communication apparatus 1500 may be specifically some components (for example, a processor, a chip, or a system-on-chip) in a first AP, and is configured to implement the communication method in any one of the foregoing embodiments. Correspondingly, the processing unit 1501 and the transceiver unit 1502 are configured to perform at least the following process.

The processing unit 1501 is configured to generate a seventh frame, where the seventh frame includes r-TWT SP information, the r-TWT SP information indicates whether a first STA is to terminate a transmission opportunity TXOP at a start time indicated by the r-TWT SP information, the first STA is a STAin a BSS in which the first AP is located, and a broadcast TWT identifier corresponding to the r-TWT SP information is a broadcast TWT identifier unallocated in the BSS in which the first AP is located.

The transceiver unit 1502 is configured to send the seventh frame.

Based on the foregoing technical solution, after the processing unit 1501 determines OBSS r-TWT SP information, the first frame sent by the transceiver unit 1502 includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STAin an OBSS is reduced by restricting channel access of the first STAin the BSS in which the first AP is located, so that a success rate of obtaining a channel by the scheduled STAin the OBSS is increased.

In a possible implementation, the r-TWT SP information further indicates whether the first STA is to be quiet during a quiet interval (Quiet Interval) corresponding to the r-TWT SP information.

Optionally, this implementation may be further expressed as "the r-TWT SP information further indicates whether the first STA is to ignore the quiet interval corresponding to the r-TWT SP information".

In a possible implementation,
the transceiver unit 1502 is further configured to receive an eighth frame from an AP in an OBSS of the BSS in which the first AP is located, where the eighth frame includes information related to the r-TWT SP information; and
the processing unit 1501 is specifically configured to generate the seventh frame based on the information related to the r-TWT SP information.

In an implementation, the communication apparatus 1500 may be specifically a first STA, or the communication apparatus 1500 may be specifically some components (for example, a processor, a chip, or a system-on-chip) in a first STA, and is configured to implement the communication method in any one of the foregoing embodiments. Correspondingly, the processing unit 1501 and the transceiver unit 1502 are configured to perform at least the following process.

The transceiver unit 1502 is configured to receive a seventh frame, where the seventh frame includes restricted target wake time service period r-TWT SP information, the r-TWT SP information indicates whether the first station STA is to terminate a transmission opportunity TXOP at a start time indicated by the r-TWT SP information, the first STA is a STA in a BSS in which a first AP is located, and a broadcast TWT identifier corresponding to the r-TWT SP information is a broadcast TWT identifier unallocated in the BSS in which the first AP is located; and the processing unit 1501 is configured to determine, based on the r-TWT SP information, whether to terminate the transmission opportunity TXOP at the start time indicated by the r-TWT SP information.

Based on the foregoing technical solution, after the first AP determines OBSS r-TWT SP information, the first frame sent by the transceiver unit 1502 includes the r-TWT SP information, and the broadcast TWT identifier corresponding to the r-TWT SP information is the broadcast TWT identifier unallocated in the BSS in which the first AP is located, so that the first STA determines, based on the unallocated broadcast TWT identifier, whether to terminate the transmission opportunity TXOP at the start time indicated by the r-TWT SP information. The first STA is a STA in the BSS in which the first AP is located, that is, the first STA and the first AP are located in the same BSS. Therefore, impact of channel contention of the first STA on a scheduled STAin an OBSS is reduced by restricting channel access of the first STAin the BSS in which the first AP is located, so that a success rate of obtaining a channel by the scheduled STAin the OBSS is increased.

In a possible implementation, the r-TWT SP information further indicates whether the first STA is to be quiet during a quiet interval (Quiet Interval) corresponding to the r-TWT SP information, and the processing unit is further configured to determine, based on the r-TWT SP information, whether to be quiet during the quiet interval corresponding to the r-TWT SP information.

Optionally, this implementation may be further expressed as "the processing unit is further configured to determine, based on the r-TWT SP information, whether to ignore the quiet interval corresponding to the r-TWT SP information".

In a possible implementation, the seventh frame further includes first indication information, the first indication information indicates that the r-TWT SP information is r-TWT SP information of an overlapping basic service set OBSS of the basic service set BSS in which the first AP is located, and the r-TWT SP information of the OBSS indicates whether the first station STA is to terminate the transmission opportunity TXOP at the start time indicated by the r-TWT SP information of the OBSS.

It should be noted that the communication apparatus 1500 may be further configured to perform the foregoing other embodiments, with corresponding beneficial effects achieved. For details, refer to the descriptions in the foregoing embodiments. Details are not described herein again.

FIG. 16 is a diagram of a communication apparatus 1600 according to an embodiment of this application. The communication apparatus 1600 includes a receiving unit 1601 and a sending unit 1602.

In an implementation, the communication apparatus 1600 may be specifically a first AP, or the communication apparatus 1500 may be specifically some components (for example, a processor, a chip, or a system-on-chip) in a first AP, and is configured to implement the communication method in any one of the foregoing embodiments. Correspondingly, the receiving unit 1601 and the sending unit 1602 are configured to perform at least the following process.

The receiving unit 1601 is configured to receive a second frame from a second AP, where the second frame includes restricted target wake time service period r-TWT SP information, and the second AP is located in an overlapping basic service set OBSS of a basic service set BSS in which the first AP is located.

The sending unit 1602 is configured to send a third frame to a first station STA, where the third frame includes a quiet element, and a start time of a quiet interval indicated by the quiet element is the same as a start time indicated by the r-TWT SP information.

Based on the foregoing technical solution, after the receiving unit 1601 receives, from the second AP, the second frame including the r-TWT SP information, the sending unit sends, to the first STA, the third frame including the quiet element, where the start time of the quiet interval indicated by the quiet element is the same as the start time indicated by the r-TWT SP information. The second AP is located in the OBSS of the BSS in which the first AP is located. In other words, the first AP may determine, based on the second frame, that the r-TWT SP information of the OBSS is used to restrict channel access of an unscheduled STA in the OBSS, to increase a probability of obtaining a channel by a scheduled STA in the OBSS. Therefore, after the first AP sends, to the first STA, the third frame including the quiet element, impact of channel contention of the first STA on the scheduled STA in the OBSS is reduced by restricting channel access of the first STA in the BSS in which the first AP is located, so that a success rate of obtaining the channel by the scheduled STA in the OBSS is increased.

It should be noted that the communication apparatus 1600 may be further configured to perform the foregoing other embodiments, with corresponding beneficial effects achieved. For details, refer to the descriptions in the foregoing embodiments. Details are not described herein again.

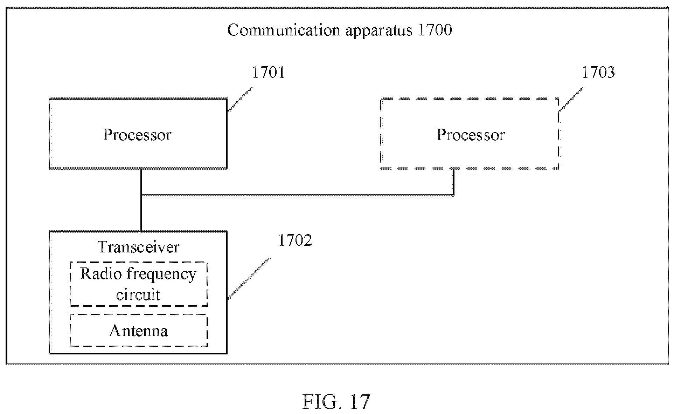

FIG. 17 is a diagram of a structure of a communication apparatus 1700 according to an embodiment of this application. The communication apparatus 1700 includes at least a transceiver 1702.

Optionally, the communication apparatus 1700 further includes a processor 1701.

The communication apparatus 1700 may be a radio frame sending apparatus, a radio frame receiving apparatus, or a chip in a radio frame sending apparatus or a radio frame receiving apparatus.

Optionally, FIG. 17 shows only main components of the communication apparatus 1700. In addition to the processor 1701 and the transceiver 1702, the communication apparatus may further include a memory 1703 and an input/output apparatus (not shown).

The processor 1701 is mainly configured to process a communication protocol and communication data, control the entire communication apparatus, execute a software program, and process data of the software program. The memory 1703 is mainly configured to store the software program and data. The transceiver 1702 may include a radio frequency circuit and an antenna. The radio frequency circuit is mainly configured to perform conversion between a baseband signal and a radio frequency signal, and process the radio frequency signal. The antenna is mainly configured to receive and send radio frequency signals in a form of an electromagnetic wave. The input/output apparatus, for example, a touchscreen, a display, or a keyboard, is mainly configured to receive data input by a user and output data to the user.

The processor 1701, the transceiver 1702, and the memory 1703 may be connected through a communication bus.

After the communication apparatus is powered on, the processor 1701 may read the software program in the memory 1703, interpret and execute instructions of the software program, and process the data of the software program. When data needs to be sent wirelessly, the processor 1701 performs baseband processing on the to-be-sent data, and then outputs a baseband signal to a radio frequency circuit. The radio frequency circuit performs radio frequency processing on the baseband signal, and then sends a radio frequency signal to the outside in a form of electromagnetic wave through the antenna. When data is to be sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In any one of the foregoing designs, the processor 1701 may include a communication interface configured to implement receiving and sending functions. For example, the communication interface may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions. The instructions may be a computer program. The computer program is run on the processor 1701, to enable the communication apparatus 1700 to perform the method described in any one of the foregoing embodiments. The computer program may be embedded in the processor 1701. In this case, the processor 1701 may be implemented by hardware.

In an implementation, the communication apparatus 1700 may include a circuit, and the circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

In another implementation, the radio frequency circuit and the antenna may be disposed independently of the processor for baseband processing. For example, in a distributed scenario, the radio frequency circuit and the antenna may be disposed independently of the communication apparatus remotely.

The communication apparatus may be an independent device or may be a part of a larger device. For example, the communication apparatus may be:
(1) an independent integrated circuit IC, a chip, or a system-on-chip or subsystem;
(2) a set that has one or more ICs, where optionally, the IC set may alternatively include a storage component configured to store data and an instruction;
(3) an ASIC, for example, a modem (Modem);
(4) a module that may be embedded in another device;
(5) a receiver, an intelligent terminal, a wireless device, a handset, a mobile unit, an in-vehicle device, a cloud device, an artificial intelligence device, or the like; or
(6) another device or the like.

In addition, the processor 1701 may be configured to perform, for example but not limited to, baseband related processing; and the transceiver 1702 may be configured to perform, for example but not limited to, radio frequency receiving and sending. The foregoing components may be disposed on chips independently of each other separately, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, more components may be integrated on a same chip. For example, the digital baseband processor may be integrated on a same chip with a plurality of application processors (for example, but not limited to a graphics processor and a multimedia processor). The chip may be referred to as a system-on-chip (system-on-chip). Whether components are independently disposed on different chips or are integrated and disposed on one or more chips usually depends on specific requirements of a product design. Specific implementation forms of the components are not limited in embodiments of the present invention.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product is run a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receive circuit, so that the apparatus performs the method in any one of the foregoing embodiments.

An embodiment of this application further provides a WLAN communication system, including a radio frame sending apparatus and a radio frame receiving apparatus. The radio frame sending apparatus and the radio frame receiving apparatus may perform the method in any one of the foregoing embodiments.

Method or algorithm steps described in combination with content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in one or more of the foregoing examples, the functions described in this application may be implemented by using hardware, software, firmware, or any combination thereof. When the software is used to implement the functions, the foregoing functions may be stored in a computer-readable medium or transmitted as one or more instructions or code in the computer-readable medium. The computer-readable medium includes a computer-readable storage medium and a communication medium, where the communication medium includes any medium that enables a computer program to be transmitted from one place to another. The storage medium may be any available medium accessible to a general-purpose or dedicated computer.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce better effect.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
generating, by a first access point AP, a first frame, wherein the first frame comprises restricted target wake time service period r-TWT SP information and first indication information, the first indication information indicates that the r-TWT SP information is r-TWT SP information of an overlapping basic service set OBSS of a basic service set BSS in which the first AP is located, the r-TWT SP information of the OBSS indicates whether a first station STA is to terminate a transmission opportunity TXOP at a start time indicated by the r-TWT SP information of the OBSS, and the first STA is a STA in the BSS in which the first AP is located; and
sending, by the first AP, the first frame.

2. The method according to claim 1, wherein
the r-TWT SP information of the OBSS further indicates whether the first STA is to be quiet during a quiet interval corresponding to the r-TWT SP information of the OBSS.

3. The method according to claim 1 or 2, wherein
before the generating, by a first AP, a first frame, the method further comprises:
receiving, by the first AP, a second frame from an AP in the OBSS of the BSS in which the first AP is located, wherein the second frame comprises information related to the r-TWT SP information; and
the generating, by a first AP, a first frame comprises:
generating, by the first AP, the first frame based on the information related to the r-TWT SP information.

4. A communication method, comprising:
receiving, by a first station STA, a first frame, wherein the first frame comprises restricted target wake time service period r-TWT SP information and first indication information, the first indication information indicates that the r-TWT SP information is r-TWT SP information of an overlapping basic service set OBSS of a BSS in which a first access point AP is located, the r-TWT SP information of the OBSS indicates whether the first STA is to terminate a transmission opportunity TXOP at a start time indicated by the r-TWT SP information of the OBSS, and the first STA is a STA in the BSS in which the first AP is located;
determining, by the first STA based on the first indication information, that the r-TWT SP information is the r-TWT SP information of the OBSS of the BSS in which the first AP is located; and
determining, by the first STA based on the r-TWT SP information of the OBSS, whether to terminate the transmission opportunity TXOP at the start time indicated by the r-TWT SP information of the OBSS.

5. The method according to claim 4, wherein the method further comprises:
determining, by the first STA based on the r-TWT SP information of the OBSS, whether to be quiet during a quiet interval corresponding to the r-TWT SP information of the OBSS.

6. The method according to any one of claims 1 to 5, wherein the first frame further comprises second indication information, the second indication information comprises n fields, and n is greater than or equal to 1; and
field locations of the n fields indicate a traffic identifier TID, and values of the n fields indicate the first STA to perform, according to one of the following, traffic corresponding to the TID, wherein the following comprises:
the first STA does not need to terminate the TXOP at the start time indicated by the r-TWT SP information of the OBSS and does not need to be quiet during the quiet interval corresponding to the r-TWT SP information of the OBSS; or
the first STA is to terminate the TXOP at the start time indicated by the r-TWT SP information of the OBSS and does not need to be quiet during the quiet interval corresponding to the r-TWT SP information of the OBSS; or
the first STA is to terminate the TXOP at the start time indicated by the r-TWT SP information of the OBSS and is to be quiet during the quiet interval corresponding to the r-TWT SP information of the OBSS.

7. The method according to claim 6, wherein the first frame further comprises a target wake time TWT element, and a broadcast TWT information field in the TWT element comprises a broadcast TWT identifier field; and
the values of the n fields indicate the first STA in a TWT group indicated by the broadcast TWT identifier field to perform, according to one of the following, the traffic corresponding to the TID.

8. The method according to claim 7, wherein the TWT element comprises an r-TWT traffic information field; and
the second indication information is located in an r-TWT downlink TID bitmap subfield and/or an r-TWT uplink TID bitmap subfield in the r-TWT traffic information field.

9. The method according to any one of claims 1 to 5, wherein the first frame further comprises a TWT element, and a broadcast TWT information field in the TWT element comprises a broadcast TWT identifier field; and
the first STA in a TWT group indicated by the broadcast TWT identifier field does not need to terminate the TXOP at the start time indicated by the r-TWT SP information of the OBSS and does not need to be quiet during the quiet interval corresponding to the r-TWT SP information.

10. The method according to any one of claims 1 to 9, wherein the first frame comprises the TWT element, and the r-TWT SP information and the first indication information are located in the TWT element.

11. The method according to claim 10, wherein the TWT element comprises the broadcast TWT information field; and
the first indication information is located in the broadcast TWT information field.

12. The method according to claim 11, wherein
the first indication information is located in the broadcast TWT identifier field in the broadcast TWT information field; or
the first indication information is located in a reserved field in the broadcast TWT information field; or
the first indication information is located in a reserved field in the broadcast TWT information field, and the broadcast TWT identifier field in the broadcast TWT information field is the reserved field.

13. The method according to claim 10, wherein the TWT element comprises an r-TWT traffic information field; and
the first indication information is located in a traffic information control subfield in the r-TWT traffic information field.

14. The method according to any one of claims 1 to 13, wherein
the first frame further comprises a quiet element, and a start time of a quiet interval indicated by the quiet element is the same as the start time indicated by the r-TWT SP information of the OBSS.

15. The method according to any one of claims 1 to 14, wherein the first frame is a beacon frame or a probe response frame.

16. A communication apparatus, comprising a processing unit and a transceiver unit, wherein the processing unit and the transceiver unit are configured to perform the method according to any one of claims 1 to 3 and 6 to 15.

17. A communication apparatus, comprising a processing unit and a transceiver unit, wherein the processing unit and the transceiver unit are configured to perform the method according to any one of claims 4 to 15.

18. A computer-readable storage medium, wherein the computer-readable storage medium stores program instructions, and when the program instructions are run on a computer, the computer is enabled to perform the method according to any one of claims 1 to 15.

19. A computer program product comprising program instructions, wherein when the program instructions are run on a computer, the computer is enabled to perform the method according to any one of claims 1 to 15.
